# EUROPEAN PATENT APPLICATION

(11) **EP 4 708 923 A1**
(43) Date of publication of application: **11.03.2026**
(21) Application number: 24822553.4
(22) Date of filing: 29.05.2024
(51) Int. Cl.: H04S 7/00

(54) **AUDIO PROCESSING METHOD AND RELATED APPARATUS**

(30) Priority: 12.06.2023 CN 202310691922
(71) Applicant: Huawei Technologies Co., Ltd., Shenzhen, Guangdong 518129 (CN)
(72) Inventor: ZHU, Mengyao, Shenzhen, Guangdong 518129 (CN); WU, Xiukun, Shenzhen, Guangdong 518129 (CN); SHI, Chaoyu, Shenzhen, Guangdong 518129 (CN); CHEN, Yunyin, Shenzhen, Guangdong 518129 (CN)
(74) Representative: MERH-IP Matias Erny Reichl Hoffmann Patentanwälte PartG mbB
(86) International application number: PCT/CN2024/096186
(87) International publication number: WO 2024/255601

(57) **Abstract**

This application provides an audio processing method and a related apparatus. An electronic device may determine audio object information and sound field environment information based on a video image and an audio in a video. Based on the foregoing information, the electronic device may provide an audio editing control in a user interface, so that a user performs audio editing such as audio object editing, sound field editing, and audio mixing editing. The electronic device may process the audio based on an audio editing operation of the user, so that a sound effect that can be heard by the user after a processed audio is rendered can achieve an effect of adjustment by the user. The foregoing audio editing operations are simple and intuitive, so that the user can conveniently perform personalized editing on the audio in an audio and video recording scenario like a video recording scenario or a video call scenario, to improve user experience of audio and video recording.

## Description

This application claims priority to Chinese Patent Application No. 202310691922.0, filed with the China National Intellectual Property Administration on June 12, 2023, and entitled "AUDIO PROCESSING METHOD AND RELATED APPARATUS", which is incorporated herein by reference in its entirety.

### TECHNICAL FIELD

This application relates to the field of terminal technologies, and in particular, to an audio processing method and a related apparatus.

### BACKGROUND

With development of audio and video technologies, sound reproduction technologies have evolved from mono to dual-channel, stereo, surround sound, and three-dimensional sound. An increasing quantity of audios can allow users to feel surrounded and immersed in sound. In an audio recording or playing scenario, a user may have a requirement for personalized audio editing, to obtain and listen to an audio that meets a personal requirement.

### SUMMARY

This application provides an audio processing method and a related apparatus. An electronic device may provide an audio editing control on a video picture, so that a user performs audio editing such as audio object editing, sound field editing, and audio mixing editing. The foregoing audio editing operations are simple and intuitive, so that the user can conveniently perform personalized editing on an audio in an audio and video recording scenario like a video recording scenario or a video call scenario, to improve user experience of audio and video recording.

According to a first aspect, this application provides an audio processing method. A first electronic device may display a first video image in a first video. The first video image includes a first audio object, and the first video includes a first audio. The first electronic device may display a first audio object control on a screen. The first audio object control is used to adjust a sound feature of the first audio object, and adjusting the sound feature of the first audio object includes one or more of the following: adjusting volume of the first audio object, adjusting a timbre of the first audio object, and/or adjusting a spatial position of the first audio object. In response to a first operation on the first audio object control, the first electronic device adjusts the sound feature of the first audio object in the first audio.

The first audio may include an audio signal of the first audio object. The electronic device may adjust the sound feature of the first audio object by editing the audio signal of the first audio object.

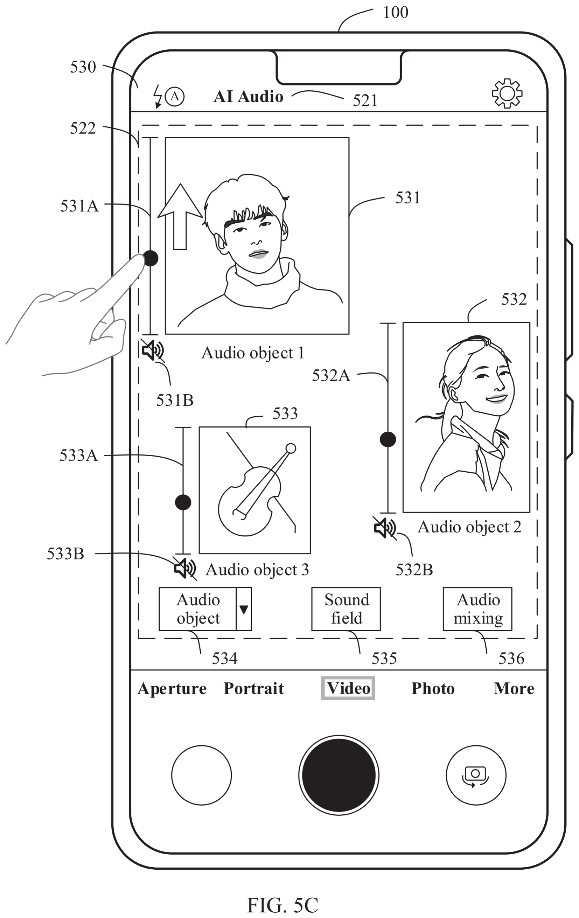

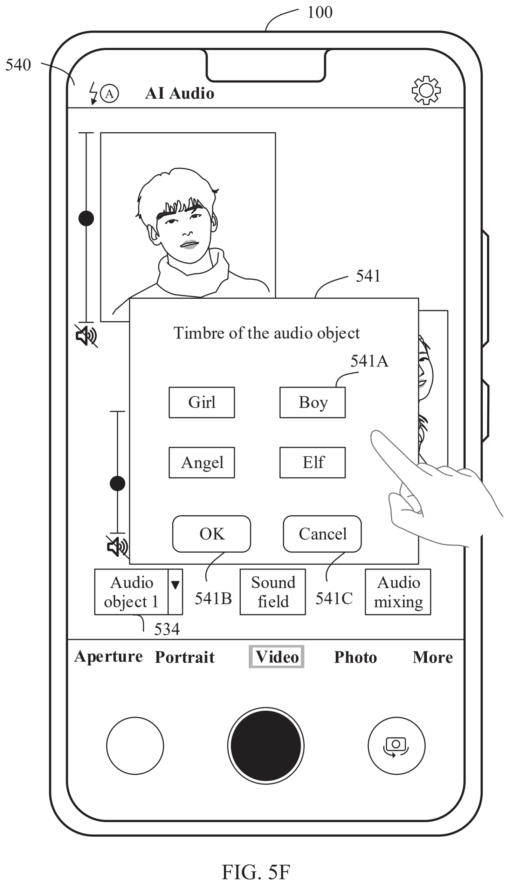

For the first audio object control, refer to one or more of the following controls in embodiments of this application: a volume bar 531A, a mute control 531B, and an audio object control 534 shown in FIG. 5C, and/or one or more controls in an audio object editing box 541 shown in FIG. 5F.

It may be learned from the foregoing method that the first electronic device may provide a related audio object control for a shot audio object in a video image, so that a user adjusts a sound feature of the audio object. The user may directly perform audio object editing on a shot sound in the video image. For example, the user may mute an unwanted audio object, perform human voice enhancement on some important audio objects, or change a timbre of one or more audio objects. The foregoing audio object editing operation is simple and intuitive, and is easily understood and performed by the user. In this way, during video shooting, the user can obtain an audio and video that meet a personal requirement, or in a video call scenario, the user may make a call peer end listen to a sound feature of an audio object adjusted by the user.

With reference to the first aspect, in some embodiments, the volume of the first audio object at a first shot moment may be first volume. The first operation may be used to adjust the volume of the first audio object to second volume. During playing of a video whose sound feature of the first audio object is adjusted, when the video is played to a moment corresponding to the first moment, the volume of the first audio object is the second volume.

With reference to the first aspect, in some embodiments, the timbre of the first audio object may be a first timbre on a shot first device. The first operation may be used to adjust the timbre of the first audio object to a second timbre. During playing of the video whose sound feature of the first audio object is adjusted, when the video is played to the moment corresponding to the first moment, the timbre of the first audio object is the second timbre.

With reference to the first aspect, in some embodiments, the spatial position of the first audio object may be a first position on the shot first device. The first operation may be used to adjust the spatial position of the first audio object to a second position. During playing of the video whose sound feature of the first audio object is adjusted, when the video is played to the moment corresponding to the first moment, the spatial position of the first audio object is the second position. In other words, a listener may watch a video and listen to an audio. When listening to the audio at the moment corresponding to the first moment, the listener can distinguish through auditory perception that the first audio object is at the second position.

With reference to the first aspect, in some embodiments, a type of the first audio object may include a person and an instrument.

With reference to the first aspect, in some implementations, the first video image further includes a second audio object. The first electronic device displays a second audio object control on the screen. The second audio object control is used to adjust a sound feature of the second audio object, and adjusting the sound feature of the second audio object includes one or more of the following: adjusting volume of the second audio object, adjusting a timbre of the second audio object, and/or adjusting a spatial position of the second audio object. In response to a second operation on the second audio object control, the first electronic device adjusts the sound feature of the second audio object in a second audio.

The first electronic device may perform audio object separation on the first audio, to separate audio signals (namely, audio tracks) of different audio objects included in the first audio.

It may be learned from the foregoing embodiments that the video image displayed by the first electronic device may include a plurality of shot audio objects. The user may separately perform audio object editing on one or more of the audio objects. This can improve user experience of audio and video recording, and better meet a requirement of the user for audio editing.

With reference to the first aspect, in some embodiments, the first electronic device displays a first sound field control on the screen. The first sound field control is used to adjust a first sound field in the first audio, and adjusting the first sound field includes one or more of the following: adjusting a type of a room in which the first sound field is located, adjusting a size of the room in which the first sound field is located, and/or adjusting a reflection material of the room in which the first sound field is located. The first electronic device adjusts the first sound field in response to a third operation on the first sound field control.

The first audio may include an audio signal (namely, a sound bed) of the first sound field. In addition to separating the audio signal of the audio object, the first electronic device may separate the audio signal of the first sound field from the first audio. Then, the first electronic device may adjust the first sound field by editing the audio signal of the first sound field.

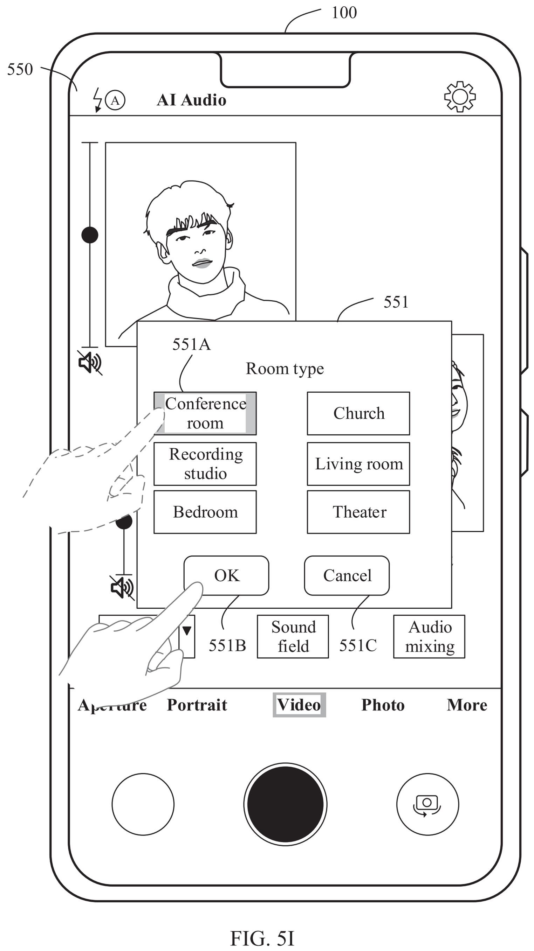

For the first sound field control, refer to one or more controls in a sound field editing box 551 shown in FIG. 5I in this application.

With reference to the first aspect, in some embodiments, the first electronic device displays a first audio mixing control on the screen. The first audio mixing control is used to adjust an audio mixing parameter of the first audio, and the audio mixing parameter includes one or more of the following: an audio mixing template, reverberation time, an equalizer parameter, a size of a room in which a sound field is located, and/or a reflection material of the room in which the sound field is located. The first electronic device determines a first audio mixing parameter based on a fourth operation on the first audio mixing control, and performs audio mixing on the audio signal of the first sound field and an audio signal of one or more audio objects in the first audio based on the first audio mixing parameter.

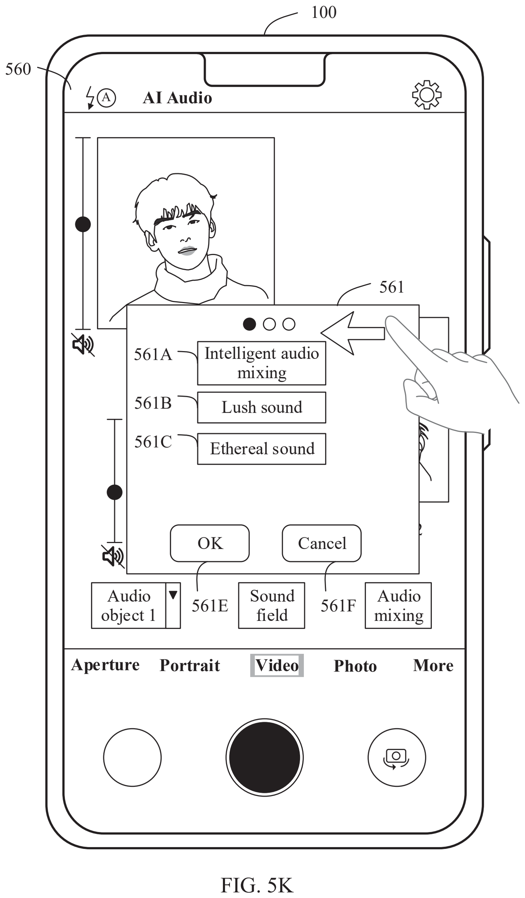

For the first mixing control, refer to one or more controls in an audio mixing editing boxes 561 shown in FIG. 5K to FIG. 5M in this application.

The audio signal of the first sound field used by the first electronic device for audio mixing may be an audio signal obtained after the first sound field is adjusted. The audio signal of the one or more audio objects used by the first electronic device for audio mixing may be an audio signal obtained through adjusting a sound feature of the one or more audio objects.

It may be learned from the foregoing embodiments that, in addition to providing a control used to edit an audio object, an electronic device may provide a control used to edit a sound field and/or a control used to edit an audio mixing parameter. In this way, the user can perform multi-dimensional editing on an audio in a video, to obtain an audio that meets a user requirement.

With reference to the first aspect, in some embodiments, the first electronic device receives a fifth operation on the first audio object and the second audio object. The fifth operation is used to combine the first audio object and the second audio object. The first electronic device displays a third audio object control on the screen in response to the fifth operation. The third audio object control is used to adjust sound features of the first audio object and the second audio object.

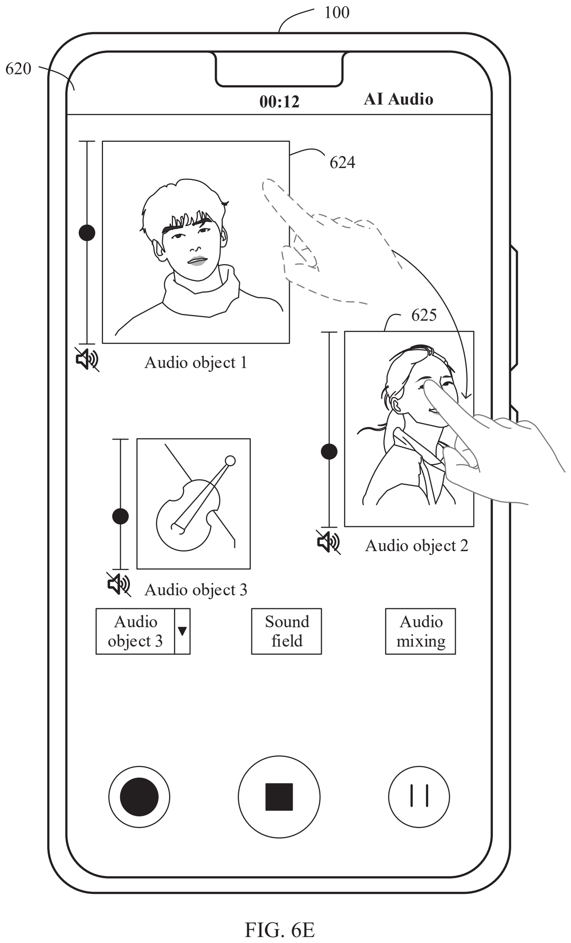

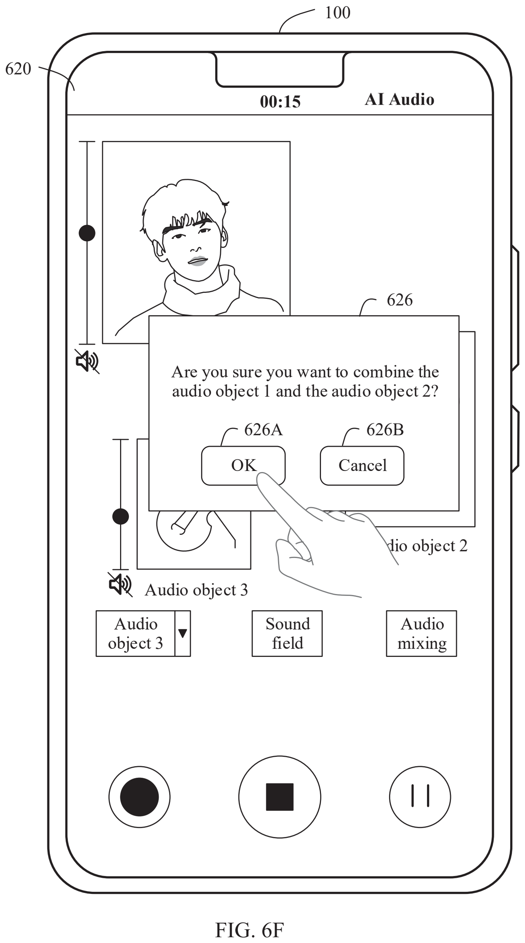

For the fifth operation, refer to operations shown in FIG. 6E and FIG. 6F in this application.

It may be learned from the foregoing embodiments that the user may combine one or more audio objects in the video image, so that sound features of a plurality of audio objects can be edited at the same time by using one audio editing operation. This can improve efficiency of editing the audio object by the user.

With reference to the first aspect, in some embodiments, the first audio further includes an audio signal corresponding to a third audio object, and the third audio object is not in the first video image. The first electronic device displays a fourth audio object control on the screen. The fourth audio object control is used to adjust a sound feature of the third audio object.

It may be learned from the foregoing embodiments that a shooting angle of view of a camera is limited, and the video image may include only a part of audio objects. The electronic device may provide a control indicating an audio object that is not shot, so that the user performs audio editing on the audio object that is not shot.

With reference to the first aspect, in some embodiments, a display position of the fourth audio object control on the screen is related to a spatial position of the third audio object. In this way, the user can determine, based on the display position of the fourth audio object control, an audio object corresponding to the fourth audio object control, and further edit, based on a requirement, the audio object that is not shot.

With reference to the first aspect, in some embodiments, the sound feature of the first audio object is a first sound feature, a sound feature of a second sound is a second sound feature. The first electronic device receives a sixth operation on the first audio object and the second audio object. The sixth operation is used to exchange the sound features of the first audio object and the second audio object. In response to the sixth operation, the first electronic device determines the sound feature of the first audio object in the first audio as the second sound feature, and determines the sound feature of the second audio object in the first audio as the first sound feature. The first electronic device adjusts the second sound feature when receiving an operation on the first audio object control. The first electronic device adjusts the first sound feature when receiving an operation on the second audio object control.

It may be learned from the foregoing embodiments that when the user considers that the sound features of the first audio object and the second audio object are opposite, the user may exchange the sound features of the first audio object and the second audio object. This may increase accuracy of determining the sound feature of the audio object.

With reference to the first aspect, in some embodiments, the first electronic device receives a seventh operation. The first electronic device recognizes a primary object in the first video image in response to the seventh operation. When recognizing that the primary object in the first video image is the first audio object, the first electronic device removes an audio signal of an audio object other than the first audio object from the first audio.

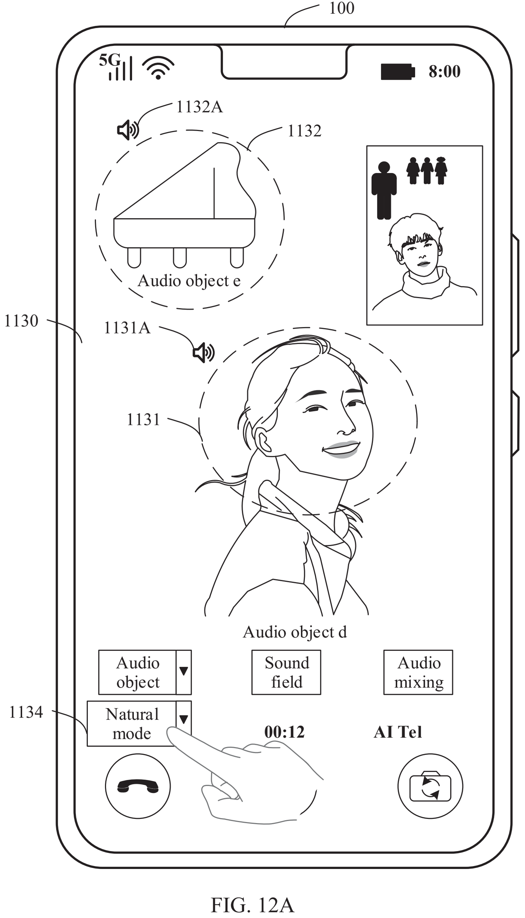

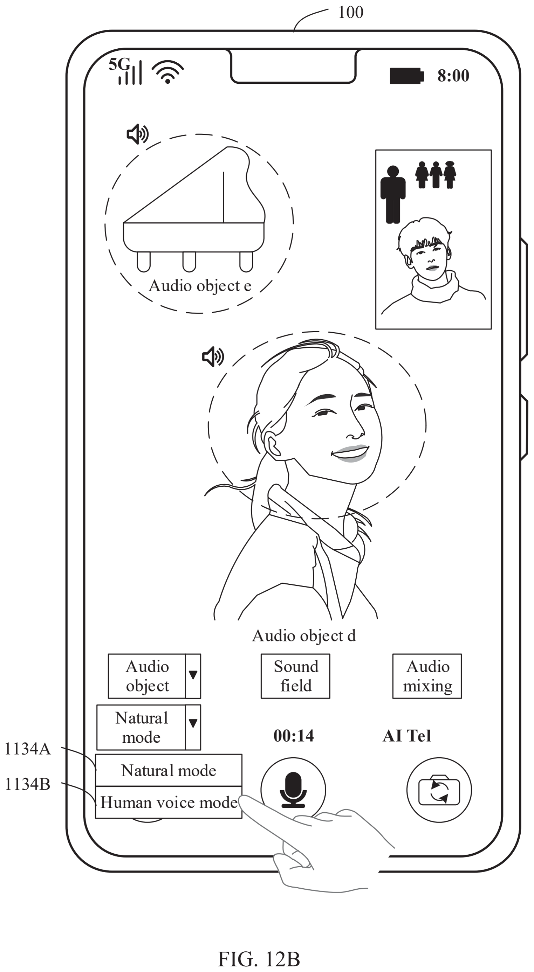

For the seventh operation, refer to operations shown in FIG. 12A and FIG. 12B in this application.

Optionally, when the first electronic device recognizes that the primary object in the video image in the first video changes from the first audio object to the second audio object, the first electronic device may remove an audio signal of an audio object other than the second audio object from the audio included in the first video. The first electronic device may remove the audio signal of the audio object other than the second audio object from an audio that starts when it is recognized that the primary object changes to the second audio object.

It may be learned from the foregoing embodiments that the electronic device may recognize the primary object in the video image, retain a sound of the primary object in an audio, and suppress all sounds other than the sound of the primary object in the audio. In this way, the user can quickly eliminate all the sounds other than the sound of the primary object in the audio during a video call, to clearly listen to the sound of the primary object. Alternatively, the user may suppress a sound of an audio object other than the primary object in a shot video, so that an audio in a shot audio is clearer.

With reference to the first aspect, in some embodiments, a display position of the first audio object control on the screen is related to a display position of the first audio object in a video image in the first video.

For the display position of the first audio object control, refer to display positions of the volume bar 531A and the mute control 531B shown in FIG. 5C in this application. It may be learned that a control used for audio editing may be presented in the video image, and in particular, a control used for audio object editing may be further displayed near a shot audio object in the image. This may help the user perform an audio editing operation more conveniently and intuitively, and improve user experience of audio and video recording and audio editing.

With reference to the first aspect, in some embodiments, before the first electronic device displays the first video image in the first video, the first electronic device receives an operation of starting a camera application and/or starting video recording, captures an image through an image capturing apparatus, and captures an audio through an audio capturing apparatus. The image captured by the image capturing apparatus includes the video image in the first video, and the audio captured by the audio capturing apparatus includes the first audio. The first electronic device displays, in real time, the image captured by the image capturing apparatus. The first video image may be an image displayed by the first electronic device in real time during image shooting.

It may be learned from the foregoing embodiments that the user may perform audio editing before starting video shooting (that is, in a video pre-recording phase). In this way, when entering a video recording phase, the electronic device can edit, based on an editing parameter determined based on the audio editing operation in the video pre-recording phase, an audio captured in the video recording phase, so that the recorded audio meets a user requirement. Optionally, the user may further perform audio editing while shooting a video.

When an audio editing operation (for example, an audio object editing operation, a sound field editing operation, or an audio mixing editing operation) is detected during video recording, the electronic device may determine a corresponding audio editing parameter based on the audio editing operation, and edit, based on the audio editing parameter, an audio captured from a moment of the audio editing operation.

With reference to the first aspect, in some embodiments, before the first electronic device displays the first video image in the first video, the first electronic device obtains the first video from a memory of the first electronic device; and the first electronic device receives an operation of playing the first audio. The first video image may be an image displayed by the first electronic device during video playing.

It may be learned from the foregoing embodiments that the user may perform audio editing on a video that has been stored in the electronic device. In other words, the user may perform audio editing during video recording, and may further perform secondary audio editing on a recorded video after the video recording is completed.

With reference to the first aspect, in some embodiments, a communication connection is established between the first electronic device and a listening device. The first electronic device sends the second audio to the listening device for playing. The second audio is an audio obtained through one or more of the following adjustments on the first audio: adjusting a sound feature of the one or more audio objects in the first audio, adjusting the first sound field in the first audio, and/or adjusting the audio mixing parameter of the first audio.

It may be learned from the foregoing embodiments that, during video recording, the electronic device may perform audio mixing in real time to output an audio file, and render the audio file in real time, so that the user can listen to a sound effect of video recording in real time through an audio playing device. In this way, the user can learn of a sound effect of audio editing in time, to perform audio editing, so that the sound effect achieves an effect required by the user.

With reference to the first aspect, in some embodiments, a communication connection is established between the first electronic device and a listening device. After the first electronic device adjusts the sound feature of the first audio object in the first audio, the first electronic device sends, to the listening device for playing, an audio signal of the first audio object whose sound feature is adjusted.

It may be learned from the foregoing embodiments that, during video recording, when the user adjusts the sound feature of the one or more audio objects, the electronic device may play only the audio signal of the one or more audio objects. In this way, the user can listen to only an audio of an edited audio object, to determine whether editing of the audio object is appropriate.

With reference to the first aspect, in some embodiments, the first electronic device and a second electronic device access a first video call. The first electronic device sends the video image in the first video and the second audio to the second electronic device. The second audio is an audio obtained through one or more of the following adjustments on the first audio: adjusting a sound feature of the one or more audio objects in the first audio, adjusting the first sound field in the first audio, and/or adjusting the audio mixing parameter of the first audio. The first video image may be an image shot by the first electronic device during the first video call.

With reference to the first aspect, in some embodiments, the first electronic device receives a second video from the second electronic device. The first electronic device displays a second video image in the second video. The second video image includes a fourth audio object. The first electronic device displays a fifth audio object control on the screen. The fifth audio object control is used to adjust a sound feature of the fourth audio object, and adjusting the sound feature of the fourth audio object includes one or more of the following: adjusting volume of the fourth audio object, adjusting a timbre of the fourth audio object, and/or adjusting a spatial position of the fourth audio object.

With reference to the first aspect, in some embodiments, the first electronic device determines a first editing parameter based on an operation on the fifth audio object control. The first electronic device sends a first editing instruction to the second electronic device. The first editing instruction includes the first editing parameter. The first electronic device receives a third video from the second electronic device. The third video includes a third audio, and the sound feature of the fourth audio object in the third audio is adjusted based on the first editing parameter.

With reference to the first aspect, in some embodiments, a third electronic device also accesses the first video call, and the third video is also sent to the third electronic device for playing.

It may be learned from the foregoing embodiments that, the user may edit an audio of a local end during a video call, so that a call peer end listens to an audio edited by the user. In addition, the user may edit an audio of the call peer end during the video call, so that the user and another call peer end can listen to an audio that is of the call peer end and that is edited by the user. In this way, the user can serve as a moderator to perform audio control on a plurality of call peer ends that access the video call, so that the video call can be better performed. In the foregoing embodiments, the user may conveniently and intuitively edit the call audio during the video call, to improve video call experience of the user.

With reference to the first aspect, in some embodiments, the first electronic device displays a second sound field control on the screen. The second sound field control is used to adjust a second sound field in an audio included in a video sent by the second electronic device, and adjusting the second sound field includes one or more of the following: adjusting a type of a room in which the second sound field is located, adjusting a size of the room in which the second sound field is located, and/or adjusting a reflection material of the room in which the second sound field is located.

With reference to the first aspect, in some embodiments, the first electronic device displays a second audio mixing control on the screen. The second audio mixing control is used to adjust an audio mixing parameter of the audio included in the video sent by the second electronic device, and the audio mixing parameter includes one or more of the following: an audio mixing template, reverberation time, an equalizer parameter, a size of a room in which a sound field is located, and/or a reflection material of the room in which the sound field is located.

It may be learned from the foregoing embodiments that the user may further adjust a sound field and an audio mixing parameter of the call peer end during the video call.

With reference to the first aspect, in some embodiments, the first electronic device and a second electronic device access a first video call, and before the first electronic device displays the first video image in the first video, the first electronic device receives the first video from the second electronic device.

According to a second aspect, this application provides an audio processing method. A first electronic device may capture a video image and an audio. The first electronic device may determine audio object information and sound field environment information based on the video image and the audio. The audio object information includes but is not limited to one or more of an audio track of an audio object included in the audio, a spatial position of the audio object, and/or a display position of the audio object in the video image. The sound field environment information may include but is not limited to one or more of reverberation time, a room type, a room size, and/or a room reflection material. The first electronic device may receive an audio editing operation, and determine an audio editing parameter based on the audio editing operation. The audio editing operation includes one or more of the following editing operations on the audio: audio object editing, sound field editing, and/or audio mixing editing. The first electronic device may determine an audio file based on the audio editing parameter, the audio object information, and the sound field environment information.

The audio object editing may include adjusting a sound feature of the audio object, for example, adjusting volume of the audio object, adjusting a timbre of the audio object, and adjusting a spatial position of the audio object. The sound field editing may include but is not limited to: adjusting a type of a room in which the sound field is located, adjusting a size of the room in which the sound field is located, and/or adjusting a reflection material of the room in which the sound field is located. The audio mixing editing may include adjusting an audio mixing parameter. The audio mixing parameter may include but is not limited to: an audio mixing template, the reverberation time, an equalizer parameter, the size of the room in which the sound field is located, and/or the reflection material of the room in which the sound field is located.

The audio file may include audio signals of the sound field and each audio object, and metadata. The metadata may include data used to ensure that the audio signal can be correctly rendered, for example, the spatial position of the audio object and the sound field environment information.

It may be learned from the foregoing method that the first electronic device may perform audio object separation and sound field analysis on the audio, to provide a multi-track audio editing capability. In this way, a user can perform personalized adjustment on a sound feature, a sound field, and an audio mixing parameter of an audio object in an audio in real time when an electronic device records an audio and a video, to obtain an audio that meets a personal requirement. In addition, the user may also perform personalized adjustment on the sound feature, the sound field, and the audio mixing parameter of the audio object in the audio after the electronic device completes recording the audio and the video. The foregoing method may improve user experience of audio and video recording.

With reference to the second aspect, in some embodiments, the first electronic device may store, as a first video when receiving an operation of ending video recording, a video image and an audio that are captured from starting video recording to ending video recording. When receiving an operation of playing the first video, the first electronic device may obtain a video image of the first video and a first audio file. The first audio file may include the audio signals of the sound field and each audio object, and the metadata. The metadata may include the data used to ensure that the audio signal can be correctly rendered, for example, the spatial position of the audio object and the sound field environment information. The first electronic device receives the audio editing operation, and may determine an audio parameter based on the audio editing operation. The audio editing operation may include one or more of the following editing operations on the audio: audio object editing, sound field editing, and/or audio mixing editing. The first electronic device may edit the first audio file based on the audio editing parameter, to obtain a second audio file. The first electronic device may store the second audio file as an audio file of the first video.

The editing the first audio file may include: editing the audio signal of the sound field in the first audio file (to adjust the sound field), editing an audio signal of one or more audio objects in the first audio file (to adjust sound features of the audio objects), and editing the metadata in the first audio file (to ensure that adjusted audio signals of the audio objects and/or the sound field may be correctly rendered and played after adjustment).

It may be learned from the foregoing embodiments that the user may edit an existing video in the first electronic device, to change a playing effect of an audio in the video.

With reference to the second aspect, in some embodiments, the first electronic device may determine, based on the spatial position of the audio object and the video image, the display position of the audio object in the video image. The first electronic device may recognize and track one or more targets in the video image by using an image processing algorithm, and determine, based on a type of the target, a position of the target, and the spatial position of the audio object in the video image, which target in the video image makes various sounds in an environment, to determine an audio object corresponding to the target in the video image.

The determining the display position of the audio object in the image may help the user intuitively perform an audio editing operation on one or more audio objects in the video image. Then, the electronic device may process a corresponding audio track based on an audio object selected by the user for editing on the video image, to meet an audio editing requirement of the user. The audio editing operation is simple and intuitive, so that user experience of audio and video recording and audio editing can be improved.

With reference to the second aspect, in some embodiments, the audio file determined by the first electronic device based on the audio editing parameter, the audio object information, and the sound field environment information may include audio files in a plurality of formats, for example, an audio file in a stereo format, an audio file in a surround sound format, or an audio file in a three-dimensional sound format. In this way, rendering and playing are performed based on audio files in different formats, so that the user can experience different sound effects.

With reference to the second aspect, in some embodiments, the first electronic device may perform one or more of the following encoding on the audio file: channel encoding, audio object encoding, HOA encoding, and metadata encoding. Then, the first electronic device may send an encoded audio file to another device. The encoding may reduce information redundancy in the audio file, to improve transmission efficiency of the audio file.

According to a third aspect, this application provides an audio processing method. The method may be applied to a communication system that includes a first electronic device and a second electronic device. The first electronic device and the second electronic device access a first call. After capturing a video image and an audio, the first electronic device may edit the audio based on a received audio editing operation, to obtain a first audio file. The first audio file may include audio signals of a sound field and each audio object, and metadata. The metadata may include data used to ensure that the audio signal can be correctly rendered, for example, the spatial position of the audio object and the sound field environment information. The first electronic device may render an audio file to obtain first audio data. The first electronic device may send the first audio data to the second electronic device. The second electronic device may play, based on the first audio data, an edited audio of a first electronic device. The first electronic device receives an operation of editing an audio of a second electronic device, and determines an audio editing parameter. The first electronic device may send an audio editing instruction to the second electronic device.e. The audio editing instruction may include the audio editing parameter. The second electronic device may edit a captured audio according to the audio editing instruction, to obtain a second audio file. The second electronic device renders the second audio file to obtain second audio data. The second electronic device may send the second audio data to the first electronic device. The first electronic device may play, based on the second audio data, an edited audio of the second electronic device.

It may be learned from the foregoing method that, a user may edit an audio of a local end during a video call, so that a call peer end listens to an audio edited by the user. In addition, the user may edit an audio of the call peer end during the video call, so that the user can listen to an audio that is of the call peer end and that is edited by the user. In this way, the user can serve as a moderator to perform audio control on a plurality of call peer ends that access the video call, so that the video call can be better performed. In the foregoing embodiments, the user may conveniently and intuitively edit the call audio during the video call, to improve video call experience of the user.

With reference to the third aspect, in some embodiments, the communication system further includes a third electronic device. The third electronic device also accesses the first video call. The second electronic device may also send the second audio data to the third electronic device. The third electronic device may play, based on the second audio data, an edited audio of the second electronic device.

It may be learned from the foregoing embodiments that a user of the first electronic device may edit the audio of the second electronic device, so that another call end can listen to an audio that is of a call peer end and that is edited by the user of the first electronic device.

With reference to the third aspect, in some embodiments, the first electronic device may receive a video image and an audio file from the second electronic device. The audio file may include audio signals of a sound field and each audio object of a call peer end, and metadata. When receiving an operation of editing an audio of the call peer end, the first electronic device may edit the audio file to obtain a new audio file. The first electronic device may render the new audio file to obtain audio data. Then, the first electronic device may play an audio of the call peer end by using the audio data obtained through rendering. In this way, the user of the first electronic device can listen to the audio that is of the call peer end and that is edited by the user of the first electronic device.

With reference to the third aspect, in some embodiments, the communication system may further include a server. The server may be configured to implement access of the first electronic device and the second electronic device to the first video call. When receiving an operation of editing an audio of the call peer end, the first electronic device may send an audio editing instruction to the server. The audio editing instruction may include an audio editing parameter used for audio editing. The server may further receive a video image and an audio file from the call peer end. The audio file may include audio signals of a sound field and each audio object of a call peer end, and metadata. The server may edit the audio file from the call peer end based on the audio editing parameter of the first electronic device, to obtain a new audio file. Then, the server may send the new audio file to the first electronic device, and the first electronic device renders and plays the new audio file. Alternatively, the server may render the new audio file to obtain audio data, and deliver the audio data to the first electronic device for playing. In this way, the user of the first electronic device can listen to the audio that is of the call peer end and that is edited by the user of the first electronic device.

It may be learned from the foregoing embodiments that the first electronic device may support the user at the local end in editing the audio from the call peer end. A device that specifically edits the audio file may be the first electronic device, or may be the call peer end (for example, the second electronic device), or may be the server.

According to a fourth aspect, this application provides an electronic device. The electronic device may include a camera, a microphone array, a memory, and a processor. The camera may be configured to shoot an image. The microphone array may be configured to capture an audio. The memory may be configured to store a computer program. The processor may be configured to invoke the computer program, so that the electronic device performs the method according to any one of the possible implementations in the first aspect or the second aspect.

According to a fifth aspect, this application provides a computer-readable storage medium, including instructions. When the instructions are run on an electronic device, the electronic device is enabled to perform the method according to any one of the possible implementations in the first aspect or the second aspect.

According to a sixth aspect, this application provides a computer program product. The computer program product may include computer instructions. When the computer instructions are run on an electronic device, the electronic device is enabled to perform the method according to any one of the possible implementations in the first aspect or the second aspect.

According to a seventh aspect, this application provides a chip. The chip is used in an electronic device, the chip includes one or more processors, and the processor is configured to invoke computer instructions to enable the electronic device to perform the method according to any one of the possible implementations in the first aspect or the second aspect.

It may be understood that the electronic device provided in the fourth aspect, the computer-readable storage medium provided in the fifth aspect, the computer program product provided in the sixth aspect, and the chip provided in the seventh aspect are all configured to perform the methods provided in embodiments of this application. Therefore, for beneficial effects that can be achieved, refer to beneficial effects in the corresponding method. Details are not described herein again.

### BRIEF DESCRIPTION OF DRAWINGS

FIG. 1 is a diagram of a hardware structure of an electronic device 100 according to an embodiment of this application;
FIG. 2 is a block diagram of a software structure of an electronic device 100 according to an embodiment of this application;
FIG. 3 is a diagram of another structure of an electronic device 100 according to an embodiment of this application;
FIG. 4A to FIG. 4C are diagrams of architectures of some communication systems according to an embodiment of this application;
FIG. 5A to FIG. 5M are diagrams of some audio editing scenarios according to an embodiment of this application;
FIG. 6A to FIG. 6G are diagrams of some other audio editing scenarios according to an embodiment of this application;
FIG. 7A to FIG. 7E are diagrams of some other audio editing scenarios according to an embodiment of this application;
FIG. 8A to FIG. 8C are diagrams of some other audio editing scenarios according to an embodiment of this application;
FIG. 9A to FIG. 9C are diagrams of some other audio editing scenarios according to an embodiment of this application;
FIG. 10A to FIG. 10D are diagrams of some other audio editing scenarios according to an embodiment of this application;
FIG. 11A to FIG. 11H are diagrams of some other audio editing scenarios according to an embodiment of this application;
FIG. 12A to FIG. 12C are diagrams of some other audio editing scenarios according to an embodiment of this application;
FIG. 13A and FIG. 13B are diagrams of some other audio editing scenarios according to an embodiment of this application;
FIG. 14 is a flowchart of an audio processing method according to an embodiment of this application;
FIG. 15 is a flowchart of another audio processing method according to an embodiment of this application; and
FIG. 16 is a flowchart of another audio processing method according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. The terms "include", "contain", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, words such as "example" or "for example" indicate giving an example, an illustration, or a description. Any embodiment or design scheme described as an "example" or "for example" in embodiments of this application should not be construed as being more preferred or more advantageous than another embodiment or design scheme. Exactly, use of the words such as "example" or "for example" is intended to present a related concept in a specific manner.

A term "user interface (user interface, UI)" in the following embodiments of this application is a medium interface for interaction and information exchange between an application (application, app) or an operating system (operating system, OS) and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be recognized by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

This application provides an audio processing method. An electronic device may capture a video image and an audio, and determine, based on the video image and the audio, information such as audio object information and sound field environment information in the video image and the audio. The audio object information may include one or more of audio tracks of audio objects separated from the audio and/or spatial positions of the audio objects. The sound field environment information may include one or more of reverberation time, a room type, a room size, and/or a room reflection material. Based on the foregoing information, the electronic device may provide, in a user interface, a control used to edit an audio of the audio object and/or a control used to edit the sound field. The user may select one or more audio objects for audio editing. For example, the user may adjust volume of the audio object, change a timbre of the audio object, change a spatial position of the audio object, or the like. The user may further choose to edit the sound field, for example, replace a sound field environment. The electronic device may determine an editing parameter based on an operation of editing the audio object and/or the sound field by the user, to process the captured audio by using the editing parameter. The electronic device may output audio files in a plurality of formats (for example, stereo, ambisonic (ambisonic), and surround sound), so that the processed audio can be rendered on a plurality of types of audio playing devices. When the processed audio is rendered, a sound effect heard by the user may achieve an effect of adjustment by the user.

It may be learned from the foregoing method that the electronic device may perform audio object separation and sound field analysis on the audio, to provide a multi-track audio editing capability. In this way, the user can perform personalized editing on an audio track of the audio object and/or the sound field in the audio in real time when the electronic device records the audio and a video, to obtain an audio that meets a personal requirement. In addition, the user may also perform personalized editing on the audio track of the audio object and/or the sound field in the audio after the electronic device completes recording the audio and the video. The foregoing method may improve user experience of audio and video recording.

### Terminology

For ease of understanding, the following describes some concepts in this application.

### 1. Channel

The channel may be audio signals collected or played back in different spatial positions during sound recording or playing. A quantity of channels may be a quantity of audio input apparatuses (for example, microphones) during sound recording, or may be a quantity of audio output apparatuses (for example, speakers) during sound playback.

Based on division of a quantity of channels, there may be a mono channel, a dual channel, a 5.1 channel, a 7.1 channel, and the like. A larger quantity of channels indicates stronger stereo and live experience during audio playing.

### 2. Audio object

The audio object may indicate a sound-making object, for example, a person, an animal, an instrument, or a vehicle. A sound of an audio object may be a sound perceived as a whole or a sound that is independent of an environment and that is made by a sound source. The audio object may also be referred to as a sound object or a sound source.

### 3. Audio track

The audio track may be a position for placing an audio element. The audio element may include an audio object. One audio object may correspond to one audio track. It may be understood that, in a process of recording an audio, there may be a plurality of audio objects that make sounds in an environment. An electronic device may capture the sounds of the plurality of audio objects, and generate an audio file. In other words, one audio file may include a plurality of audio tracks.

### 4. Sound field

The sound field may be an area in which a sound wave exists in a medium.

A sound is reflected by an obstacle like a wall and a ceiling of a building during propagation. For sounds of various audio objects, we may sense a sound that may be directly heard, and may also sense a reflected sound or an echo sound that is generated when the sound is reflected. Features of the reflected sound and the echo sound may be affected by a shape, size, and material of the building. All sounds such as the sound directly transmitted to ears, the reflected sound, and the echo sound are combined to bring auditory experience of being in a specific position.

Therefore, the sound field may correspond to sound field environment information (for example, reverberation time, a room type, a room size, and a room reflection material). The electronic device may adjust a sound effect of an audio by changing the sound field environment information. The sound field environment information may also be referred to as a sound field parameter or another name.

### 5. Metadata (metadata)

The metadata may be used to describe an audio signal, so that the audio signal can be correctly rendered, processed, or distributed. The electronic device may generate corresponding metadata when recording an audio.

Metadata of an audio file may include definitions of different audio tracks in the audio file. To be specific, the metadata may include information such as a spatial position and/or intensity of an audio object. The metadata of the audio file may further include sound field environment information. During playback, the electronic device may map, based on the metadata, the audio object (namely, an audio track) to one or more speakers or perform binaural rendering on the audio object for headset playing, to achieve a desired spatial audio effect.

In some embodiments, a format of the metadata may conform to a standard, for example, ITU-R BS.2076. In the standard ITU-R BS.2076, the metadata may include one or more of the following elements: audioTrackFormat, audioStreamFormat, audioChannelFormat, audioBlockFormat, audioPackFormat, audioObject, audioContent, audioPraogramme, audioTrackUID, and/or audioFormatExtended.

The audioTrackFormat may indicate data related to an audio track, and may be used to describe a format of data, so that a renderer can correctly decode a signal. The audioTrackFormat may include an ID of the audio track, a name of the audio track, format description information, or the like.

The audioStreamFormat may be used for an audio track combination (namely, an audio stream) required for successfully decoding audio track data. An audio stream may be a combination of several audio tracks (or one audio track) used to render a channel, an audio object, and a higher order ambisonics (higher order ambisonics, HOA) component or package. The audioStreamFormat may include an ID of the audio stream, a name of the audio stream, format description information, or the like.

The audioChannelFormat may indicate data related to a channel. The audioChannelFormat may include a channel name (for example, a left channel or a right channel), a channel ID, a channel type, or the like.

The audioBlockFormat may be a subdivision of the audioChannelFormat in time domain. To be specific, audioBlockFormat (or referred to as an audio block) may indicate a single audioChannelFormat sample sequence with a fixed parameter within a specified time interval. The audioChannelFormat may be further subdivided into one or more audioBlockFormats in time domain. The audioBlockFormat may include an ID of the audio block, start time of the audio block, and duration of the audio block.

The audioPackFormat may indicate an audio packet in which the one or more audioChannelFormats are combined. The audioPackFormat may include an ID of the audio packet, a name of the audio packet, a type of a channel, importance of the audio packet, or the like.

The foregoing ITU-R BS.2076 is merely an example standard in this application, and the format of the metadata may alternatively be defined according to another standard. This is not limited in embodiments of this application.

### 6. Stereo

The stereo may indicate an audio format. In this audio format, two channels are used to carry audio signals with a specific correlation, and the audio signals are usually replayed by using two symmetrical speakers or headsets in front of a listener, to bring wider sound field experience to the listener.

### 7. Surround sound

The surround sound may indicate an audio format. In this audio format, a plurality of channels are used to carry a plurality of channels of audio signals that form audio content, and the audio signals are replayed by using a plurality of speakers that surround the listener and that are located at an ear height layer of the listener, to bring surrounded sound field experience to the listener.

### 8. Three-dimensional sound

The three-dimensional sound may indicate an audio format. The three-dimensional sound may include a channel-based three-dimensional sound, an object-based three-dimensional sound, and a sound field-based three-dimensional sound.

The channel-based three-dimensional sound may mean that different sounds are played in different channels, to achieve a stereo effect. The channel-based three-dimensional sound may supplement sound information in a space by adding channels, to bring immersive sound field experience to the listener.

The object-based three-dimensional sound may mean that a sound is decomposed into a plurality of independent audio objects, each object has attributes such as a position, a direction, and volume, and the stereo effect is achieved by mixing and processing these objects. The object-based three-dimensional sound may be used to position a sound at any point in a space by assigning spatial coordinates to audio objects. The object-based three-dimensional sound may be rendered and played without being restricted by a sound reproduction condition (for example, a quantity of audio equipments).

The sound field-based three-dimensional sound may mean that sounds are transmitted in different directions and angles by placing a plurality of speakers in a space, to achieve the stereo effect. The sound field-based three-dimensional sound may reproduce a sound in a three-dimensional space by recording sound pressure in the space, and a core underlying algorithm of the sound field-based three-dimensional sound may include HOA.

In some embodiments, the three-dimensional sound may further include a three-dimensional sound implemented based on a technology of channel+object+sound field.

It may be learned that the three-dimensional sound may generate three-dimensional orientation perception on a speaker array or a headset, so that the listener feels that heard sound sources are located in different 3D positions in a space.

The three-dimensional sound may also be referred to as a spatial audio or a 3D audio.

### 9. Speaker rendering

The speaker rendering may be rendering an audio signal by using a group of speakers.

For example, in a scenario in which a three-dimensional sound is rendered by using a speaker, audio signals of different sound sources are mapped to speaker positions (for example, a mapping operation is performed between a speaker array conversion matrix and a sound source position) by properly placing a speaker array, to implement spatial perception and orientation perception of playing a sound signal.

The speaker rendering may be used when an audio playing device is a multi-speaker device, for example, an in-vehicle infotainment, a large screen, or a plurality of audio equipments in a home theater.

### 10. Binaural rendering

The binaural rendering may be rendering an audio signal by using a headset or a stereo speaker device (for example, a mobile phone, a tablet computer, or a notebook computer).

For example, in a scenario in which binaural rendering is performed on a three-dimensional sound, time-domain convolution and distance attenuation compensation are performed by using a head related transfer function (head related transfer function, HRTF) and an audio signal that carries orientation information, and reverberation is added to imitate a natural sound wave, so that a sound source seems to come from a point in a three-dimensional space, and therefore a user feels that heard sound sources are located in different 3D positions in a space.

### Device structure and communication system

The following describes software and hardware structures of an electronic device 100 in this application.

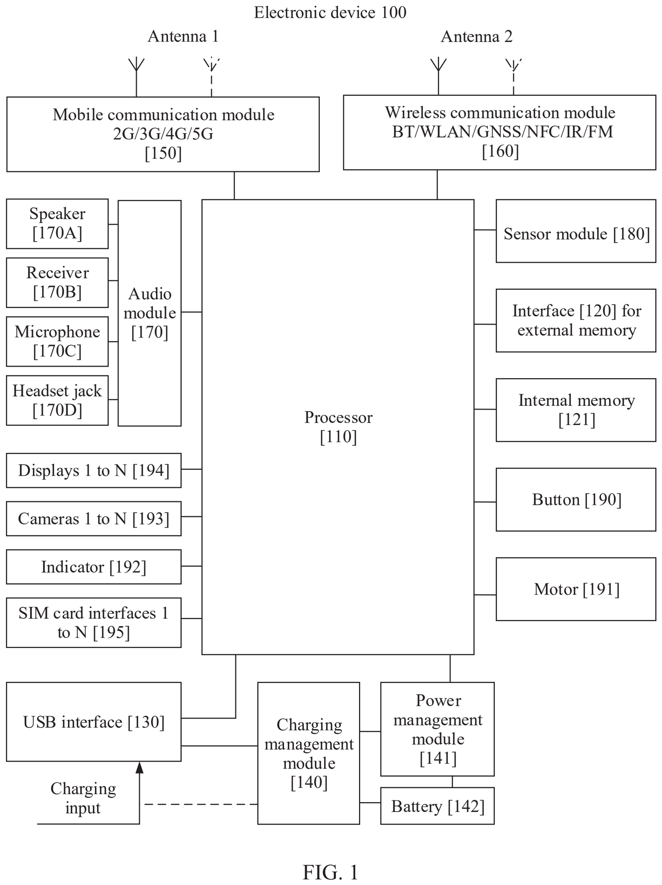

**FIG. 1** **illustrates a diagram of a hardware structure of the electronic device 100 according to an embodiment of this application.**

As shown in FIG. 1, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In this application, the memory stores a computer program, so that the controller or the processor can implement the audio processing method in this application through an interface or a protocol.

For example, the computer program stored in the memory may be used to process a captured video picture and audio to determine audio object information (including determining a display position of an audio object in the video image, an audio track of the audio object in the audio, and a spatial position of the audio object) and sound field environment information. The audio track of the audio object may be obtained through processing by using an audio object separation technology. The spatial position of the audio object may be obtained by processing a digital sound signal by using a positioning algorithm after the digital sound signal is obtained by performing analog-to-digital conversion on an analog sound signal captured in an environment. The display position of the audio object in the video image may be obtained through processing by using an image recognition algorithm. The sound field environment information may be obtained through joint modeling based on the audio and the video image.

Optionally, the computer program stored in the memory may be further used to: determine an editing parameter based on an editing operation performed by a user on an audio object and/or a sound field, and process the captured audio by using the editing parameter; encode the audio (for example, channel encoding, audio object encoding, HOA encoding, or metadata encoding); and output audio information such as an audio track and a spatial position of the audio object that are obtained through processing as an audio file in one or more audio formats (for example, stereo, surround sound, or three-dimensional sound).

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing an audio through the headset.

The charging management module 140 is configured to receive a charging input from the charger. The charger may be a wireless charger or a wired charger. When charging the battery 142, the charging management module 140 may further supply power to the electronic device through the power management module 141.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform filtering, amplification, or the like on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image.

The display 194 is configured to display an image, a video, and the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transformation on frequency energy.

The NPU is a neural-network (neural-network, NN) computing processor, quickly processes input information by referring to a structure of a biological neural network, for example, by referring to a mode of transmission between human brain neurons, and may further continuously perform self-learning. The NPU may implement applications such as intelligent cognition of the electronic device 100, for example, image recognition, facial recognition, speech recognition, and text understanding.

The interface 120 for external memory may be configured to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some examples, the audio module 170 may be disposed in the processor 110, or a part of functional modules of the audio module 170 are disposed in the processor 110. The speaker 170A, also referred to as a "loudspeaker", is configured to convert an audio electrical signal into a sound signal. The receiver 170B, also referred to as an "earpiece", is configured to convert an electrical audio signal into a sound signal. The headset jack 170D is configured to connect to a wired headset.

The microphone 170C, also referred to as a "mike" or a "mic", is configured to convert a sound signal into an electrical signal. In some embodiments, a plurality of (for example, two or three) microphones 170C may be disposed in the electronic device 100, to implement functions such as audio capturing, noise reduction, and spatial position determining of an audio object. The microphone 170C may be an omnidirectional microphone or a directional microphone. The microphone 170C may be a microphone built in the electronic device 100. Alternatively, the microphone 170C may be a microphone that is independent of the electronic device 100 and that establishes a communication connection to the electronic device 100, for example, a wireless microphone.

The sensor module 180 may include a pressure sensor, a gyroscope sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

The gyroscope sensor may be configured to determine a motion posture of the electronic device 100. In some embodiments, angular velocities of the electronic device 100 around three axes (namely, axes x, y, and z) may be determined by using the gyroscope sensor. The electronic device 100 may determine an offset angle of the electronic device 100 by using the gyroscope sensor.

The acceleration sensor may detect accelerations of the electronic device 100 in various directions (usually on three axes). In some embodiments, the acceleration sensor may be configured to recognize a posture of the electronic device 100, and may be used in applications such as switching between a landscape mode and a portrait mode and a pedometer.

The gravity sensor may be configured to determine a tilt angle of the electronic device 100 relative to a horizontal plane. In some embodiments, a screen status of the electronic device 100 may be determined by using the gravity sensor, to adjust a screen to keep the screen horizontal.

In some embodiments, the electronic device 100 may determine a moving distance of the electronic device 100 in a period of time by using the acceleration sensor and the gravity sensor.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as calling and data communication. In some examples, the electronic device 100 uses an eSIM, namely, an embedded SIM card. The eSIM card may be embedded into the electronic device 100, and cannot be separated from the electronic device 100.

The electronic device 100 may be a mobile phone, a tablet computer, a smartwatch, a television, an ultra-mobile personal computer (ultra-mobile personal computer, UMPC), a netbook, a personal digital assistant (personal digital assistant, PDA), or the like. A specific type of the electronic device is not limited in embodiments of this application.

A software system of the electronic device 100 may use a layered architecture, an event-driven architecture, a microkernel architecture, a microservice architecture, or a cloud architecture. In embodiments of this application, an Android^{®} system with a layered architecture is used as an example to illustrate a software structure of the electronic device 100.

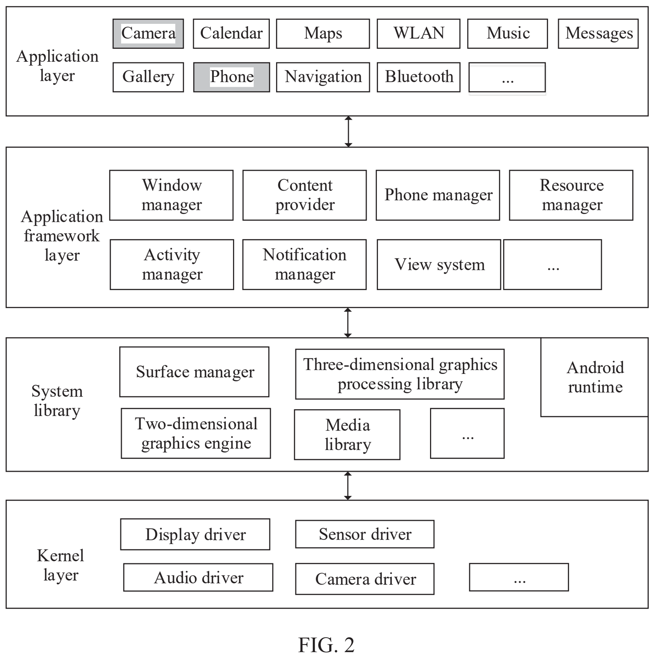

**FIG. 2** **is a block diagram of a software structure of the electronic device 100 according to an embodiment of this application.**

In a layered architecture, software is divided into several layers, and each layer has a clear role and task. The layers communicate with each other through a software interface. In some embodiments, the Android^{®} system is divided into four layers that are respectively an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Maps, Navigation, WLAN, Bluetooth, Music, and Messages. The camera application may be used to provide functions such as photographing and video recording. During video recording, the electronic device 100 may capture a video image through a camera, and capture an audio through a microphone (or another audio input apparatus). In addition, the electronic device 100 may display the captured video image on a screen in real time. The call application may be used to provide a voice call function and a video call function. In a video call scenario, the electronic device 100 may capture the video image through the camera, and capture the audio through the microphone. The electronic device 100 may send the captured video image and audio to a video call peer end, and receive a video image and an audio from the video call peer end. The electronic device 100 may display, in real time on the screen, the video image captured by the electronic device 100 and the video image sent by the video call peer end, and play the audio from the video call peer end. In some embodiments, the video call function may allow a plurality of persons to simultaneously access a call, for example, a video call accessed by three, four, or more persons.

The electronic device 100 may further include more or fewer applications. For example, the electronic device 100 may further include a video conference application. For functions provided by the video conference application, refer to the video call function.

The application framework layer provides an API and a programming framework for an application at the application layer. The application framework layer includes some predefined functions.

As shown in FIG. 2, the application framework layer may include a window manager, a content provider, a view system, a phone manager, a resource manager, a notification manager, an activity manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, hang-up, or the like).

The resource manager provides various resources such as a localized character string, an icon, an image, a layout file, and a video file for an application.

The notification manager enables an application to display notification information in the status bar (for example, a pull-down notification bar), and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of graph or scroll bar text, for example, a notification of an application running on a background, or may be a notification that appears on the screen in a form of dialog window. For example, text information is prompted in the status bar, an alert tone is made, the electronic device vibrates, or an indicator blinks.

The activity manager is responsible for managing an activity (activity), starting, switching, and scheduling each component in the system, and managing and scheduling an application. The activity manager may be invoked by an upper-layer application to start a corresponding activity.

The Android runtime includes a core library and a virtual machine. The Android runtime is responsible for scheduling and management of the Android system.

The core library includes two parts: a function that needs to be invoked in Java language and a core library of Android.

The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

An operating system of the electronic device 100 is not limited in embodiments of this application. For example, the operating system of the electronic device 100 may alternatively be Symbian^{®} (Symbian^{®}), Microsoft^{®} Windows^{®}, Apple iOS^{®}, Blackberry^{®} (Blackberry^{®}), HarmonyOS^{®} (Harmony^{®}) OS, or the like.

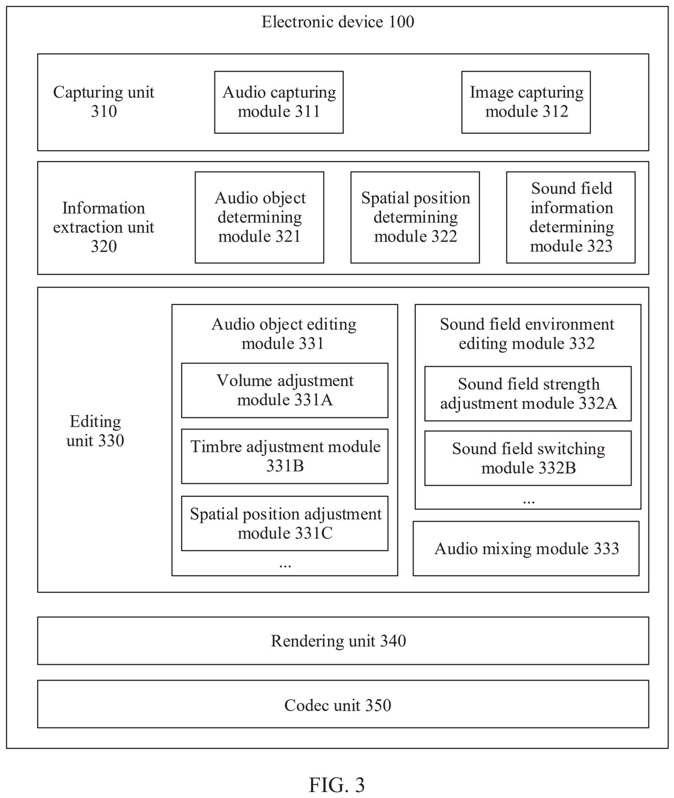

**FIG. 3** **is a diagram of another structure of the electronic device 100 according to an embodiment of this application.**

As shown in FIG. 3, the electronic device 100 may include a capturing unit 310, an information extraction unit 320, an editing unit 330, a rendering unit 340, and a codec unit 350.

The capturing unit 310 may include an audio capturing module 311 and an image capturing module 312.

The audio capturing module 311 may be configured to capture a sound signal (that is, capture an audio) in an environment. The audio capturing module 311 may be specifically a sound pickup array, for example, a microphone array. In some embodiments, the audio captured by the audio capturing module 311 may be a spatial audio.

The image capturing module 312 may be configured to capture an image. The image capturing module 312 may be specifically a camera, for example, a front-facing camera or a rear-facing camera of the electronic device 100. The electronic device 100 may continuously capture images in a period of time by using the image capturing module 312, and sequentially store the captured images in series as a video based on a capture sequence. The image stored as the video may also be referred to as a video image.

In some embodiments, the camera may include a depth camera, to position a shot person or object based on an image captured by the depth camera. A type of the camera is not limited in embodiments of this application.

In some embodiments, the audio capturing module 311 and/or the image capturing module 312 may alternatively be modules included in another device independent of the electronic device 100. For example, the electronic device 100 may establish a communication connection to a video image capturing device and an audio capturing device. The video image capturing device may include an image capturing module. The audio capturing device may include an audio capturing module. The video image capturing device and the audio capturing device may simultaneously collect data, and send the data to the electronic device 100. The electronic device 100 may receive a video image captured by the video image capturing device and an audio captured by the audio capturing device. Then, the electronic device 100 may provide a function of editing an audio object and a sound field for a user according to the audio processing method provided in this application, and process the received audio based on an audio editing operation of the user.

The information extraction unit 320 may include an audio object determining module 321, a spatial position determining module 322, and a sound field information determining module 323.

The information extraction unit 320 may obtain the audio and the video image that are captured by the capturing unit 310.

The audio object determining module 321 may be configured to perform audio object separation to separate an audio track of one or more audio objects from the audio. In a possible implementation, when the captured audio is a multi-channel audio, an audio signal of one audio object may exist in one or more channels. The audio object determining module 321 may determine a spectral similarity between channels in the audio, to obtain a set of spectral similarities. Based on the set of spectral similarities, the audio object determining module 321 may perform channel grouping, to obtain a set of channel groups. One channel group may be associated with one audio object. The channel grouping method may include but is not limited to a clustering algorithm like a hierarchical method, a density-based method, or a grid-based method. Based on the set of channel groups, the audio object determining module 321 may generate, for each frame included in the audio, a probability vector associated with each channel group. A probability vector of a frame may indicate a probability value that the frame belongs to a channel group. The audio object determining module 321 may generate a probability matrix corresponding to each channel group by aggregating associated probability vectors across frames, and perform audio object synthesis between channel groups across frames based on the probability matrix, to separate an audio track of each audio object from the audio. A specific method for performing audio object separation by the audio object determining module is not limited in embodiments of this application.

In some embodiments, the audio object determining module 321 may be further configured to recognize noise in the environment. For example, the noise may include but is not limited to a television sound, a car horn sound, a dog barking sound, a clapping sound, and the like.

It should be noted that the audio captured by the audio capturing module 311 may include a sound bed in addition to the audio track of each audio object. The sound bed may indicate an audio signal of a sound field, and may be used to carry an ambient sound.

The spatial position determining module 322 may be configured to determine a spatial position of the audio object and a display position of the audio object in the video image. The spatial position of the audio object may be used to describe a position of the audio object in the audio relative to a listener or the audio capturing device in a three-dimensional space. The electronic device 100 may determine, based on the spatial position of the audio object, a position at which an audio signal of the audio object should be played in the three-dimensional space, so that the listener can experience corresponding spatial perception when listening to the audio. In other words, the spatial position of the audio object may indicate a position of the audio object that may be recognized by the listener when the audio is played. The electronic device 100 may change the spatial position of the audio object by editing the audio signal of the audio object. When the spatial position of the audio object changes, the listener may distinguish through auditory perception that a sound of the audio object is made from a spatial position obtained after the change.

In some embodiments, in a spatial audio-based audio technology, the spatial position of the audio object may indicate a position of the audio object (or referred to as a sound source) in a virtual three-dimensional space. The audio object may be freely placed at any position in the virtual three-dimensional space, and may further move along a preset track. The spatial position of the audio object may also be referred to as an audio object position or another name.

The spatial position of the audio object may be indicated by spatial coordinates. The spatial position determining module 322 may establish a spatial coordinate system, and describe a relative position relationship between the audio object and the listener by using spatial coordinates of the audio object and spatial coordinates of the listener. The spatial coordinate system may be a three-dimensional coordinate system, and may represent a virtual three-dimensional space. An origin of the spatial coordinate system and a method for establishing the spatial coordinate system are not limited in embodiments of this application. The spatial coordinates of the listener may be, for example, coordinates of a position of the electronic device 100, or coordinates of a position of a headset connected to the electronic device 100. The spatial coordinates of the listener are not limited in embodiments of this application.

In a possible implementation, the spatial position determining module 322 may process the audio (for example, perform analog-to-digital conversion or Fourier transform), to obtain a spectral feature of each sound signal. The spatial position determining module 322 may determine the spatial position of the audio object based on the spectral feature. The relative position relationship between the audio object and the listener may change. The spatial position determining module 322 may determine the spatial position of the audio object in real time. The spatial position determining module 322 may further determine a spatial position of each audio object by using another positioning algorithm. This is not limited in embodiments of this application.

The spatial position determining module 322 may determine the display position of the audio object in the video image based on the spatial position of the audio object and the video image. In a possible implementation, the spatial position determining module 322 may recognize and track one or more objects in the video image by using an image processing algorithm. The spatial position determining module 322 determines, based on a type of the target, a position of the target, and the spatial position of the audio object in the video image, which target in the video image makes various sounds in the environment, to determine an audio object corresponding to the target in the video image. For example, a spatial position of an audio object 1 indicates that the audio object 1 is in the left front of the listener. The video image includes a target 1, and the target 1 is on the left side of the video image. In addition, a sound of the audio object 1 is a male voice. The target 1 is a male correspondingly. In this case, the spatial position determining module 322 may determine that the target 1 in the video image is the audio object 1, so that the target 1 may be associated with an audio track of the audio object 1.

The determining the display position of the audio object in the image may help the user intuitively perform an audio editing operation on one or more audio objects in the video image. Then, the electronic device 100 may process a corresponding audio track based on an audio object selected by the user for editing on the video image, to meet an audio editing requirement of the user. The audio editing operation is simple and intuitive, so that user experience of audio and video recording and audio editing can be improved.

Optionally, when determining the display position of the audio object in the video image, the spatial position determining module 322 may further correct the spatial position of the audio object based on the video image, to obtain a more accurate spatial position of the audio object.

In some embodiments, a shooting angle of view of a camera is limited, and the video image may include only a part of audio objects. For example, when only the rear-facing camera is started for image shooting, the electronic device 100 may be able to shoot only an audio object within a specific range in front of the user, and cannot shoot an audio object behind the user. When determining that the audio object is not displayed in the video image, the electronic device 100 may display, in a user interface, a control indicating the audio object that is not shot. In this way, the user can perform audio editing on the audio object that is shot, and may further perform audio editing on the audio object that is not shot.

The foregoing methods for determining the spatial position of the audio object and the display position of the audio object in the video image are merely example descriptions in this application, and should not constitute a limitation on this application. The spatial position determining module 322 may alternatively determine the spatial position of the audio object and the display position of the audio object in the video image by using another method.

The sound field information determining module 323 may be configured to determine sound field environment information. The sound field environment information may include one or more of the following: reverberation time, a room type, a room size, or a room reflection material. In a possible implementation, the sound field information determining module 323 may perform joint modeling based on the audio and the video image, to determine the sound field environment information in an audio and video recording scenario. A method for determining the sound field environment information is not limited in embodiments of this application.

The information extraction unit 320 may send content such as the audio track and the spatial position of the audio object, and the sound field environment information to the editing unit 330.

The editing unit 330 may include an audio object editing module 331, a sound field environment editing module 332, and an audio mixing module 333.

The audio object editing module 331 may be configured to edit the audio track of the audio object based on an editing operation performed by the user on the audio object in the user interface. The editing operation on the audio object may include but is not limited to: a volume adjustment operation, a timbre adjustment operation, a spatial position movement operation, or the like. The timbre adjustment may include character timbre adjustment and instrument timbre adjustment. This may help the user beautify a human voice or an instrument sound, and increase fun of audio editing by the user. A method for editing the audio track to achieve an effect corresponding to the editing operation is not limited in embodiments of this application.

In some embodiments, the audio object editing module 331 may include modules configured to edit the audio object, for example, a volume adjustment module 331A, a timbre adjustment module 331B, and a spatial position adjustment module 331C. The volume adjustment module 331A may be configured to adjust volume of the audio object. The timbre adjustment module 331B may be configured to adjust a timbre of the audio object. The spatial position adjustment module 331C may be configured to adjust the spatial position of the audio object.

The sound field environment editing module 332 may be configured to adjust the sound field environment information based on an editing operation performed by the user on the sound field in the user interface, to achieve an effect of adjusting the sound field. When the sound field environment information is adjusted, the sound bed in the audio changes accordingly. For example, when a room in which the sound field is located is a theater, the user may change the room type from the theater to a recording studio. In this way, even if a real environment in which the user is located is not the recording studio, the user can still hear a sound effect that may be heard in the recording studio, to achieve immersive experience of "time travel".

In some embodiments, the sound field environment editing module 332 may include modules configured to edit the sound field, for example, a sound field strength adjustment module 332A and a sound field switching module 332B. The sound field strength adjustment module 332A may be configured to adjust sound intensity in the sound field. The sound field switching module 332B may be configured to adjust a sound field type (which may also be referred to as a room type), for example, switch the sound field type from the theater to the recording studio.

The audio mixing module 333 may be configured to: perform audio mixing, and integrate sounds from a plurality of sources (namely, the sound bed and a plurality of audio tracks in the audio) into a stereo audio track or a mono audio track. During audio mixing, the electronic device 100 may adjust and balance relative levels (namely, volume) of audio tracks and the sound bed, and may perform various audio processing such as equalization and compression on a single audio track or an audio track group. In some embodiments, the electronic device 100 may provide a professional audio mixing mode, an intelligent audio mixing mode, and a template audio mixing mode for the user to perform an audio mixing editing operation.

In the professional audio mixing mode, the electronic device 100 may provide an editing capability of one or more parameters such as the sound field environment information, an equalizer (equalizer, EQ), a compressor, and a delayer. The audio mixing module 333 may perform audio mixing based on the audio mixing editing operation of the user. In this way, the user can customize and adjust the parameters such as the sound field environment information, the EQ, the compressor, and the delayer, to configure an audio mixing effect that meets a personal requirement.

In the intelligent audio mixing mode, the audio mixing module 333 may comprehensively process the audio track and the spatial position of the audio object, and the sound field environment information by using an audio mixing algorithm, to generate matched sound field environment information, EQ parameter, compressor parameter, delayer parameter, and the like, to beautify the sound effect. In this way, the user can implement one-tap intelligent audio mixing by using an intelligent audio mixing control corresponding to the intelligent audio mixing mode.

In the template audio mixing mode, the electronic device 100 may provide a plurality of audio mixing templates for the user to select. For example, the audio mixing templates may include but are not limited to a lush sound template and an ethereal sound template. The lush sound template may focus on adjusting the audio object, so that the sound effect of the audio object is more beautiful, clearer, and more stereoscopic. The ethereal sound template may focus on adjusting the sound field, so that the sound field is wider. The audio mixing module 333 may perform corresponding audio mixing based on the audio mixing template selected by the user. Specific content of the audio mixing template is not limited in embodiments of this application.

Optionally, the audio mixing module 333 may be further configured to recommend one or more audio mixing templates based on the audio.

It should be noted that the audio mixing module 333 may receive the sound bed and the audio track in the audio, and perform audio mixing based on the received sound bed and audio track. The sound bed received by the audio mixing module 333 may be a sound bed edited by the sound field environment editing module 332. The audio track received by the audio mixing module 333 may be an audio track edited by the audio object editing module 331.

In some embodiments, the audio mixing module 333 may output an audio file. The audio file may include an audio signal and metadata. The output audio signal may include an audio signal of each audio object and an audio signal of the sound field. The output metadata may be used to describe the audio signal (for example, describe the audio track corresponding to the audio object, the spatial position of the audio object, the volume of the audio object, the timbre of the audio object, the reverberation time, the room type, the room size, or the room reflection material), so that the audio signal can be rendered with a corresponding spatial audio effect.

In some embodiments, the audio mixing module 333 may output audio files in a plurality of formats. For example, the format of the audio file may include but is not limited to stereo, surround sound, three-dimensional sound, or the like. The audio files in the different formats may be played on different audio playing devices. For example, an audio file in the stereo format may be played in a headset or an audio equipment array including two audio equipments. For another example, an audio file in a 5.1-channel surround-sound format may be played in an audio equipment array including five audio equipments (two front audio equipments on the left and right, two rear audio equipments on the left and right, and one central audio equipment) and one subwoofer. An implementation method for outputting the audio files in the plurality of formats is not limited in embodiments of this application.

The editing unit 330 may include another module in addition to the audio mixing module 333, to output the audio file.

The editing unit 330 may send the audio file to the rendering unit 340.

The rendering unit 340 may recognize a type of an audio playing device, and render, based on a corresponding audio file, audio data suitable for playing by the audio playing device. The audio playing device may include the electronic device 100. For example, the electronic device 100 is a stereo speaker device like a mobile phone. The electronic device 100 may play the audio through a speaker included in the electronic device 100. The audio playing device may further include a device (or referred to as a peripheral device) externally connected to the electronic device 100. For example, the peripheral device may include a headset (a wired headset or a wireless headset), an audio equipment, or the like. The electronic device 100 may send rendered audio data to the peripheral device, to play the audio by using the peripheral device.

For example, when recognizing that the audio playing device is a headset or a stereo speaker device, the rendering unit 340 may perform binaural rendering. The headset or the stereo speaker device performs audio playing based on the audio data on which the binaural rendering is performed, so that a listener can experience spatial perception and orientation perception of the sound.

Optionally, when the audio playing device is the headset, the electronic device 100 may further provide a head tracking function, a reverberation model matching function, and a personalized playback function. The head tracking function may indicate that a head movement of the user is detected by using the headset, and the spatial position of the audio object is adjusted based on the head movement of the user, so that orientation perception of the sound perceived by the user can change with the head movement of the user. The personalized playback function may include personalized HRTF rendering. The electronic device 100 may provide a plurality of HRTF templates for the user to select.

When recognizing that the audio playing device is a speaker array or an audio equipment array, the rendering unit 340 may perform speaker rendering. For example, a scenario corresponding to the speaker array or the audio equipment array may include a scenario in which an in-vehicle infotainment plays the audio, a scenario in which a large-screen device plays the audio, a scenario in which a home theater plays the audio, or the like. In a possible implementation, the rendering unit 340 may implement speaker rendering by using a method like a vector base amplitude panning (vector base amplitude panning, VBAP) technology.

Specific implementation methods of binaural rendering and speaker rendering are not limited in embodiments of this application.

In some embodiments, the electronic device 100 may perform audio rendering in real time in the audio and video recording scenario, so that the audio playing device can play the audio in real time. For example, the electronic device 100 is connected to a listening device or a headset. During video shooting, the electronic device 100 may send, in real time, audio data obtained through rendering to the listening device or the headset. In this way, the user can listen to, in real time by using the listening device or the headset, an audio editing effect of the user.

The codec unit 350 may be configured to encode the audio file, so that the electronic device 100 sends an encoded audio file to another device. The codec unit 350 may be further configured to decode the encoded audio file received by the electronic device 100, so that the electronic device 100 performs audio playing by using the decoded audio file.

The codec unit 350 encodes the audio file, to reduce information redundancy and improve efficiency of transmitting the audio file by the electronic device 100.

The encoding performed by the codec unit 350 on the audio file may include one or more of the following: channel encoding, audio object encoding, HOA encoding, metadata encoding, or the like. The decoding performed by the codec unit 350 on the audio file may include one or more of the following: channel decoding, audio object decoding, HOA decoding, metadata decoding, or the like.

The codec unit 350 may encode a channel signal (that is, perform channel encoding), encode an audio object signal (that is, perform audio object encoding), and encode an HOA signal (that is, perform HOA encoding) by using a general full-rate audio encoding tool or a lossless audio encoding tool. The channel information may indicate a channel-based audio signal. The audio object audio signal may be an audio object-based audio signal. The HOA signal may be an HOA-based audio signal. The general full-rate audio encoding tool may be used to perform one or more of the following processing on the audio signal: transient detection, window type determining, time-frequency transformation, frequency-domain noise shaping, time-domain noise shaping, bandwidth extension, downmixing, neural network encoding, quantization, interval coding, and the like, to encode the channel signal, the audio object signal, and the HOA signal into bitstreams. The bitstream may be an encoded representation of the audio signal.

The codec unit 350 may encode metadata by using a metadata encoding tool, to encode the metadata into a bitstream.

It may be understood that decoding the audio file by the codec unit 350 may be an inverse process of the foregoing encoding. The bitstreams may be respectively decoded into the channel signal, the audio object signal, the HOA signal, and the metadata through decoding. Then, the electronic device 100 may perform corresponding rendering (for example, speaker rendering or binaural rendering) on data obtained through decoding, and play the data.

FIG. 3 is merely an example description of the structure of the electronic device 100 in this application, and should not constitute a limitation on this application. It may be understood that the electronic device 100 may further include more or fewer units or modules, or combine some modules, or split some modules.

The following describes a communication system in this application.

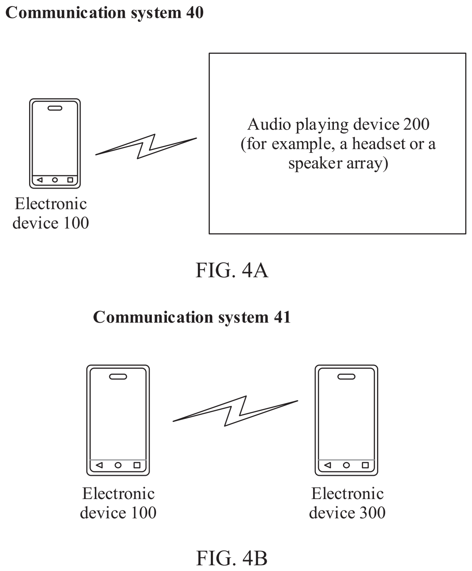

**FIG. 4A** **illustrates a diagram of an architecture of a communication system 40 according to this application.**

As shown in FIG. 4A, the communication system 40 may include an electronic device 100 and an audio playing device 200. A communication connection, for example, a wired communication connection or a wireless communication connection, is established between the electronic device 100 and the audio playing device 200. A manner of the communication connection between the electronic device 100 and the audio playing device 200 is not limited in embodiments of this application.

For a structure of the electronic device 100, refer to the descriptions of the embodiments shown in FIG. 1 to FIG. 3.

The audio playing device 200 may be configured to play an audio. For example, the audio playing device 200 may be a headset (a wireless headset or a wired headset), a speaker array, or the like. A type of the audio playing device 200 is not limited in embodiments of this application.

It may be understood that the electronic device 100 is connected to the audio playing device 200. The audio playing device 200 may be equivalent to an extension device (or referred to as a peripheral device) of the electronic device 100, and may play an audio on the electronic device 100.

In some embodiments, in a video shooting scenario, the electronic device 100 may collect a video image and an audio, and edit the audio based on an audio editing operation of a user, to obtain an audio file including an audio signal and metadata. The electronic device 100 may select an appropriate audio rendering manner (for example, binaural rendering or speaker rendering) based on the type of the audio playing device 200, to render the audio file to obtain audio data. The electronic device 100 may send the audio data to the audio playing device 200, and the audio playing device 200 performs audio playing.

The audio file rendered by the electronic device 100 may be an audio file including audio signals of all audio objects in an environment and an audio signal of a sound field. In this way, the user can listen to, in real time during video shooting, an overall playing sound effect of the captured audio after editing. Optionally, the audio file rendered by the electronic device 100 may alternatively be an audio file including an audio signal of one or more audio objects. In other words, the audio file includes an audio track of the one or more audio objects and metadata used to describe the audio track of the one or more audio objects. For example, the one or more audio objects may be audio objects selected by the user for editing. In this way, the user can listen to, in real time during video shooting, a separate sound effect obtained after the user performs audio editing on the one or more audio objects.

In some embodiments, in a video playing scenario, the electronic device 100 may obtain an audio file of a video, and render the audio file to obtain audio data. The electronic device 100 may perform audio playing based on the audio data (that is, the electronic device 100 plays the audio at a local end). Alternatively, the electronic device 100 may send the audio data to the audio playing device 200, and the audio playing device 200 performs audio playing.

In addition, in the video playing scenario, the electronic device 100 may also edit the audio based on the audio editing operation of the user, to obtain the audio file. In other words, the user may perform audio editing in real time during video recording, and may further perform secondary audio editing on a recorded video.

In some embodiments, in a video call (or video conference) scenario, the electronic device 100 may receive a video image and an audio from a call peer end. The audio received by the electronic device 100 may be rendered audio data. The electronic device 100 may perform audio playing at the local end based on the received audio data, or send the audio data to the audio playing device 200, and the audio playing device 200 performs audio playing. Alternatively, the audio received by the electronic device 100 may be an audio file including an audio signal and metadata. The electronic device 100 may render the audio file to obtain audio data, and then perform audio playing at the local end. Alternatively, the audio playing device 200 performs audio playing. In this way, the user can hear a voice of the call peer end during the video call.

In the communication system 40 shown in FIG. 4A, the audio playing device 200 mainly performs audio playing. The electronic device 100 may send the rendered audio data to the audio playing device 200.

**FIG. 4B** **illustrates a diagram of an architecture of a communication** system **41 according to this application.**

As shown in FIG. 4B, the communication system 41 may include an electronic device 100 and an electronic device 300. A communication connection may be established between the electronic device 100 and the electronic device 300. For example, the electronic device 100 and the electronic device 300 may communicate with each other through a local area network, a wide area network, or the like. A manner of the communication connection between the electronic device 100 and the electronic device 300 is not limited in embodiments of this application.

For structures of the electronic device 100 and the electronic device 300, refer to the descriptions of the embodiments shown in FIG. 1 to FIG. 3.

In some embodiments, the electronic device 100 may send a video image and an audio file to the electronic device 300. The audio file may include an audio signal (for example, an audio signal of each audio object and an audio signal of a sound field) and metadata. The electronic device 100 may perform, on the audio file, metadata encoding and one or more of the following encoding: channel encoding, audio object encoding, HOA encoding, or the like. Then, the electronic device 100 may send an encoded audio file to the electronic device 300.

The audio encoding may reduce information redundancy, to improve transmission efficiency of the audio file.

After receiving the video image and the encoded audio file, the electronic device 300 may perform decoding to obtain the audio file. Based on the received video image and audio file, the electronic device 300 may provide a function of editing an audio object and a sound field. The electronic device 300 may process the audio file based on an audio editing operation of a user, to achieve an audio editing effect desired by the user.

In other words, in addition to providing a function of editing an audio object and a sound field of an audio for the user at a local end, the electronic device 100 may send the audio file to another device, for example, the electronic device 300. In this way, the user can further edit the audio object and the sound field of the audio on the electronic device 300.

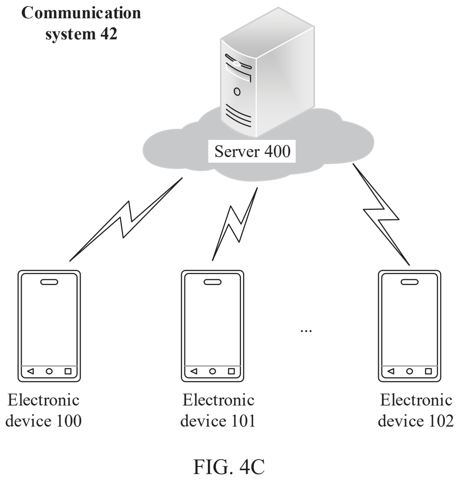

**FIG. 4C** **illustrates a diagram of an architecture of a communication system 42 according to this application.**

As shown in FIG. 4C, the communication system 42 may include a plurality of electronic devices (for example, an electronic device 100, an electronic device 101, and an electronic device 102) and a server 400. The plurality of electronic devices each may establish a communication connection to the server 400. A manner of the communication connection is not limited in embodiments of this application.

For structures of the plurality of electronic devices, refer to the descriptions of the embodiments shown in FIG. 1 to FIG. 3.

At least two of the plurality of electronic devices may make a video call or a video conference through the server 400. This application is specifically described by using a video call scenario as an example.

For example, the electronic device 100, the electronic device 101, and the electronic device 102 may access a same video call. During the video call, the electronic device 100 may send a video image and an audio of a local end to the electronic device 101 and the electronic device 102 through the server 400, and receive a video image and an audio from the electronic device 101 and a video image and an audio from the electronic device 102 through the server 400.

The audio sent by the electronic device 100 may be audio data obtained by rendering an audio file. In this way, the electronic device 101 and the electronic device 102 can play the audio after receiving the audio data of the electronic device 100. A user of the electronic device 100 may edit an audio object and/or a sound field of the audio captured by the electronic device 100. A user of the electronic device 101 and a user of the electronic device 102 may listen to a sound of the electronic device 100 (for example, a sound obtained after the user of the electronic device 100 edits the audio object and/or the sound field).

Alternatively, the audio sent by the electronic device 100 may be an audio file including an audio signal and metadata. In addition, the electronic device 100 may perform encoding (for example, channel encoding, audio object encoding, HOA encoding, or metadata encoding) on the audio file, and then send an encoded audio file to the server 400. The server 400 may directly send the encoded audio file to the electronic device 101 and the electronic device 102. Both the electronic device 101 and the electronic device 102 may perform encoding (for example, channel decoding, audio object decoding, HOA decoding, or metadata decoding) on the encoded audio file, and render audio data from the audio file obtained through decoding. Because the electronic device 101 and the electronic device 102 receive the audio file of the electronic device 100, the electronic device 101 and the electronic device 102 may provide an audio object editing function and a sound field editing function for the audio of the electronic device 100. In this way, the user of the electronic device 101 and the user of the electronic device 102 may change a heard sound of the electronic device 100. Alternatively, the server 400 may decode and render the encoded audio file sent by the electronic device 100 to obtain the audio data. The server 400 may send the audio data to the electronic device 101 and the electronic device 102, so that the electronic device 101 and the electronic device 102 play the audio.

The audio received by the electronic device 100 (for example, the audio from the electronic device 101 and the audio from the electronic device 102) may be the audio data, or may be the audio file including the audio signal and the metadata. The electronic device 100 may play the audio based on the audio data, or play the audio after rendering the audio file to obtain the audio data. The electronic device 100 may play the audio at the local end or play the audio by using an audio playing device (for example, the audio playing device 200) connected to the electronic device 100.

When the electronic device 100 receives the audio file, the electronic device 100 may edit the audio object and/or the sound field of the audio file at the local end, to generate a new audio file. The electronic device 100 may play the audio after rendering the new audio file.

In some embodiments, the user of the electronic device 100 may edit an audio object and/or a sound field of one or more call peer ends, so that all users who access the call may listen to a sound obtained after the electronic device 100 edits the audio object and/or the sound field of the one or more call peer ends. For example, in a host mode/primary control mode, the user of the electronic device 100 may be a moderator of the video call. The user of the electronic device 100 may have permission to control another user in the call, and may adjust an audio object and a sound field of a call peer end.

In a possible implementation, the electronic device 100 receives an operation of editing the audio object and/or the sound field on the electronic device 101. The electronic device 100 may generate an editing parameter based on the editing operation, and send an editing instruction to the server 400. The editing instruction may include the editing parameter. The server 400 may send the editing instruction to the electronic device 101. The electronic device 101 may edit the audio object and/or the sound field based on the editing parameter in the editing instruction, to generate an audio file. Then, the electronic device 101 may send, to a call peer end (for example, the electronic device 100 or the electronic device 102) through the server 400, the audio file or audio data obtained by rendering the audio file.

Optionally, when the server 400 receives the audio file of the electronic device 101, the server 400 may edit the audio file according to the editing instruction sent by the electronic device 100, to adjust the audio object and/or the sound field in the audio file. The server 400 may edit the audio file of the electronic device 101 into a new audio file, and send, to the electronic device 100 and the electronic device 102, the new audio file or audio data obtained by rendering the new audio file. It may be understood that the server 400 may perform encoding (for example, channel decoding, audio object decoding, HOA decoding, or metadata decoding) on the audio file before sending the audio file.

In other words, when the electronic device 100 adjusts the audio object and the sound field of the call peer end, the electronic device 100 may send an editing instruction to instruct the server 400 or an adjusted call peer end (for example, the electronic device 101 or the electronic device 102) to perform specific audio editing.

The following describes, based on the electronic device and the communication system, audio processing scenarios provided in this application.

The audio processing method provided in this application may be applied to a video recording scenario and a video call scenario, so that a user may perform, in the foregoing scenario, audio object editing, sound field editing, and audio mixing editing on an audio captured by the electronic device 100. In addition to the video recording scenario and the video call scenario, the audio processing method provided in this application may be applied to another scenario related to video image and audio capturing. This application is specifically described by using the video recording scenario and the video call scenario as examples.

### Audio editing in the video recording scenario

The video recording scenario may include the following phases: a video pre-recording phase, a video recording phase, and a phase after video recording is completed. The video pre-recording phase may be a phase after the electronic device 100 starts a camera application but before the electronic device 100 starts to shoot a video. A video image captured by the electronic device 100 in the video pre-recording phase is not stored as a video. The video recording phase may be a phase from starting to shoot a video by the electronic device 100 to ending video shooting. The phase after video recording is completed may be a phase after the electronic device 100 ends video shooting. After the video recording is completed, the user may view, in a gallery application of the electronic device 100, the video shot by the electronic device 100.

In each of the video pre-recording phase, the video recording phase, and the phase after video recording is completed, the user may perform audio editing on an audio. Audio editing may include but is not limited to audio object editing, sound field editing, and audio mixing editing.

### Video pre-recording phase

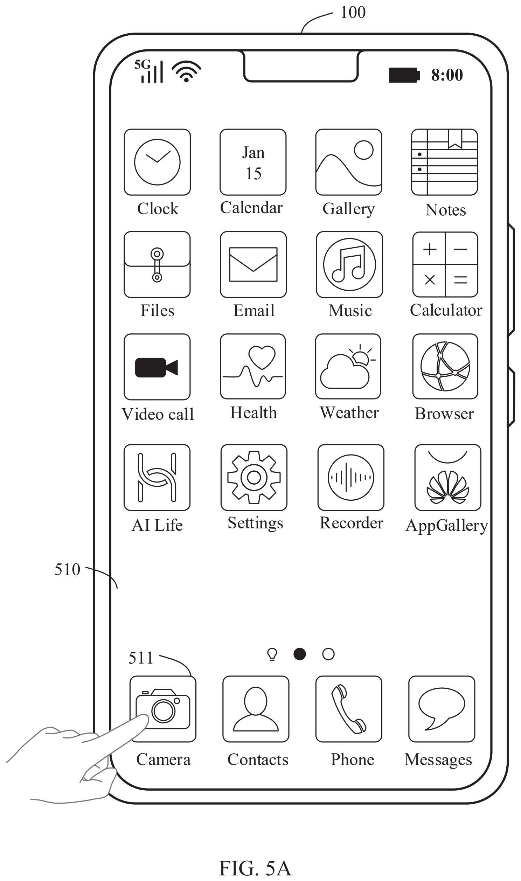

**FIG. 5A to FIG. 5M** **illustrate diagrams of some audio editing scenarios.**

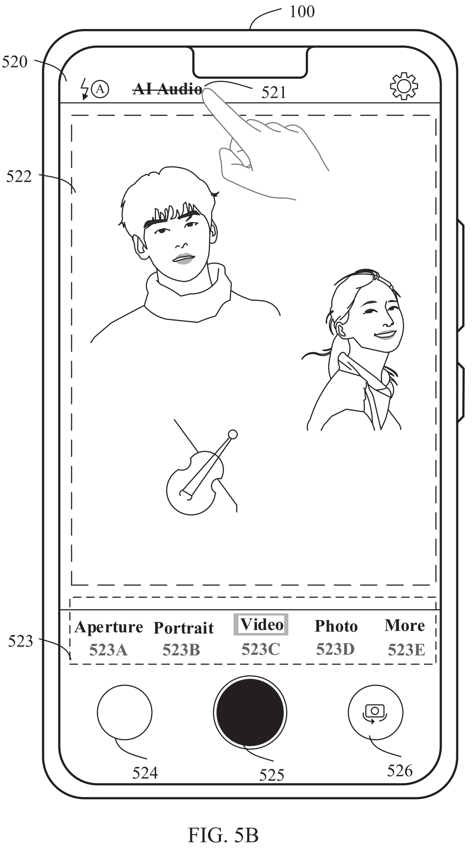

As shown in FIG. 5A, the electronic device 100 may display a user interface 510. The user interface 510 may include one or more application icons, for example, a camera application icon 511. The application icon may be used to trigger the electronic device 100 to start a corresponding application. In response to an operation on the camera application icon 511 shown in FIG. 5A, the electronic device 100 may start a camera application, and display a user interface 520 shown in FIG. 5B. When the camera application is started, the electronic device 100 may start up a camera, and display, on a screen, an image captured by the camera. In addition, when the camera application is started, the electronic device 100 may further start up a microphone to capture an audio. Specific time at which the camera and the camera application are started is not limited in embodiments of this application.

As shown in FIG. 5B, the user interface 520 may include one or more of an audio editing control 521, a preview area 522, a camera mode option 523, a gallery shortcut control 524, a shutter control 525, and/or a camera flip control 526.

The audio editing control 521 may be used to enable or disable an audio editing function of the electronic device 100. The audio editing function may be a function that allows a user to edit an audio object and a sound field of an audio. When the audio editing function is disabled, a display style of the audio editing control 521 may be " 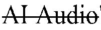 ". When the audio editing function is disabled, in response to an operation on the audio editing control 521, the audio editing function may be enabled on the electronic device 100.

The preview area 522 may be used to display a preview image. The preview image is an image captured by the electronic device 100 in real time by using the camera. The electronic device may refresh display content in the preview area 522 in real time, so that the user previews an image currently captured by the camera. As shown in the preview area 522 in FIG. 5B, content currently shot by the electronic device 100 includes a boy, a girl, and a violin.

One or more image shooting mode options may be displayed in the camera mode option 523. The one or more image shooting mode options may include an aperture mode option 523A, a portrait mode option 523B, a video mode option 523C, a photo mode option 523D, and a more option 523E. The one or more image shooting mode options may be represented as text information, for example, "Aperture", "Portrait", "Video", "Photo", and "More", in an interface. In addition, the one or more image shooting options may alternatively be represented as icons or interactive elements (interactive elements, IEs) in other forms in the interface. When detecting a user operation performed on an image shooting mode option, the electronic device 100 may start an image shooting mode selected by the user, and display the image shooting mode option as being in a selected state. As shown in FIG. 5B, the video mode option 523C is in a selected state. Not limited to that shown in FIG. 5B, the camera mode option 523 may include more or fewer image shooting mode options. The user may browse other image shooting mode options by sliding left/right in the camera mode option 523.

The gallery shortcut control 524 may be used to start a gallery application. In response to a user operation on the gallery shortcut control 524, for example, a touch operation, the electronic device 100 may start the gallery application. In this way, the user can conveniently view a shot photo and video without exiting the camera application and then starting the gallery application. The gallery application is an image management application on an electronic device like a smartphone or a tablet computer, and may also be referred to as "Album". A name of the application is not limited in embodiments. The gallery application may support the user in performing various operations on an image stored on the electronic device 100, for example, operations such as browsing, editing, deleting, and selecting.

The shutter control 525 may be configured to listen to a user operation that triggers photographing or video recording. For example, when the video mode option 523C is in the selected state shown in FIG. 5B, in response to an operation on the shutter control 525, the electronic device 100 may start to shoot a video, and enter a video recording phase.

The camera flip control 526 may be configured to listen to a user operation that triggers flipping of the camera. The electronic device 100 may detect a user operation performed on the camera flip control 526, for example, a touch operation. In response to the operation, the electronic device 100 may flip a camera used for image shooting, for example, switch a rear-facing camera to a front-facing camera, or switch a front-facing camera to a rear-facing camera.

As shown in FIG. 5B, when the audio editing control 521 is displayed in a display style of a disabled state, in response to an operation (for example, a tap operation) on the audio editing control 521, the audio editing function may be enabled on the electronic device 100, and a user interface 530 shown in FIG. 5C is displayed.

As shown in FIG. 5C, when the audio editing function is enabled, the display style of the audio editing control 521 may be "AI Audio". When the audio editing function is enabled, in response to an operation on the audio editing control 521, the audio editing function may be disabled on the electronic device 100. The display style of the audio editing control 521 is not limited in embodiments of this application. Optionally, the electronic device 100 may not require the user to manually enable the audio editing function. For example, the audio editing function may be always enabled.

The user interface 530 may include the preview area 522. The electronic device 100 may mark a shot target in the preview area 522, and provide a volume bar and a mute control that correspond to the target. For example, the electronic device 100 may determine three targets, namely, three audio objects (which may be referred to as audio objects for short): an audio object 1, an audio object 2, and an audio object 3, in an image in the preview area 522.

The electronic device 100 may display, in the user interface 530, a mark box 531, a volume bar 531A, and a mute control 531B that are associated with the audio object 1, a mark box 532, a volume bar 532A, and a mute control 532B that are associated with the audio object 2, and a mark box 533, a volume bar 533A, and a mute control 533B that are associated with the audio object 3.

The mark box 531 may be used to circle the audio object 1, to indicate an object represented by the audio object 1 to the user. For example, the audio object 1 is a boy currently shot by the electronic device 100. The volume bar 531A may be used to adjust volume of the audio object 1. The mute control 531B may be used to mute the audio object 1 (that is, adjust the volume of the audio object 1 to 0).

The mark box 532 may be used to circle the audio object 2, to indicate an object represented by the audio object 2 to the user. For example, the audio object 2 is a girl currently shot by the electronic device 100. The volume bar 532A may be used to adjust volume of the audio object 2. The mute control 532B may be used to mute the audio object 2 (that is, adjust the volume of the audio object 2 to 0).

The mark box 533 may be used to circle the audio object 3, to indicate an object represented by the audio object 3 to the user. For example, the audio object 3 is a violin currently shot by the electronic device 100. The volume bar 533A may be used to adjust volume of the audio object 3. The mute control 533B may be used to mute the audio object 3 (that is, adjust the volume of the audio object 3 to 0).

The volume bar and the mute control that are associated with each audio object may be conveniently used to intuitively and quickly adjust the volume of the audio object. For example, the user may quickly enhance a human voice or mute the audio object.

The user interface 530 may further include an audio object control 534, a sound field control 535, and an audio mixing control 536.

The audio object control 534 may be used to: select an audio object, and edit the audio object, for example, adjust a timbre of the audio object.

The sound field control 535 may be used to edit a sound field, so that the user adjusts sound field environment information.

The audio mixing control 536 may be used to adjust an audio mixing parameter.

It should be noted that when the audio editing function is enabled, the electronic device 100 may perform audio object separation on the captured audio to obtain audio tracks of different audio objects. The electronic device 100 may further determine a spatial position of each audio object and a display position in a video image (namely, an image displayed in the preview area 522). In this way, the electronic device 100 can determine an audio track of the audio object 1, an audio track of the audio object 2, and an audio track of the audio object 3 shown in FIG. 5C. When detecting an audio editing operation performed by the user on an audio object, the electronic device 100 may edit an audio track of the audio object and description information of the audio track of the audio object in metadata, to adjust a parameter like volume, a timbre, or a spatial position of the audio object.

The electronic device 100 may further determine a sound bed (namely, an audio signal of the sound field) and sound field environment information. When detecting an audio editing operation performed by the user on the sound field, the electronic device 100 may edit the sound bed and description information of the sound field (namely, the sound field environment information) in the metadata, to adjust a parameter like reverberation time, a room type, a room size, or a room reflection material of the sound field.

In response to an upward sliding operation on the volume bar 531A shown in FIG. 5C, the electronic device 100 may move a slider on the volume bar 531A upward, to increase the volume of the audio object 1. The electronic device 100 may edit the audio track of the audio object 1 and description information of the audio track of the audio object 1 in the metadata, to increase the volume of the audio object 1. In this way, the volume of the audio object 1 increases in an overall playing sound effect.

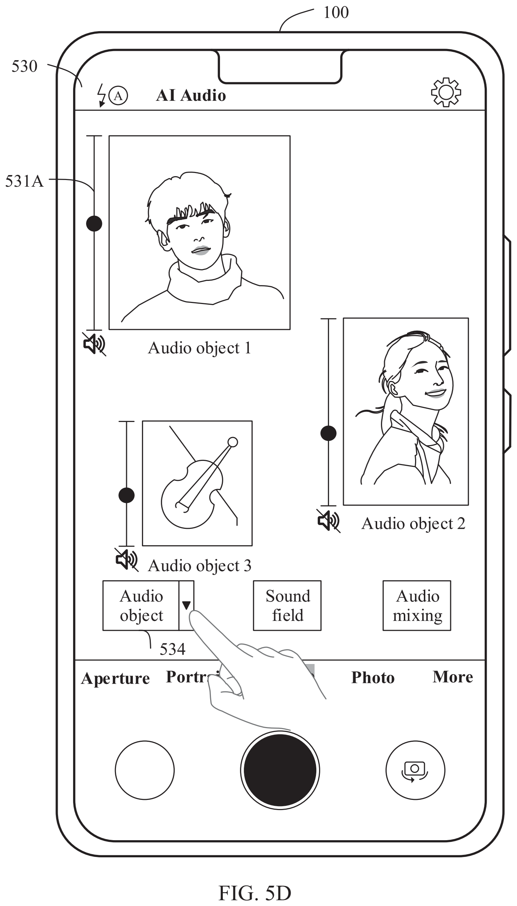

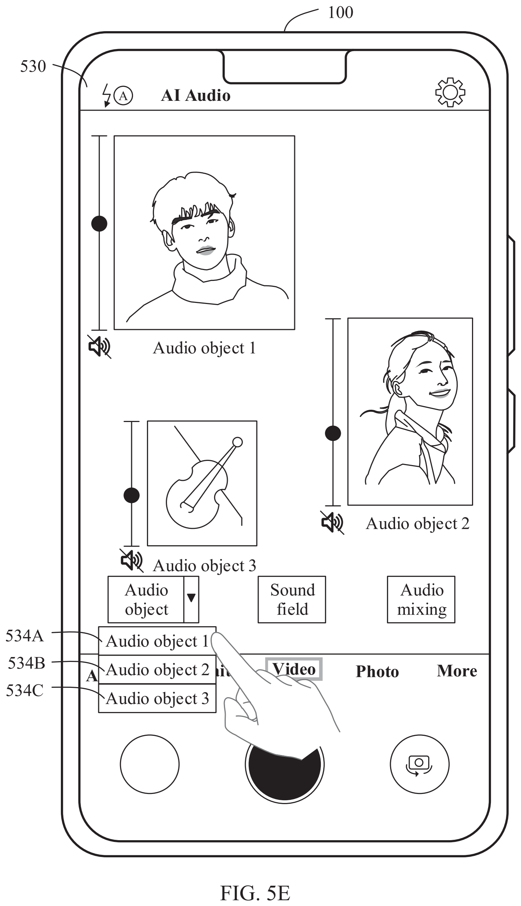

A position of the slider on the volume bar 531A shown in FIG. 5D is higher than a position of the slider on the volume bar 531A shown in FIG. 5C. In response to an operation on the audio object control 534 shown in FIG. 5D, the electronic device 100 may display an audio object 1 option 534A, an audio object 2 option 534B, and an audio object 3 option 534C shown in FIG. 5E.

As shown in FIG. 5E, the audio object 1 option 534A, the audio object 2 option 534B, and the audio object 3 option 534C may be used to select the audio object 1, the audio object 2, and the audio object 3 respectively, to edit a selected audio object. In response to an operation on the audio object 1 option 534A shown in FIG. 5E, the electronic device 100 may display a user interface 540 shown in FIG. 5F.

As shown in FIG. 5F, the user interface 540 may include the audio object control 534 and an audio object editing box 541.

Text content "Audio object 1" may be displayed on the audio object control 534, to indicate that the audio object 1 is currently in a selected state, and an object on which audio object editing is performed based on the audio object editing box 541 is the audio object 1.

The audio object editing box 541 may include a plurality of timbre options, so that the user may adjust a timbre of the audio object to a timbre corresponding to a selected timbre option. For example, the timbre options may include a girl timbre option, a boy timbre option 541A, an angel timbre option, an elf timbre option, and the like. In a possible implementation, the timbre option may correspond to a preset timbre adjustment parameter. The timbre adjustment parameter may be used to adjust the timbre of the audio object to the timbre corresponding to the timbre option. For example, the electronic device 100 adjusts the timbre of the audio object based on a timbre adjustment parameter corresponding to the boy timbre option 541A, enabling the timbre of the audio object to perceptually resemble a boy voice.

The audio object editing box 541 may further include an OK control 541B and a cancel control 541C. The OK control 541B may be used to trigger the electronic device 100 to adjust the timbre of the audio object 1 based on the selected timbre option in the audio object editing box 541. The cancel control 541C may be used to cancel editing of the audio object 1.

In addition to the timbre option, the audio object editing box 541 may include more controls used to edit other parameters of the audio object 1. For example, the audio object editing box 541 may include a control used to adjust the volume of the audio object 1, a control used to adjust a spatial position of the audio object 1, and the like.

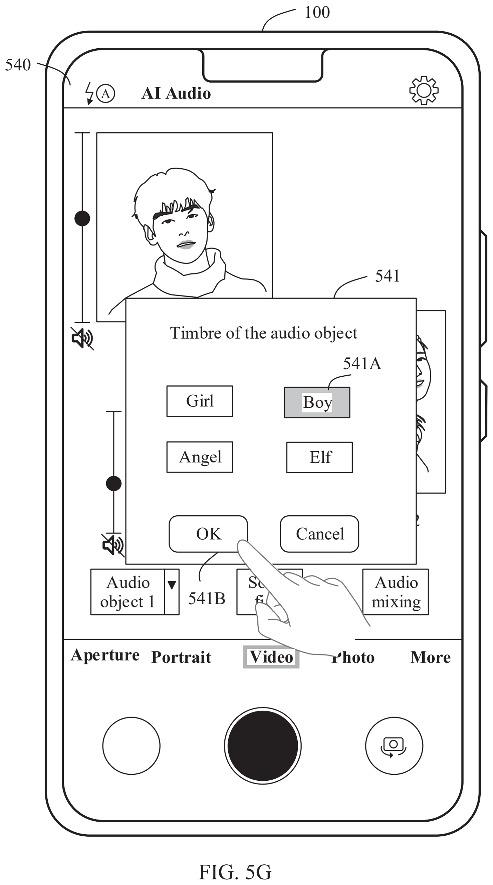

In response to an operation on the boy timbre option 541A shown in FIG. 5F, the electronic device 100 may display the boy timbre option 541A as being in a selected state (for example, a display color is darker) shown in FIG. 5G.

As shown in FIG. 5G, when the boy timbre option 541A is in the selected state, in response to an operation on the OK control 541B, the electronic device 100 may adjust the timbre of the audio object 1 to the timbre corresponding to the boy timbre option 541A, enabling the timbre of the audio object 1 to perceptually resemble a boy voice.

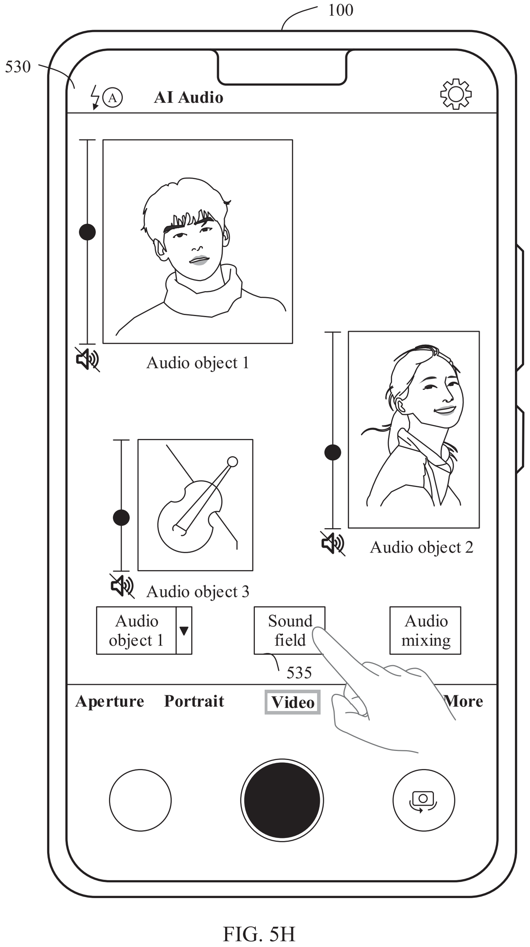

As shown in FIG. 5H, in response to an operation on the sound field control 535, the electronic device 100 may display a user interface 550 shown in FIG. 5I.

As shown in FIG. 5I, the user interface 550 may include a sound field editing box 551. The sound field editing box 551 may include a plurality of room type options, so that the user switches a room type of the sound field. For example, the room type option may include a conference room option 551A, a church option, a recording studio option, a living room option, a bedroom option, a theater option, or the like. In a possible implementation, the room type option may correspond to a preset sound field adjustment parameter. The sound field adjustment parameter may include one or more of the following: reverberation time, a room size, a room reflection material, or the like. The sound field adjustment parameter may be used to adjust the sound field to a sound field corresponding to the sound field option. For example, the electronic device 100 edits the sound field based on a sound field adjustment parameter corresponding to the conference room option 551A, creating an auditory experience for the user as if he or she was in a conference room listening to the audio captured by the electronic device 100.

The sound field editing box 551 may further include an OK control 551B and a cancel control 551C. The OK control 551B may be used to trigger the electronic device 100 to adjust the sound field based on a selected room type option in the sound field editing box 551. The cancel control 551C may be used to cancel editing of the sound field.

In addition to the room type option, the sound field editing box 551 may include more controls used to edit other parameters of the sound field. For example, the sound field editing box 551 may include a control used to adjust reverberation time of the sound field, a control used to adjust a room size of the sound field, a control used to adjust a room reflection material of the sound field, and the like. It may be understood that, when the room type of the sound field is selected, the electronic device 100 may obtain the preset sound field adjustment parameter (for example, the reverberation time, the room size, or the room reflection material). However, the user may still change a value of one or more of the sound field adjustment parameters as required. For example, a room size in a preset sound field adjustment parameter of the conference room is 30 m². The user may adjust the room size of the conference room to 50 m² or the like.

In response to an operation on the conference room option 551A shown in FIG. 5I, the electronic device 100 may display the conference room option 551A as being in a selected state shown in FIG. 5I. When the conference room option 551A is in the selected state, in response to an operation on the OK control 551B, the electronic device 100 may switch the sound field of the audio to a sound field corresponding to the conference room option 551A, creating an auditory experience for the user as if he or she was in the conference room listening to the audio.

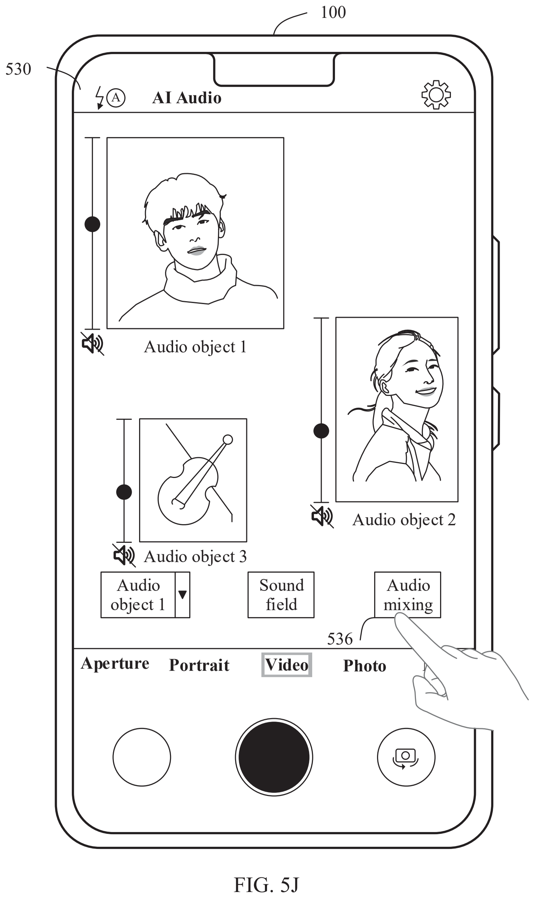

As shown in FIG. 5J, in response to an operation on the audio mixing control 536, the electronic device 100 may display a user interface 560 shown in FIG. 5K.

As shown in FIG. 5K, the user interface 560 may include an audio mixing editing box 561. The audio mixing editing box 561 may include an intelligent audio mixing control 561A, a lush sound control 561B, an ethereal sound control 561C, an OK control 561E, and a cancel control 561F.

The intelligent audio mixing control 561A may be used to trigger the electronic device 100 to enter an intelligent audio mixing mode. In the intelligent audio mixing mode, the electronic device 100 may perform intelligent volume equalization and reverberation on the audio track and the spatial position of the audio object, and the sound field environment information by using an audio mixing algorithm, to beautify a sound effect. It may be learned that the user may implement one-tap intelligent audio mixing by using the intelligent audio mixing control 561A.

It should be noted that, in the intelligent audio mixing mode, the electronic device 100 may perform audio mixing based on content separately edited by the user for the audio object and the sound field.

The lush sound control 561B may be used to trigger the electronic device 100 to perform audio mixing by using a lush sound template.

The ethereal sound control 561C may be used to trigger the electronic device 100 to perform audio mixing by using an ethereal sound template. For the lush sound template and the ethereal sound template, refer to the descriptions in the foregoing embodiments. The electronic device 100 may further include more or fewer audio mixing templates. This is not limited in embodiments of this application.

The OK control 561E may be used to trigger the electronic device 100 to perform audio mixing based on a selected control in the audio mixing editing box 561 and a set parameter. The cancel control 561F may be used to cancel editing of audio mixing.

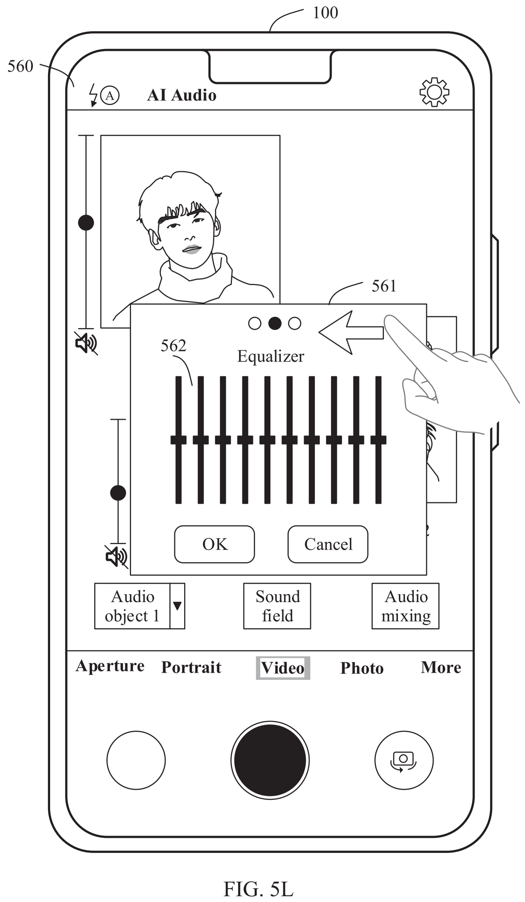

In response to a leftward sliding operation on the audio mixing editing box 561 shown in FIG. 5K, the electronic device 100 may switch content displayed in the audio mixing editing box 561. For example, the electronic device 100 may display, in the audio mixing editing box 561, an equalizer control 562 shown in FIG. 5L. The equalizer control 562 may be used to adjust an EQ of the audio.

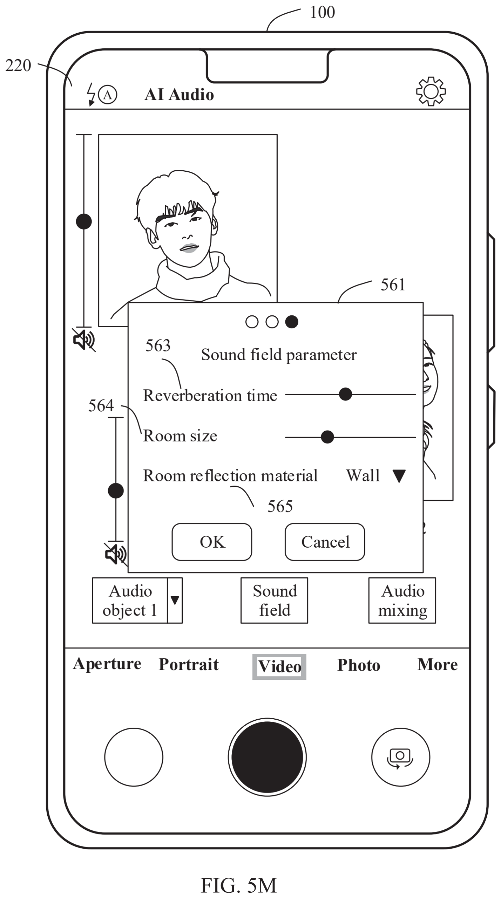

In response to a leftward sliding operation on the audio mixing editing box 561 shown in FIG. 5L, the electronic device 100 may further switch content displayed in the audio mixing editing box 561. For example, the electronic device 100 may display, in the audio mixing editing box 561, a reverberation time control 563, a room size control 564, and a room reflection material control 565 shown in FIG. 5M. The reverberation time control 563 may be used to adjust the reverberation time of the sound field. The room size control 564 may be used to adjust the room size of the sound field. The room reflection material control 565 may be used to adjust the room reflection material of the sound field. For example, the room reflection material may include but is not limited to a wall, glass, a carpet, and metal.

In addition to the content displayed in the audio mixing editing box 561 shown in FIG. 5K to FIG. 5M, the audio mixing editing box 561 may include more controls for other parameters used for audio mixing editing, for example, a control (namely, a compressor) used to adjust a compression parameter of the audio, and a control (namely, a delayer) used to adjust a delay parameter of the audio.

In some embodiments, the electronic device 100 may edit the captured audio based on editing parameters determined by an audio object editing operation, a sound field editing operation, and an audio mixing editing operation, and output, after audio mixing, an audio file including an audio signal and metadata.

It should be noted that controls used to perform audio object editing, sound field editing, and audio mixing editing are merely example descriptions in this application, and should not constitute a limitation on this application. The electronic device 100 may further provide a control of another display style, or allow the user to edit the audio object and edit the sound field by using a gesture operation or the like.

It may be learned from the scenarios shown in FIG. 5A to FIG. 5M that the user may perform audio editing before shooting a video, for example, mute an unwanted audio object, perform human voice enhancement on some important audio objects, or adjust a sound field. In this way, when entering a video recording phase, the electronic device 100 can edit, based on an editing parameter determined based on the audio editing operation in the video pre-recording phase, an audio captured in the video recording phase, so that the recorded audio meets a user requirement.

### Video recording phase

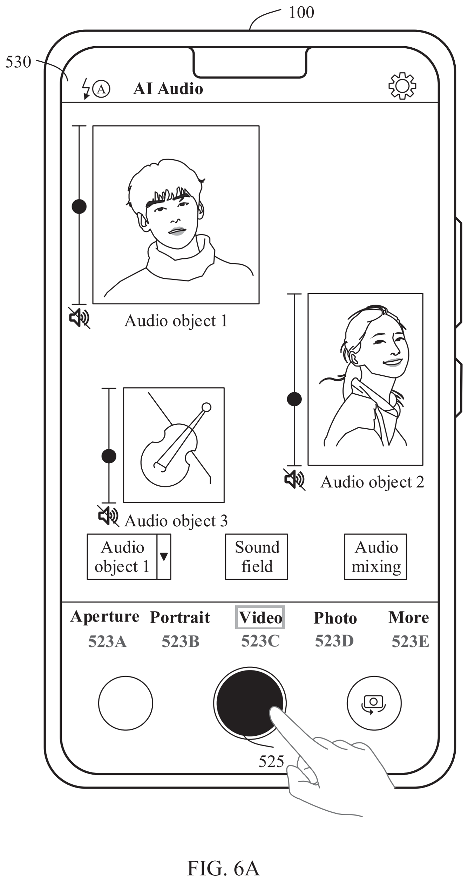

**FIG. 6A to FIG. 6G** **illustrate diagrams of some other audio editing scenarios.**

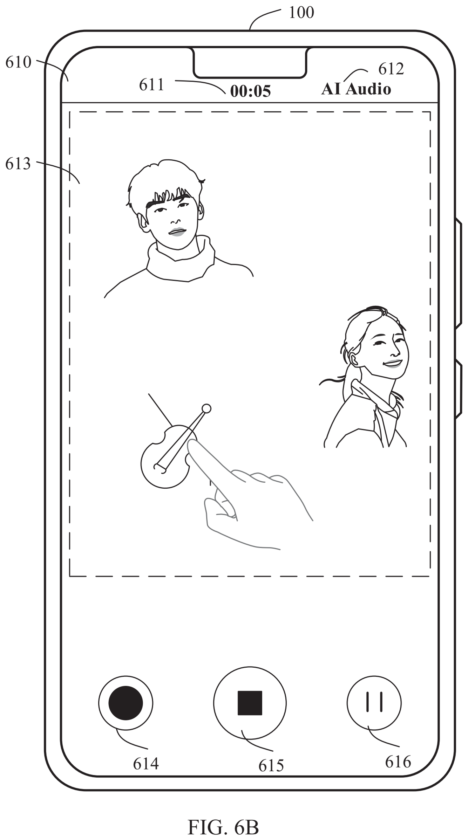

As shown in FIG. 6A, the electronic device 100 may display the user interface 530. For the user interface 530, refer to the descriptions in the foregoing embodiments. In response to an operation, for example, a tap operation, on the shutter control 525 shown in FIG. 6A, the electronic device 100 may enter a video recording phase, to start shooting a video and display a user interface 610 shown in FIG. 6B.

As shown in FIG. 6B, the user interface 610 may include time information 611, an audio editing identifier 612, an image display area 613, a photographing control 614, an end control 615, and a pause control 616.

The time information 611 may indicate duration of shooting the video.

The audio editing identifier 612 may indicate that an audio editing function is enabled.

The image display area 613 may be used to display an image captured by the electronic device 100 during video shooting.

The photographing control 614 may be used to store, into a gallery, a frame of image captured when an operation on the photographing control 614 is detected.

The end control 615 may be used to end video shooting.

The pause control 616 may be used to pause video shooting.

In some embodiments, when entering the video recording phase, the electronic device 100 may cancel displaying the foregoing controls (for example, the mark box, the volume bar, the mute control, the audio object control, the sound field control, and the audio mixing control) used for audio editing. When detecting a preset operation (for example, an operation of tapping or touching and holding an audio object in the image) performed on an image, the electronic device 100 may display the control used for audio editing again. Then, when no operation on the control used for audio editing is detected within preset duration, the electronic device 100 may hide the control used for audio editing again. This may reduce a case in which the control used for audio editing blocks a video picture and interferes with image shooting of the user in the video recording phase.

Optionally, when entering the video recording phase, the electronic device 100 may alternatively always keep the control used for audio editing displayed on a shot picture.

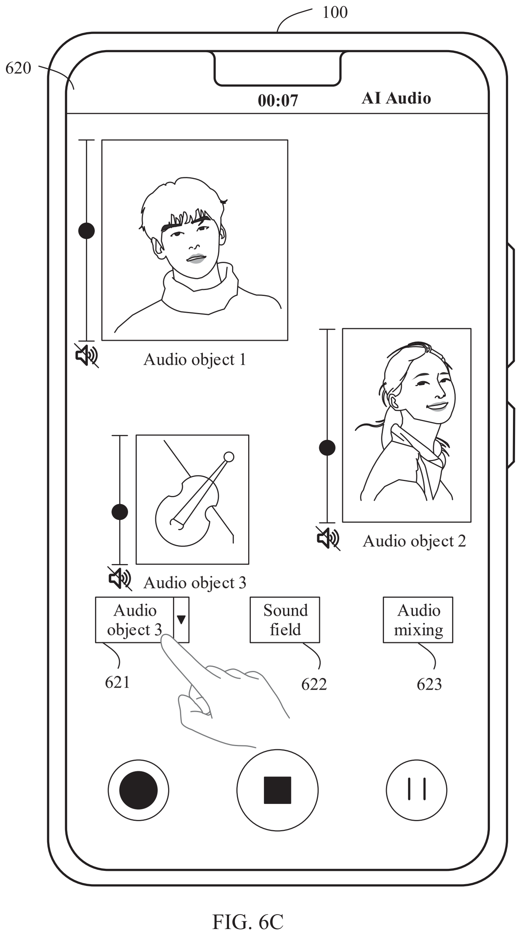

In response to an operation, for example, a tap operation, on the audio object 3 in the image shown in FIG. 6B, the electronic device 100 may display a user interface 620 shown in FIG. 6C.

As shown in FIG. 6C, controls used for audio editing: mark boxes, volume bars, and mute controls that are respectively associated with the audio object 1, the audio object 2, and the audio object 3, an audio object control 621, a sound field control 622, and an audio mixing control 623 may be displayed in the user interface 620. For the controls, refer to the foregoing descriptions of FIG. 5C.

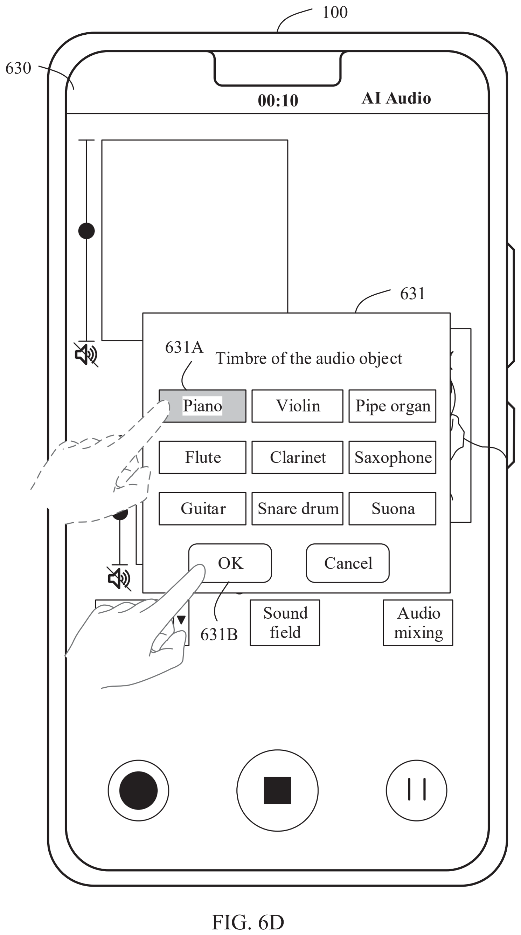

When text content "Audio object 3" shown in FIG. 6C is displayed on the audio object control 621, in response to an operation on the audio object control 621, the electronic device 100 may display a user interface 630 shown in FIG. 6D.

As shown in FIG. 6D, the user interface 630 may include an audio object editing box 631. For the audio object editing box 631, refer to the audio object editing box 541 shown in FIG. 5F. It may be learned by comparing FIG. 5F with FIG. 6D that the timbre option in the audio object editing box 541 may be used to adjust the timbre of the audio object 1, and a timbre option in the audio object editing box 631 may be used to adjust a timbre of the audio object 3. The electronic device 100 may recognize whether a type of the audio object is a person or an instrument. When recognizing that the type of the audio object is a person (for example, the audio object 1), the electronic device 100 may provide timbre options related to a human voice in the audio object editing box 541. When recognizing that the type of the audio object is an instrument (for example, the audio object 3), the electronic device 100 may provide timbre options related to an instrument sound in the audio object editing box 631.

In other words, in addition to supporting timbre adjustment on a human voice, the electronic device 100 may support timbre adjustment on an instrument sound, to implement instrument conversion. In addition to the human voice and the instrument sound, the electronic device 100 may perform timbre adjustment on another type of audio object. This is not limited in embodiments of this application.

As shown in FIG. 6D, the audio object editing box 631 may include timbre options such as a piano timbre option 631A, a flute timbre option, and a guitar timbre option, and an OK control 631B. In response to an operation on the piano timbre option 631A, the electronic device 100 may display the piano timbre option 631A as being in a selected state shown in FIG. 6D. When the piano timbre option 631A is selected, in response to an operation on the OK control 631B, the electronic device 100 may adjust the timbre of the audio object 3 to a timbre corresponding to the piano timbre option 631A, enabling the timbre of the audio object 3 to perceptually resemble a timbre of a piano.

In some embodiments, the electronic device 100 may further provide a function of combining a plurality of audio objects. In this way, the user can edit a plurality of audio objects at the same time by performing one audio editing operation.

As shown in FIG. 6E, the user interface 620 may include a mark box 624 associated with the audio object 1 and a mark box 625 associated with the audio object 2. In response to a sliding operation from an area of the mark box 624 to an area of the mark box 625 shown in FIG. 6E, the electronic device 100 may display a prompt box 626 shown in FIG. 6F.

As shown in FIG. 6F, the prompt box 626 may be used to ask the user whether to combine the audio objects. The prompt box 626 may include a text prompt "Are you sure you want to combine the audio object 1 and the audio object 2", an OK control 626A, and a cancel control 626B. The OK control 626A may be used to trigger the electronic device 100 to combine the audio object 1 and the audio object 2. The cancel control 626B may be used to cancel combining the audio object 1 and the audio object 2.

In a possible implementation, that the electronic device 100 combines a plurality of audio objects may indicate that audio tracks of the plurality of audio objects are associated with a combined audio object. When detecting an editing operation (for example, an operation of adjusting volume, an operation of adjusting a timbre, or an operation of adjusting a spatial position) on the combined audio object, the electronic device 100 may edit the audio tracks of the plurality of audio objects and description information of the audio tracks of the plurality of audio objects in metadata.

For example, the electronic device 100 separates an audio track 1 and an audio track 2 from the captured audio. The audio track 1 is the audio track of the audio object 1 shown in FIG. 6E. The audio track 2 is the audio track of the audio object 2 shown in FIG. 6E. When detecting an operation for combining the audio object 1 and the audio object 2, the electronic device 100 may combine the audio object 1 and the audio object 2 into an audio object l', and determine the audio track 1 and the audio track 2 as an audio track of the audio object 1'. In this way, the user can edit the audio object 1' to edit both the audio object 1 and the audio object 2.

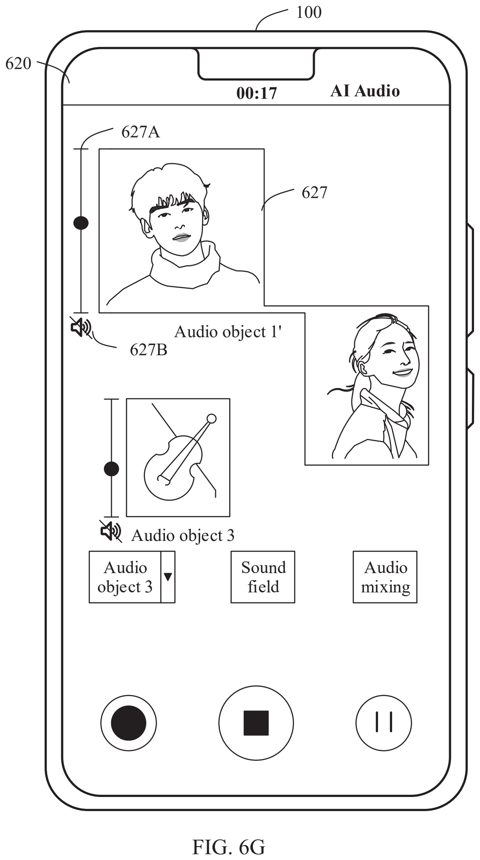

In response to an operation on the OK control 626A shown in FIG. 6F, the electronic device 100 may display the user interface 620 shown in FIG. 6G.

As shown in FIG. 6G, the user interface 620 may include a mark box 627, a volume bar 627A, and a mute control 627B that are associated with the audio object 1'. The mark box 627 may be used to circle the audio object 1 and the audio object 2 before the audio object combination in the image, to indicate an object represented by the audio object l' to the user. The volume bar 627A may be used to adjust volume of the audio object 1'. The mute control 627B may be used to mute the audio object 1'. For example, the audio object l' is a boy and a girl that are currently shot by the electronic device. In response to an operation on the mute control 627B, the electronic device 100 may edit the audio track of the audio object l' and description information of the audio track of the audio object l' in the metadata, so that the volume of the audio object l' (namely, the boy and the girl in the image shown in FIG. 6G) in the audio captured by the electronic device 100 is 0. In other words, a sound of the audio object l' cannot be heard in the video shot by the electronic device 100.

The foregoing user operation for combining audio objects is merely an example description of this application, and should not constitute a limitation on this application. Alternatively, the user may combine the audio objects in another operation manner.

It should be noted that the electronic device 100 may determine an editing parameter based on a received audio editing operation, and edit the audio by using the editing parameter. Effective time (or referred to as valid time) of the editing parameter may be determined based on time at which the audio editing operation is performed.

For example, at a moment t1 in the video recording phase, the electronic device 100 receives an operation of muting the audio object 1'. The electronic device 100 may determine, based on the operation, an editing parameter 1: the volume of the audio object 1' is 0. In this case, the electronic device 100 may perform audio editing based on the editing parameter 1, so that the audio object 1' in the video shot by the electronic device 100 remains muted from the moment t1. At a moment t2 in the video recording phase, the electronic device 100 receives an operation of increasing the volume of the audio object 1' to volume 1. The moment t2 is later than the moment t1. The electronic device 100 may determine, based on the operation, an editing parameter 2: the volume of the audio object 1' is the volume 1. In this case, the electronic device 100 may perform audio editing based on the editing parameter 2, so that the volume of the audio object 1' in the video shot by the electronic device 100 is the volume 1 from the moment t2. It may be learned that effective time of the editing parameter 1 is from the moment t1 to the moment t2. The audio object 1' in the video shot by the electronic device 100 remains muted from the moment t1 to the moment t2.

For effective time of another editing parameter, refer to the effective time of the volume-related editing parameter. For example, the user may adjust a timbre of an audio object, so that the timbre of the audio object in the video is a timbre 1 within a time period and is a timbre 2 within another time period. For another example, the user may adjust a sound field, so that the sound field of the video is a sound field 1 within a time period and is a sound field 2 within another time period.

In some embodiments, a shooting angle of view of a camera is limited, and the video image may include only a part of audio objects. The electronic device 100 may provide a control indicating an audio object that is not shot, so that the user performs audio editing on the audio object that is not shot.

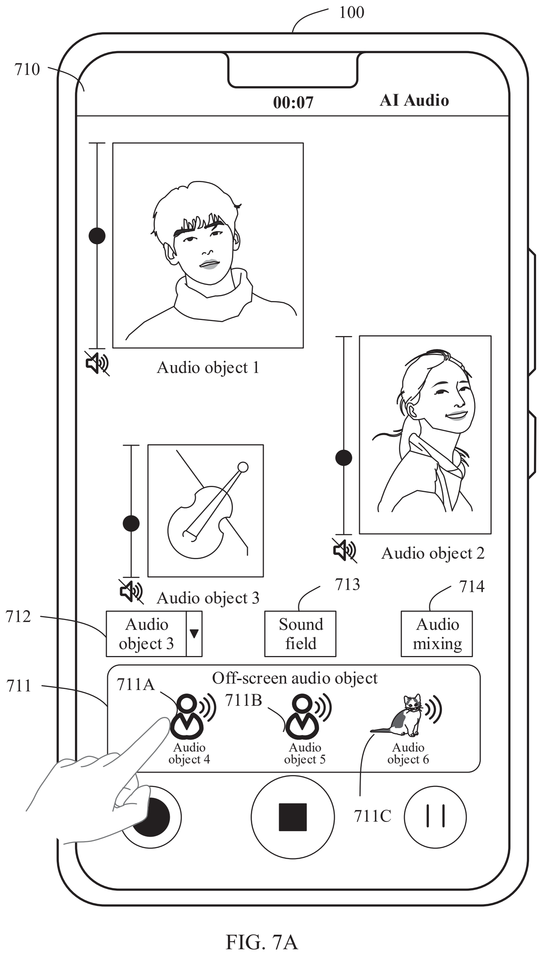

**FIG. 7A to FIG. 7E** **illustrate diagrams of some other audio editing scenarios.**

As shown in FIG. 7A, the electronic device 100 may display a user interface 710. The user interface 710 may be a video shooting interface of the electronic device 100 in the video recording phase. An image captured by the electronic device 100 may be displayed in the user interface 710. The electronic device 100 may recognize an audio object in the image, and provide a control used for audio editing. For example, the control used for audio editing may include a mark box, a volume bar, and a mute control that are associated with each audio object, an audio object control 712, a sound field control 713, and an audio mixing control 714. For the control used for audio editing, refer to the descriptions in the foregoing embodiments.

The user interface 710 may further include an off-screen audio object display area 711. The off-screen audio object display area 711 may include a control indicating an audio object that is not shot. For example, after performing audio object separation on the captured audio, the electronic device 100 determines audio tracks of the audio object 1, the audio object 2, and the audio object 3 that are shot shown in FIG. 7A, and further obtains audio tracks of an audio object 4, an audio object 5, and an audio object 6 through separation. The audio object 4, the audio object 5, and the audio object 6 are all audio objects that are not shot. The electronic device 100 may display an audio object 4 identifier 711A, an audio object 5 identifier 711B, and an audio object 6 identifier 711C in the off-screen audio object display area 711.

In some embodiments, the electronic device 100 may recognize the type of the audio object, and determine, based on the type of the audio object, a display style of the audio object that is not shot. For example, the audio object 4 and the audio object 5 are persons. Display styles of the audio object 4 identifier 711A and the audio object 5 identifier 711B may be a person icon, indicating that sounds of the audio object 4 and the audio object 5 are human voices. The audio object 6 is a cat. A display style of the audio object 6 identifier 711C may be a cat icon, indicating that a sound of the audio object 6 is a cat meowing sound. The display style of the audio object that is not shot is not limited in embodiments of this application.

In some embodiments, the electronic device 100 may determine a spatial position of the audio object that is not shot, and determine, based on the spatial position, a display position of a control indicating the audio object that is not shot in the user interface 710. For example, when a spatial position of the audio object 4 indicates that the audio object 4 is on the right side of the audio object 1, the electronic device 100 may display the audio object 4 identifier 711A on the right side of the audio object 1 in the image. In this way, the user can determine, based on a display position of an audio object identifier, an audio object corresponding to the audio object identifier, and further edit, based on a requirement, the audio object that is not shot. A display position of the audio object that is not shot is not limited in embodiments of this application.

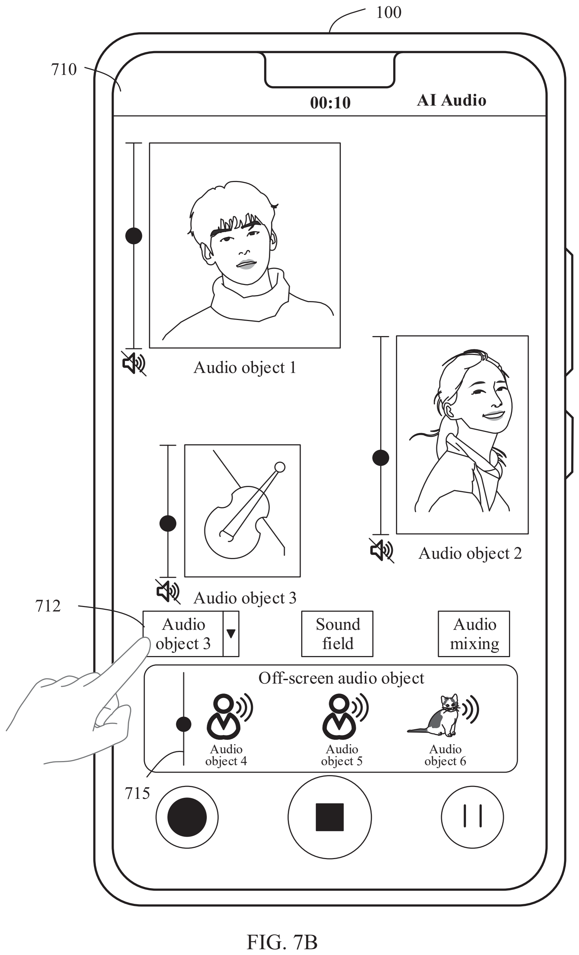

In response to an operation, for example, a tap operation, on the audio object 4 identifier 711A shown in FIG. 7A, the electronic device 100 may display a volume bar 715 shown in FIG. 7B. The volume bar 715 may be used to adjust volume of the audio object 4. When detecting an operation of adjusting volume on the volume bar 715, the electronic device 100 may edit the audio track of the audio object 4 and description information of the audio track of the audio object 4 in the metadata, to adjust the volume of the audio object 4.

As shown in FIG. 7B, in response to an operation on the audio object control 712, the electronic device 100 may display options of all audio objects, so that the user selects an audio object that needs to be edited. The all audio objects may include the audio object that is shot by the electronic device 100 and the audio object that is not shot by the electronic device 100.

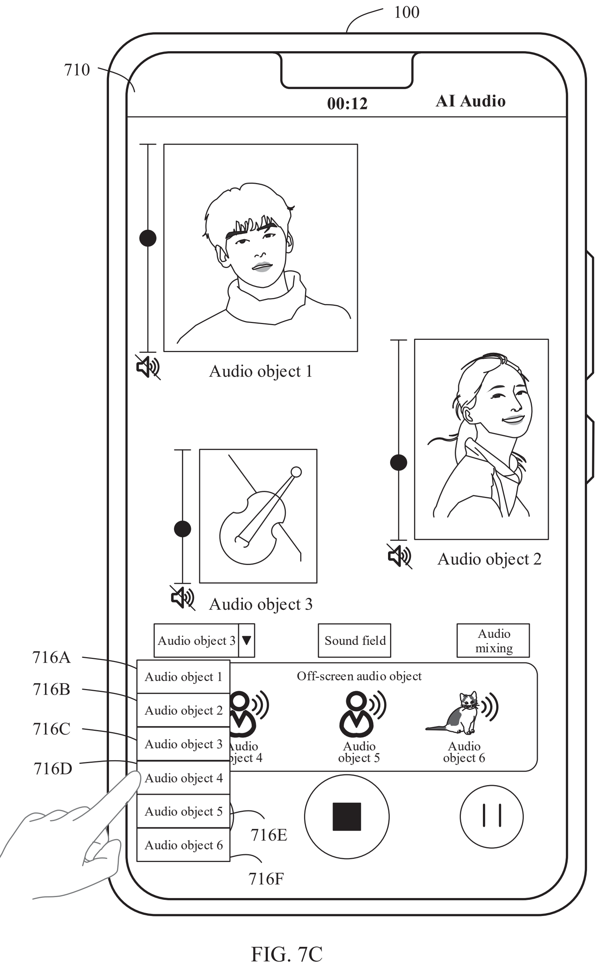

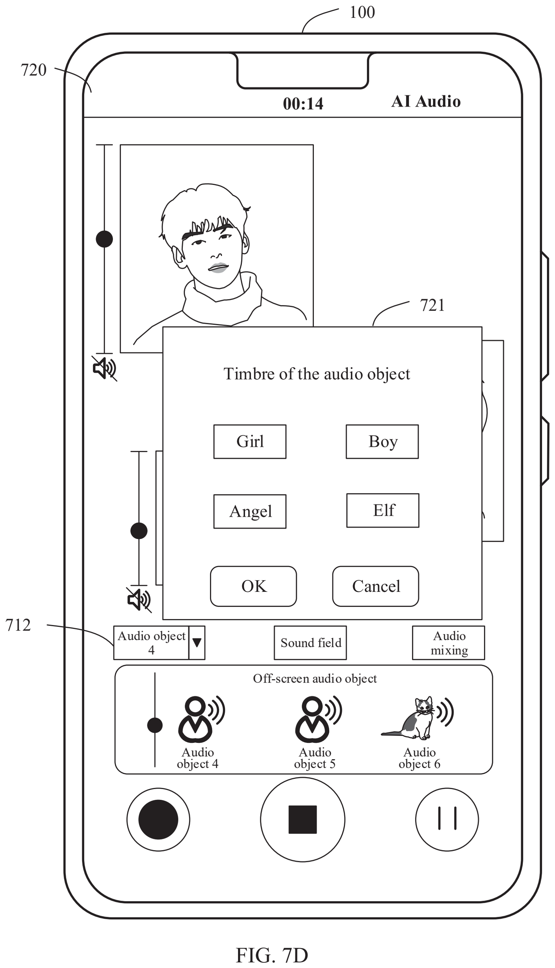

As shown in FIG. 7C, the options of all the audio objects displayed by the electronic device 100 may include an audio object 1 option 716A, an audio object 2 option 716B, an audio object 3 option 716C, an audio object 4 option 716D, an audio object 5 option 716E, and an audio object 6 option 716F. In response to an operation on the audio object 4 option 716D shown in FIG. 7C, the electronic device 100 may display a user interface 720 shown in FIG. 7D.

As shown in FIG. 7D, the user interface 720 may include the audio object control 712 and an audio object editing box 721.

Text content "Audio object 4" may be displayed on the audio object control 712, to indicate that the audio object 4 is currently in a selected state, and an object on which audio object editing is performed based on the audio object editing box 721 is the audio object 4.

For the audio object editing box 721, refer to the descriptions of the audio object editing box 541 shown in FIG. 5F. Details are not described herein.

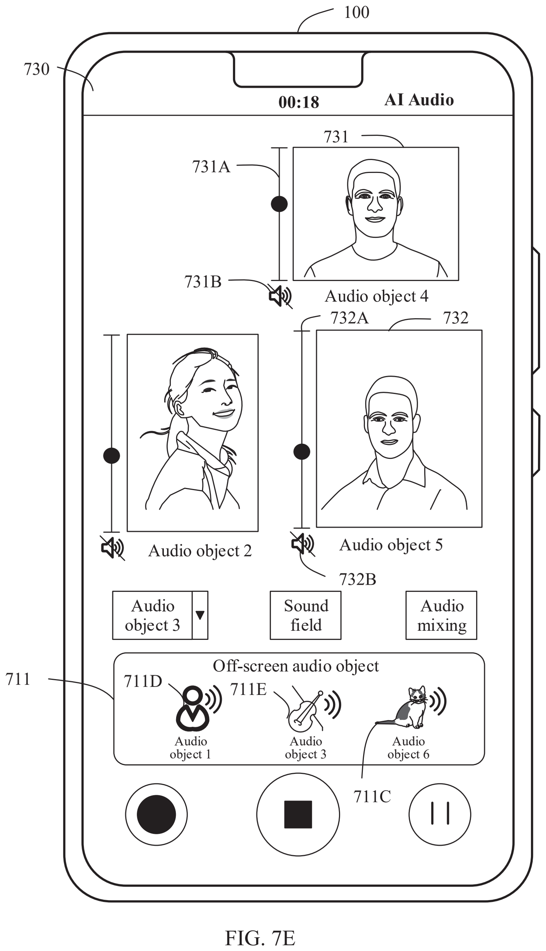

As shown in FIG. 7E, the electronic device 100 may rotate to change a shooting angle of view. For example, when the shooting angle of view changes, audio objects shot by the electronic device 100 change from the audio object 1, the audio object 2, and the audio object 3 shown in FIG. 7A to the audio object 2, the audio object 4, and the audio object 5 shown in FIG. 7E. The electronic device 100 may display a user interface 730 when the shooting angle of view changes. The user interface 730 may include a mark box 731, a volume bar 731A, and a mute control 731B that are associated with the audio object 4, and a mark box 732, a volume bar 732A, and a mute control 732B that are associated with the audio object 5. In this way, the user can intuitively adjust volume of the audio object 4 and volume of the audio object 5.

The user interface 730 may further include an off-screen audio object display area 711. The audio object 1 and the audio object 3 become audio objects that are not shot because the shooting angle of view changes. Therefore, the electronic device 100 may display, in the off-screen audio object display area 711, an audio object 1 identifier 711D, an audio object 3 identifier 711E, and an audio object 6 identifier 711C of the audio object 6 that is still not shot shown in FIG. 7E. The user may perform audio editing on the audio object 1 and the audio object 3 by using the audio object 1 identifier 711D and the audio object 3 identifier 711E respectively.

In some embodiments, the electronic device 100 is connected to a listening device or an audio playing device like a headset. The listening device may be configured to play an audio. The electronic device 100 may perform audio mixing in real time to output an audio file, and render the audio file in real time, so that the user can listen to a sound effect of video recording in real time through the audio playing device. In this way, the user can learn of a sound effect of audio editing in time, to perform audio editing, so that the sound effect achieves an effect required by the user.

The electronic device 100 may render audio files corresponding to the sound bed and audio tracks of all audio objects, and deliver audio data obtained through rendering to the audio playing device for playing. In this way, the user can listen to all audios during video recording. Alternatively, the electronic device 100 may render only an audio file corresponding to an audio track of one or more audio objects, and deliver audio data obtained through rendering to the audio playing device for playing. In this way, the user can listen to an audio of the one or more audio objects. For example, the user may listen to only an audio of an edited audio object, to determine whether editing of the audio object is appropriate.

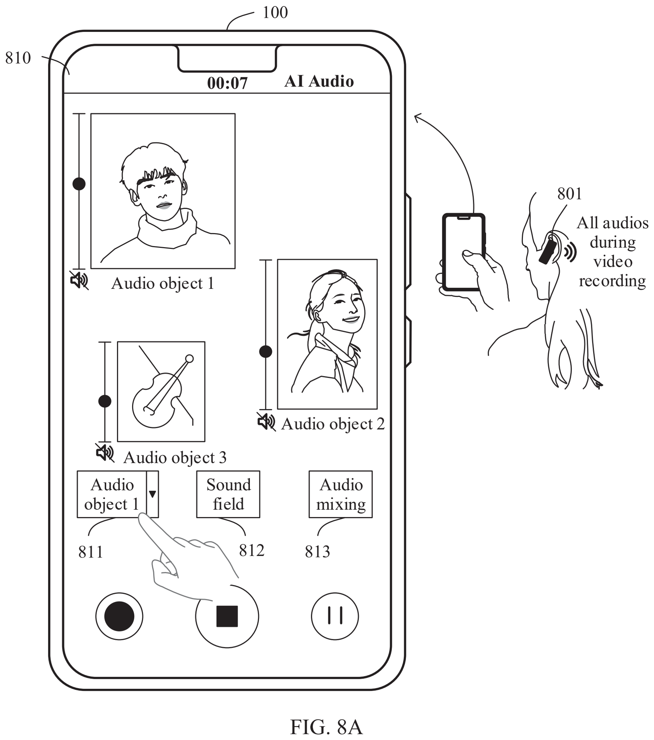

**FIG. 8A to FIG. 8C** **illustrate diagrams of some other audio editing scenarios.**

Herein, an example in which the electronic device 100 is connected to a listening device 801 shown in FIG. 8A is used for description.

As shown in FIG. 8A, the electronic device 100 may display a user interface 810. For the user interface 810, refer to the descriptions of the user interface 620 shown in FIG. 6C. The user interface 810 may include an audio object control 811, a sound field control 812, and an audio mixing control 813. The electronic device 100 may perform audio mixing on the captured audio, output an audio file including an audio signal and the metadata, and render the audio file to obtain audio data. The electronic device 100 may send the audio data to the listening device 801. The listening device 801 may play all audios during video recording based on the received audio data. In this way, the user can learn of an overall playing sound effect of the video.

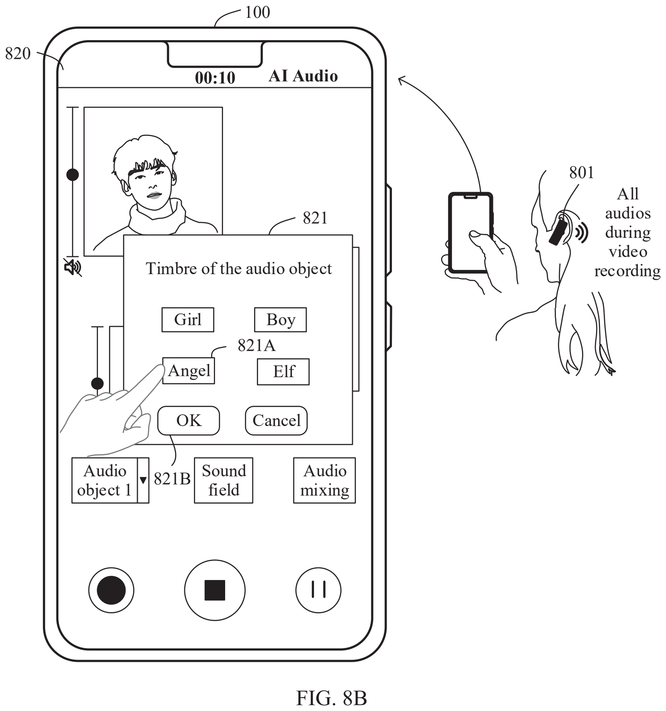

When text content "Audio object 1" is displayed on the audio object control 811, in response to an operation on the audio object control 811 shown in FIG. 8A, the electronic device 100 may display a user interface 820 shown in FIG. 8B.

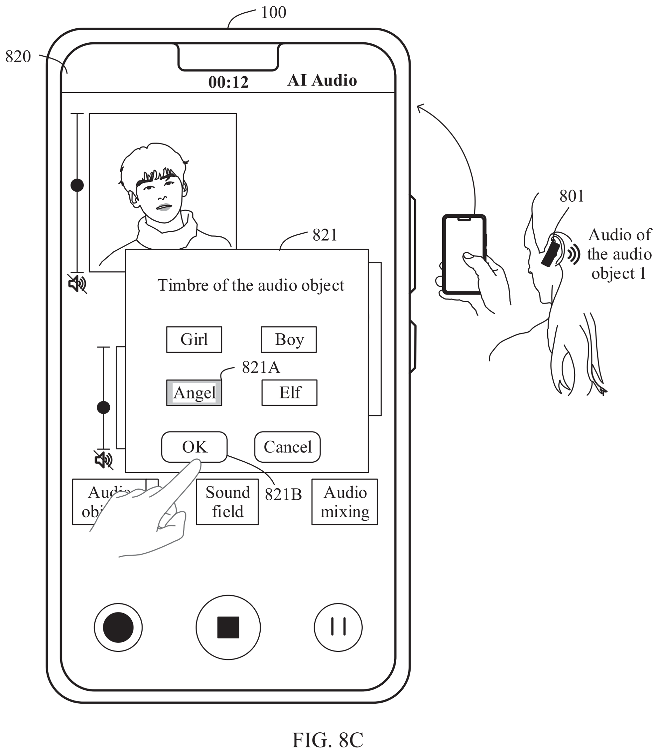

As shown in FIG. 8B, the user interface 820 may include an audio object editing box 821. For the audio object editing box 821, refer to the audio object editing box 541 shown in FIG. 5F. The audio object editing box 821 may include an angel timbre option 821A and an OK control 821B. In response to an operation on the angel timbre option 821A shown in FIG. 8B, the electronic device 100 may display the angel timbre option 821A as being in a selected state (for example, a display color is darker) shown in FIG. 8C.

As shown in FIG. 8C, in response to an operation on the OK control 821B, the electronic device 100 may adjust the timbre of the audio object 1 to a timbre corresponding to the angel timbre option 821A, enabling the timbre of the audio object 1 to perceptually resemble a timbre of an angel.

In a possible implementation, when detecting an operation of adjusting the timbre of the audio object 1, the electronic device 100 may edit the audio track of the audio object 1 and description information of the audio track of the audio object 1 in the metadata. The electronic device 100 may generate an audio file of the audio object 1 based on the audio track of the audio object 1 and metadata related to the audio object 1. The metadata related to the audio object 1 may include the description information of the audio track of the audio object 1, for example, information that enables the audio track of the audio object 1 to be correctly rendered, such as the volume, the timbre, and the spatial position of the audio object 1. The electronic device 100 may render the audio file of the audio object 1 to obtain audio data of the audio object 1, and deliver the audio data of the audio object 1 to the listening device 801 for playing. The listening device 801 may play only an audio of the audio object 1. In this way, after adjusting the timbre of the audio object 1, the user can learn of a sound effect of the audio object 1 in real time by using the listening device 801, to determine whether the adjustment of the timbre of the audio object 1 is appropriate.

Optionally, within a preset time period starting from a moment at which a timbre of the audio object 2 is adjusted, if the electronic device 100 does not detect an audio editing operation again, the electronic device 100 may continue to indicate the listening device 801 to play all the audios in the video recording process.

It may be understood that, when the listening device 801 plays the audio of the audio object 1, when detecting an operation of editing another audio object, for example, the audio object 2, the electronic device 100 may edit the audio track of the audio object 2 and description information of the audio object 2 in the metadata. The electronic device 100 may generate an audio file of the audio object 2 based on the audio object 2 and metadata related to the audio object 2. The electronic device 100 may render the audio file of the audio object 2 to obtain audio data of the audio object 2, and deliver the audio data of the audio object 2 to the listening device 801 for playing. In this case, content played by the listening device 801 may be switched from an audio of the audio object 1 to an audio of the audio object 2.

It may be learned from the foregoing embodiments that after receiving the audio editing operation, the electronic device 100 may play, by using the listening device 801, a part of audio that changes due to the audio editing operation. In this way, the user can listen to, in real time during video shooting, a sound effect of a part edited by the user, to determine whether a sound effect of a part that is separately edited in the audio is appropriate. In addition, after the user stops audio editing, the electronic device 100 may play all the audios in the video recording process by using the listening device 801, and the user may determine whether the overall playing sound effect of the video is appropriate. In the foregoing embodiments, convenience of performing audio editing by the user during video recording may be increased, and the user may more quickly determine whether audio editing content is appropriate.

In some embodiments, the electronic device 100 may further indicate, in response to a preset operation on one or more audio objects, the listening device 801 to play an audio of the one or more audio objects. In other words, the user may actively select to listen to the audio of the one or more audio objects. A method for the preset operation is not limited in embodiments of this application.

In some embodiments, the electronic device 100 may provide a function of adjusting a spatial position of an audio object. The user may change a spatial position of an audio object, so that a sound of the audio object perceptually seems to be made from a spatial position after the change.

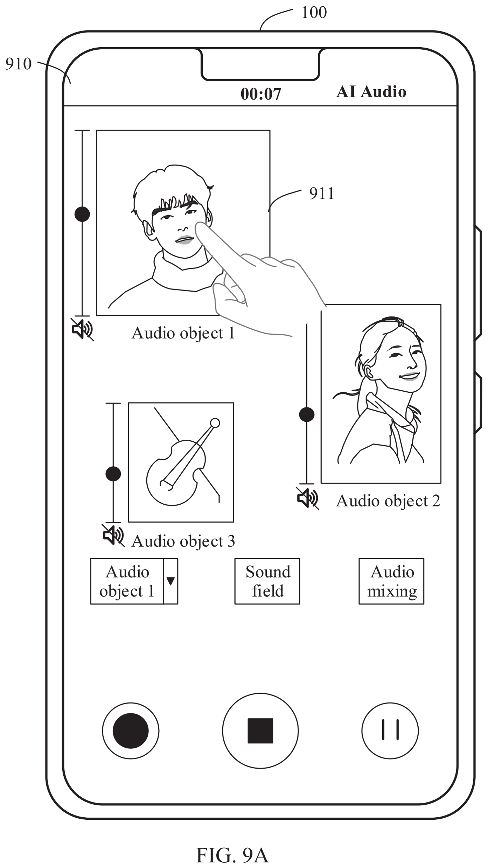

**FIG. 9A to FIG. 9C** **illustrate diagrams of some other audio editing scenarios.**

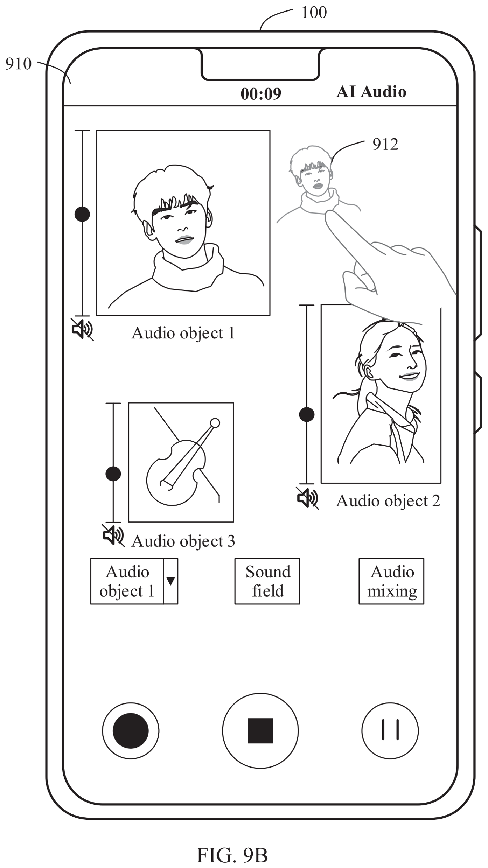

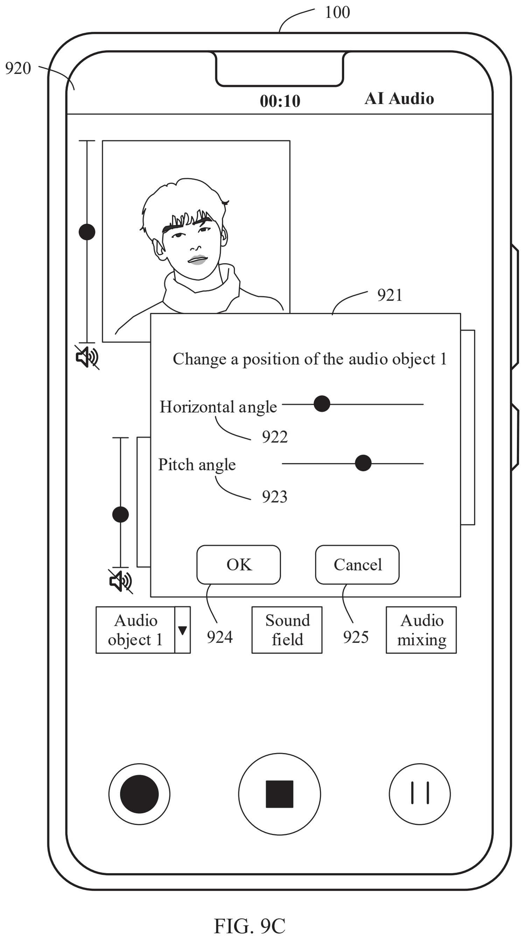

As shown in FIG. 9A, the electronic device 100 may display a user interface 910. For the user interface 910, refer to the user interface 620 shown in FIG. 6C. The user interface 910 may include a mark box 911 associated with the audio object 1. In response to an operation, for example, a touch and hold operation, on an area of the mark box 911 shown in FIG. 9A, the electronic device 100 may display an audio object 1 control 912 shown in FIG. 9B. In response to an operation of dragging the audio object 1 control 912 shown in FIG. 9B, the electronic device 100 may display a prompt box 921 shown in FIG. 9C. The prompt box 921 may be used by the user to adjust a spatial position of the audio object 1.

As shown in FIG. 9C, the prompt box 921 may include a horizontal angle control 922, a pitch angle control 923, an OK control 924, and a cancel control 925. The horizontal angle control 922 may be used to adjust a horizontal angle of the audio object 1 relative to a listener. The horizontal angle may be used to reflect an orientation of the audio object 1 relative to the listener in a horizontal direction, for example, on the left, the left front, the right front, the right, or the rear of the listener. The pitch angle control 923 may be used to adjust a pitch angle of the audio object 1 relative to the listener. The pitch angle may be used to reflect an orientation of the audio object 1 relative to the listener in a vertical direction, for example, above or below the listener. A position of the listener may be a position of the electronic device 100, or may be a position of the listening device 801 shown in FIG. 8A. The position of the listener is not limited in embodiments of this application.

The OK control 924 may be used to trigger the electronic device 100 to adjust the spatial position of the audio object 1 based on values of the horizontal angle and the pitch angle in the prompt box 921. The cancel control 925 may be used to cancel adjustment of the spatial position of the audio object 1.

It may be understood that the operations for adjusting a spatial position of an audio object shown in FIG. 9A to FIG. 9C are merely example descriptions of this application, and should not constitute a limitation on this application. The electronic device 100 may further support the user in adjusting the spatial position of the audio object in another operation manner.

In some embodiments, in addition to adjusting a horizontal angle and a pitch angle of the audio object relative to the listener, the electronic device 100 may support the user in adjusting azimuth information such as a distance between the audio object and the listener.

In some embodiments, the electronic device 100 may further support the user in exchanging audio tracks of two audio objects. For example, after performing audio object separation and determining the spatial position of the audio object and the display position of the audio object in the video image, the electronic device 100 may determine a target 1 in the image as the audio object 1 and the audio track as the audio track 1, and determine a target 2 in the image as the audio object 2 and the audio track as the audio track 2. When detecting an operation of exchanging the audio object 1 and the audio object 2, the electronic device 100 may determine the target 1 in the image as the audio object 2 and the audio track as the audio track 2, and determine the target 2 in the image as the audio object 1 and the audio track as the audio track 1. After the foregoing exchange, after detecting an audio editing operation performed on the target 1 in the image, the electronic device 100 may edit the audio track 2 and description information of the audio track 2 in the metadata. Similarly, after detecting an audio editing operation performed on the target 2 in the image, the electronic device 100 may edit the audio track 1 and description information of the audio track 1 in the metadata. For example, when the user considers that the audio track of the audio object 1 is opposite to the audio track of the audio object 2, the user may exchange the audio track of the audio object 1 and the audio track of the audio object 2. This may increase accuracy of determining the audio track of the audio object.

For scenarios in which the user performs sound field editing and audio mixing editing in the video recording phase, refer to the descriptions of the video pre-recording phase. Details are not described herein again.

Various embodiments described in the video recording phase are also applicable to all scenarios in this application, for example, the scenario in the video pre-recording phase, a scenario in a phase after video recording is completed, and a video call scenario that are to be described subsequently.

### Phase after video recording is completed

In some embodiments, the user may perform audio editing on a video that has been stored in the electronic device 100. The electronic device 100 may store a video image in the video and an audio file including an audio signal and metadata. In this way, the electronic device 100 can edit the audio file to achieve an effect of editing an audio object, a sound field, and audio mixing.

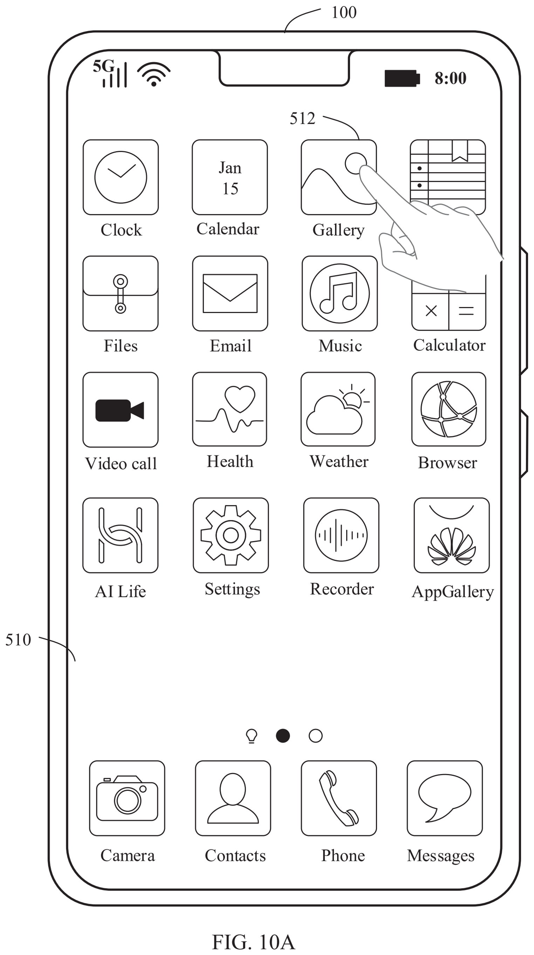

**FIG. 10A to FIG. 10D** **illustrate diagrams of some other audio editing scenarios.**

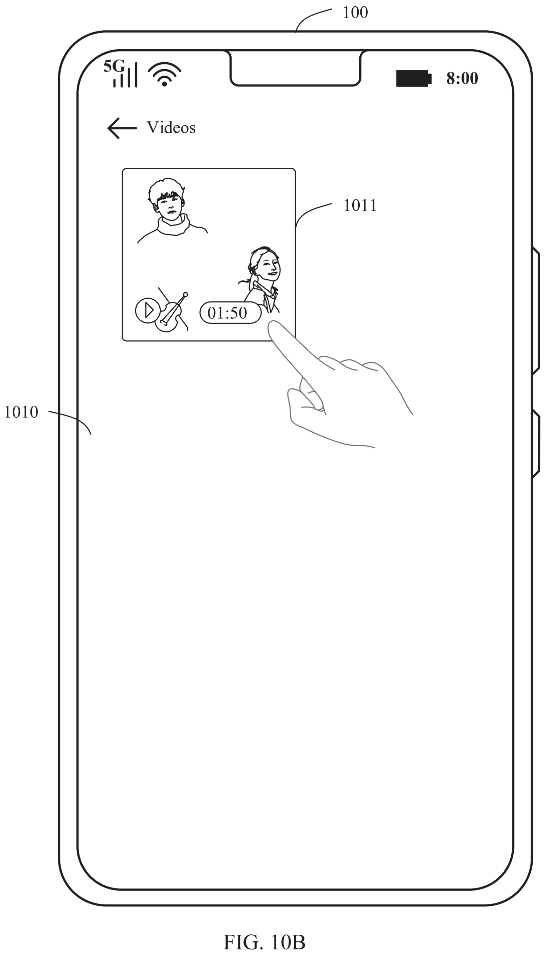

As shown in FIG. 10A, the electronic device 100 may display the user interface 510. The user interface 510 may include a gallery application icon 512. The gallery application icon 512 may be used to start a gallery application. In response to an operation on the gallery application icon 512 shown in FIG. 10A, the electronic device 100 may display a user interface 1010 shown in FIG. 10B.

As shown in FIG. 10B, the user interface 1010 may include a video control 1011 for a video 1. For example, the video 1 may be a video recorded in the video recording phase. Content of the video 1 is not limited in embodiments of this application. The electronic device 100 may store a video image and an audio file in the video 1, so that the video 1 may be correctly rendered and played. The audio file may include audio signals of a sound field and each audio object, and metadata.

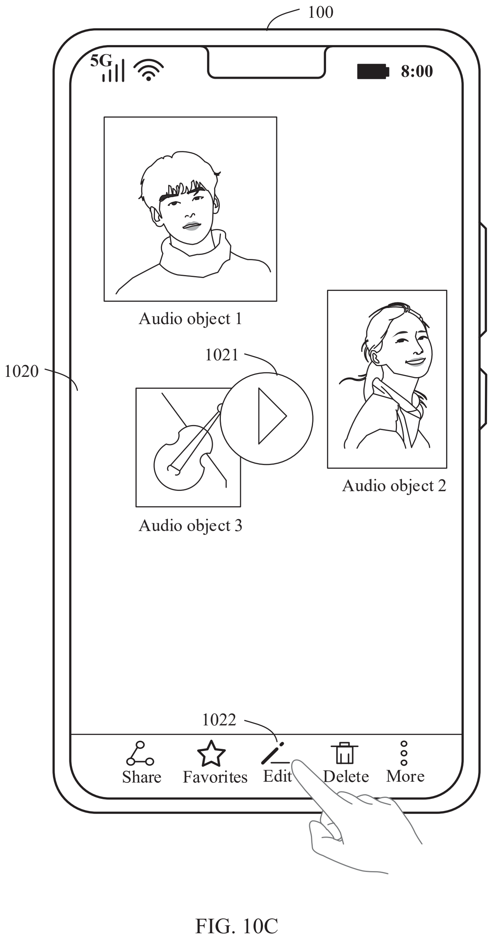

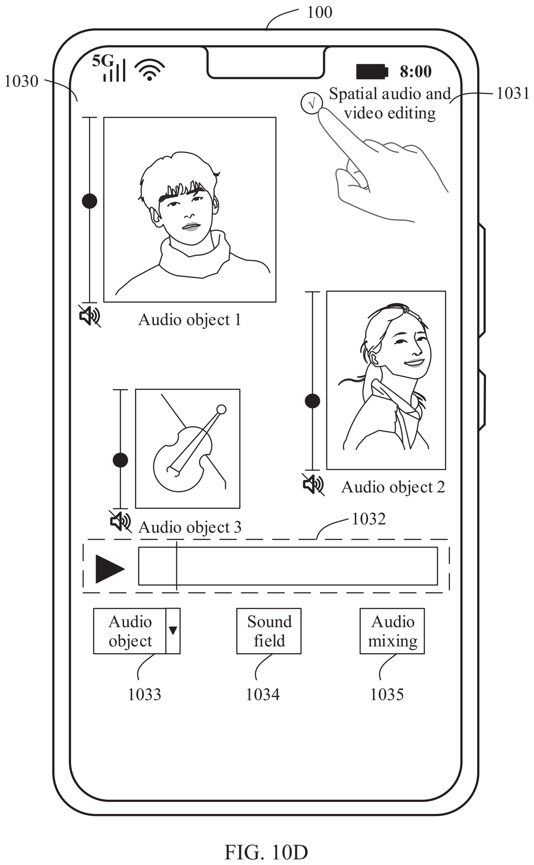

In response to an operation, for example, a tap operation, on the video control 1011, the electronic device 100 may display a user interface 1020 shown in FIG. 10C. The user interface 1020 may include a play control 1021 and an edit control 1022. The play control 1021 may be used to trigger the electronic device 100 to play the video 1. The edit control 1022 may be used to trigger the electronic device 100 to display a user interface for editing the video 1, so that the user may edit (for example, perform audio editing on) the video 1. In response to an operation on the edit control 1022 shown in FIG. 10C, the electronic device 100 may display a user interface 1030 shown in FIG. 10D.

As shown in FIG. 10D, the video image included in the video 1 may be displayed in the user interface 1030. The user interface 1030 may further include an audio editing control 1031, a progress bar 1032, an audio object control 1033, a sound field control 1034, and an audio mixing control 1035.

The audio editing control 1031 may be used to trigger enabling or disabling of an audio editing function on the electronic device 100. When the audio editing function is disabled, in response to an operation on the audio editing control 1031, the electronic device 100 may display the audio editing control 1031 as being in a selected state shown in FIG. 10D.

The progress bar 1032 may be used to adjust play progress of the video.

The audio object control 1033, the sound field control 1034, and the audio mixing control 1035 may be used to perform audio object editing, sound field editing, and audio mixing editing respectively. For details, refer to the descriptions in the foregoing embodiments.

When the audio editing function is enabled, the electronic device 100 may display, in the user interface 1030, the audio object control 1033, the sound field control 1034, the audio mixing control 1035, and controls used for audio editing, such as a mark box, a volume bar, and a mute control that are associated with each audio object in the video image. When the audio editing function is disabled, the electronic device 100 may cancel, in the user interface 1030, displaying the foregoing controls used for audio editing.

It should be noted that, for editing that may be performed by the user on an audio in an existing video in the phase after video recording is completed, refer to the audio editing performed in the video pre-recording phase and the video recording phase. For example, the editing that may be performed by the user on the audio in the existing video in the phase after video recording is completed may include but is not limited to: adjusting volume of an audio object, adjusting a timbre of the audio object, adjusting a spatial position of the audio object, exchanging audio tracks of two audio objects, adjusting a sound field, performing audio mixing editing, or the like. Optionally, when the existing video is played to a clip including a part of audio objects that are not shot, the electronic device 100 may further provide, in the user interface 1030, a control indicating the audio objects that are not shot, to facilitate editing of the audio objects that are not shot.

It may be learned from the foregoing embodiments that the user may perform an audio editing operation before video shooting and during video shooting, to adjust the sound field and a separate audio object, so that a sound effect of playing the video meets a personalized requirement. In addition, the user may perform secondary audio editing on a recorded video after the video recording is completed.

A control used for audio editing may be presented in the video image, and in particular, a control used for audio object editing may be further displayed near a shot audio object in the image. This may help the user perform an audio editing operation more conveniently and intuitively, and improve user experience of audio and video recording and audio editing.

### Audio editing in a video call scenario

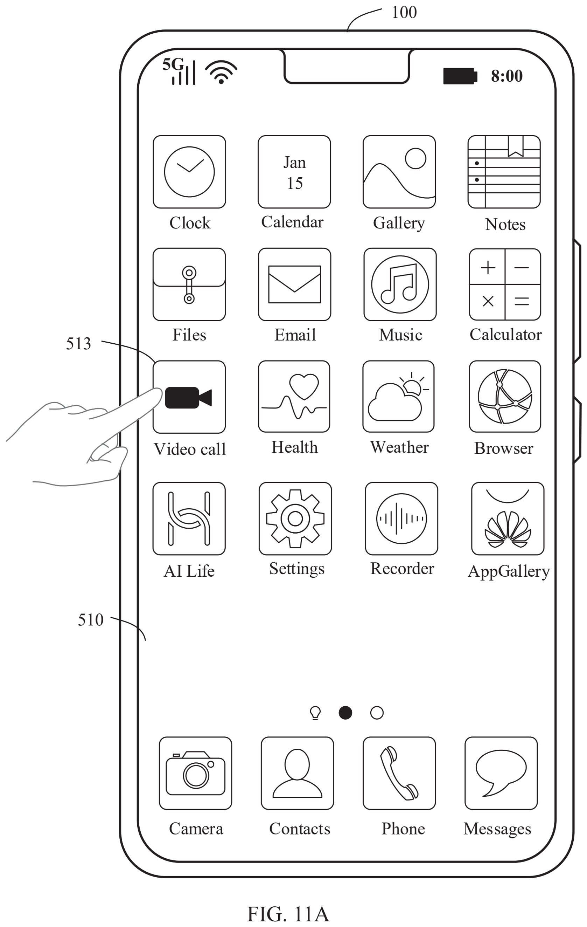

**FIG. 11A to FIG. 11H** **illustrate diagrams of some other audio editing scenarios.**

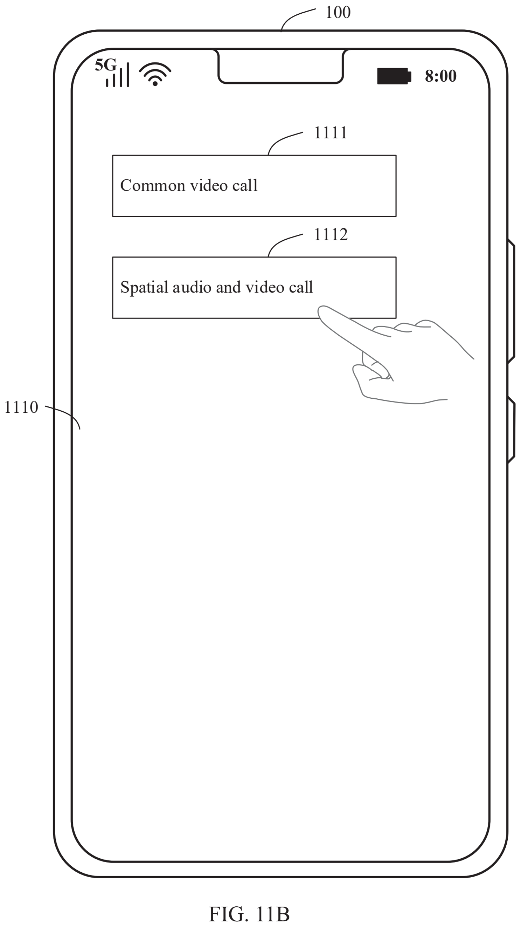

As shown in FIG. 11A, the electronic device 100 may display the user interface 510. The user interface 510 may include a video call application icon 513. The video call application icon 513 may be used to trigger the electronic device 100 to start a video call application. In response to an operation on the video call application icon 513 shown in FIG. 11A, the electronic device 100 may display a user interface 1110 shown in FIG. 11B.

As shown in FIG. 11B, the user interface 1110 may include a common video call control 1111 and a spatial audio and video call control 1112. The common video call control 1111 may be used to make a video call, and an audio editing function remains disabled during the video call. The spatial audio and video call control 1112 may also be used to make a video call, but the audio editing function remains enabled during the video call.

In some embodiments, during the video call, the electronic device 100 may provide an audio editing control for enabling or disabling the audio editing function. In this way, the user can enable or disable the audio editing function at any time during the video call. In other words, the user does not need to determine, before making a video call, whether to make a video call with the audio editing function enabled or a video call with the video editing function disabled. In other words, the common video call control 1111 and the spatial audio and video call control 1112 shown in FIG. 11B are optional. The foregoing operation of enabling or disabling the audio editing function during the video call is not limited in embodiments of this application.

In some embodiments, the audio editing function is enabled on the electronic device 100 during the video call, to support a user of the electronic device 100 to edit the audio captured by the electronic device 100, so that an edited audio is sent to a call peer end. In this way, the audio received by the call peer end of the electronic device 100 may be audio edited by the user of the electronic device 100.

In some embodiments, the audio editing function is enabled on the electronic device 100 during the video call, to further support the user of the electronic device 100 to edit an audio of the call peer end. For example, during a video call between a user 1 of the electronic device 100 and a user 2, the user 1 may edit an audio of the user 2 on the electronic device 100. In this way, the user 1 can listen to the audio that is of the user 2 and that is edited by the user 1. For another example, during a video call between a user 1 of the electronic device 100 and a plurality of call peer ends (for example, a user 2 and a user 3), the user 1 may edit an audio of the user 2 on the electronic device 100. In this way, in addition to a call end that is edited, namely, the user 2, the user 1 and another call end, for example, the user 3, can listen to the audio that is of the user 2 and that is edited by the user 1.

Optionally, before editing an audio of a call peer end, a user of the electronic device 100 may request permission of the call peer end. When the call peer end permits, the user of the electronic device 100 may edit the audio of the call peer end.

In response to an operation on the spatial audio and video call control 1112 shown in FIG. 11B, the audio editing function may be enabled on the electronic device 100 during the video call.

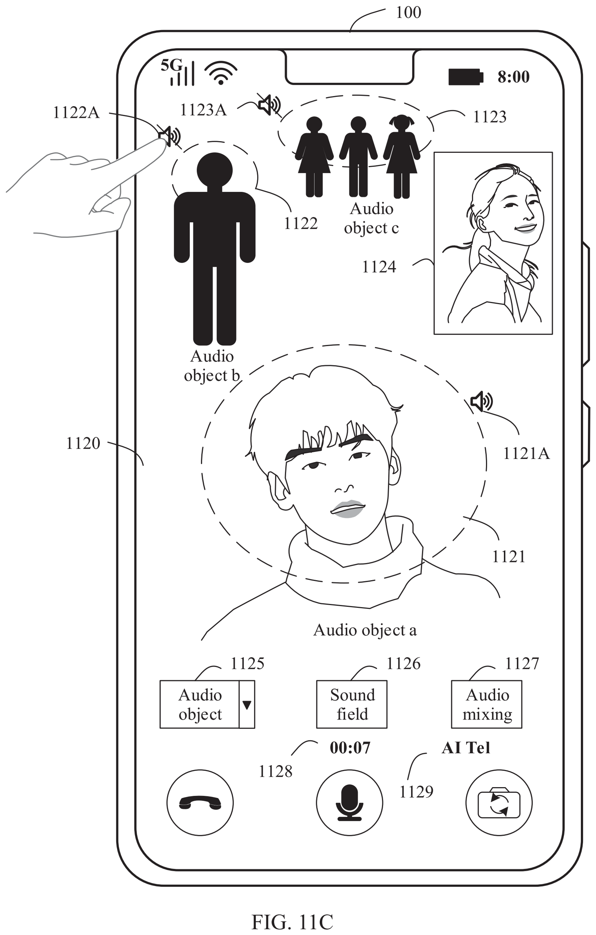

As shown in FIG. 11C, the electronic device 100 may display a user interface 1120. The user interface 1120 may be a video call interface. The electronic device 100 is in a video call with a call peer end. The electronic device 100 may be an initiator of the video call or a receiver of the video call. This is not limited in embodiments of this application.

As shown in FIG. 11C, a video image sent by the call peer end may be displayed in the user interface 1120. The video image sent by the call peer end may be an image including an audio object a, an audio object b, and an audio object c shown in FIG. 11C. The user interface 1120 may further include a mark box 1121 and a volume control 1121A that are associated with the audio object a, a mark box 1122 and a volume control 1122A that are associated with the audio object b, a mark box 1123 and a volume control 1123A that are associated with the audio object c, a floating window 1124, an audio object control 1125, a sound field control 1126, an audio mixing control 1127, time information 1128, and an audio editing identifier 1129.

A display style of the volume control 1121A may be a display style of an unmute state shown in FIG. 11C. This may indicate that volume of the audio object a in an audio of the call peer end is not 0 (that is, not muted).

Display styles of the volume control 1122A and the volume control 1123A may be display styles of a mute state shown in FIG. 11C. This may indicate that volume of the audio object b and volume of the audio object c in the audio of the call peer end are 0, that is, in the mute state.

In some embodiments, one audio object may include a plurality of objects. For example, the audio object c shown in FIG. 11C may include a plurality of objects (for example, three objects). It may be understood that, when the plurality of objects are close to each other but are far away from an audio and video capturing device, the plurality of objects occupy a small area in a captured image, and sounds of the plurality of objects may be considered as being made from a same spatial position. Compared with an object that is close to the audio and video capturing device, the plurality of objects that are far away from the audio and video capturing device have weaker sounds, and therefore a sound of the object that is close to the audio and video capturing device is less affected. Therefore, the plurality of objects that are close to each other but are all far away from the audio and video capturing device may be determined as one audio object.

An image captured by the electronic device 100, for example, an image captured by the electronic device 100 by using a front-facing camera, may be displayed in the floating window 1124.

The time information 1128 may indicate duration of the video call.

The audio editing identifier 1129 may indicate that the audio editing function is enabled. Optionally, when the audio editing function is disabled, the electronic device 100 may cancel displaying the audio editing identifier 1129 in the user interface 1120.

It may be learned that because the audio editing function is enabled, the electronic device 100 may display, in the video image of the call peer end, the mark box and the volume control that are associated with each audio object, the audio object control 1125, the sound field control 1126, and the audio mixing control 1127 shown in FIG. 11C. This may help the user of the electronic device 100 edit the audio of the call peer end.

In a possible implementation, the electronic device 100 receives the video image and an audio file from the peer end of the call. The audio file may include audio signals of a sound field and each audio object of the call peer end, and metadata. When receiving an operation of editing an audio of the call peer end, the electronic device 100 may edit the audio file to obtain a new audio file. The electronic device 100 may render the new audio file to obtain audio data. Then, the electronic device 100 may play an audio of the call peer end by using the audio data obtained through rendering. In this way, the user of the electronic device 100 can listen to the audio that is of the call peer end and that is edited by the user of the electronic device 100.

In another possible implementation, when receiving an operation of editing an audio of the call peer end, the electronic device 100 may send an audio editing instruction to the call peer end. The audio editing instruction may include an audio editing parameter used for audio editing. After receiving the audio editing instruction, the call peer end may edit the captured audio based on the audio editing parameter, to obtain the audio file. The call peer end may render the audio file to obtain audio data. Then, the call peer end may send the audio data to the electronic device 100. The electronic device 100 may play an audio of the call peer end based on the received audio data. The audio data received by the electronic device 100 is obtained by rendering the audio file edited according to the audio editing instruction of the electronic device 100. Therefore, the user of the electronic device 100 can listen to the audio that is of the call peer end and that is edited by the user of the electronic device 100.

In another possible implementation, when receiving an operation of editing an audio of the call peer end, the electronic device 100 may send an audio editing instruction to a server. The audio editing instruction may include an audio editing parameter used for audio editing. The server may be a server configured to implement a video call between the electronic device 100 and the call peer end. The server may further receive the video image and the audio file from the call peer end. The audio file may include the audio signals of the sound field and each audio object of the call peer end, and the metadata. The server may edit the audio file from the call peer end based on the audio editing parameter of the electronic device 100, to obtain a new audio file. Then, the server may send the new audio file to the electronic device 100, and the electronic device 100 renders and plays the new audio file. Alternatively, the server may render the new audio file to obtain audio data, and deliver the audio data to the electronic device 100 for playing. In this way, the user of the electronic device 100 can listen to the audio that is of the call peer end and that is edited by the user of the electronic device 100.

In other words, the electronic device 100 may support the user at the local end in editing the audio from the call peer end. A device that specifically edits the audio file may be the electronic device 100, or may be the call peer end, or may be the server.

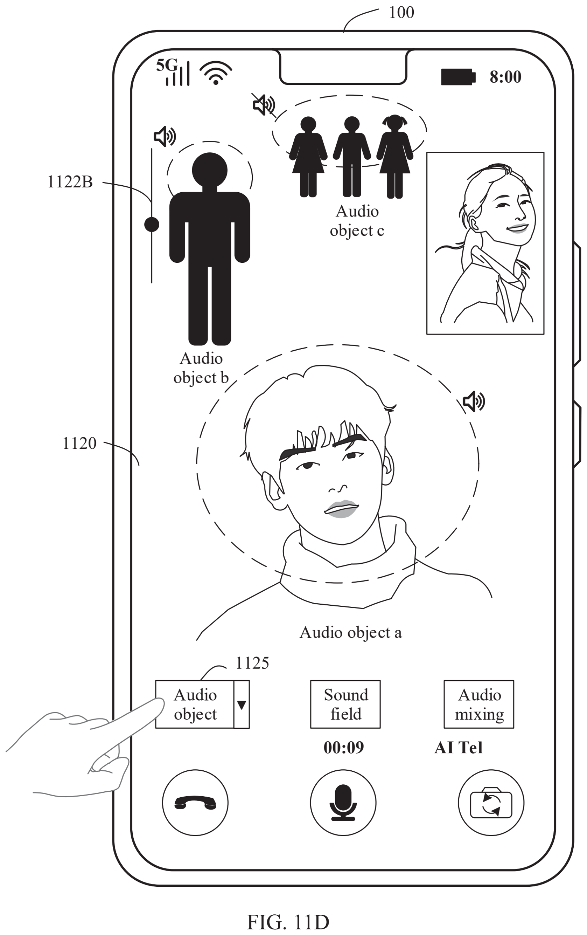

As shown in FIG. 11C, in response to an operation on the volume control 1122A, the electronic device 100 may display a volume bar 1122B shown in FIG. 11D. The volume bar 1122B may be used to adjust the volume of the audio object b.

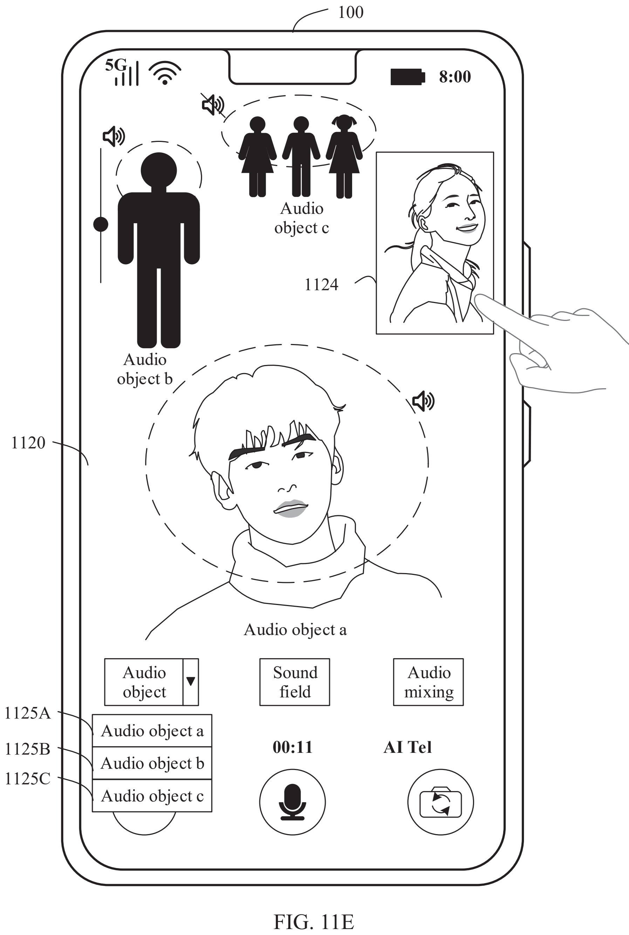

As shown in FIG. 11D, in response to an operation on the audio object control 1125, the electronic device 100 may display an audio object a option 1125A, an audio object b option 1125B, and an audio object c option 1125C shown in FIG. 11E. The audio object a option 1125A, the audio object b option 1125B, and the audio object c option 1125C may be used to select the audio object a, the audio object b, and the audio object c respectively, so that the user edits a selected audio object.

In some embodiments, in addition to the options corresponding to the audio objects of the video call peer end, the electronic device 100 may provide an option corresponding to an audio object in a video image in the floating window 1124 (namely, an option corresponding to an audio object of the electronic device 100).

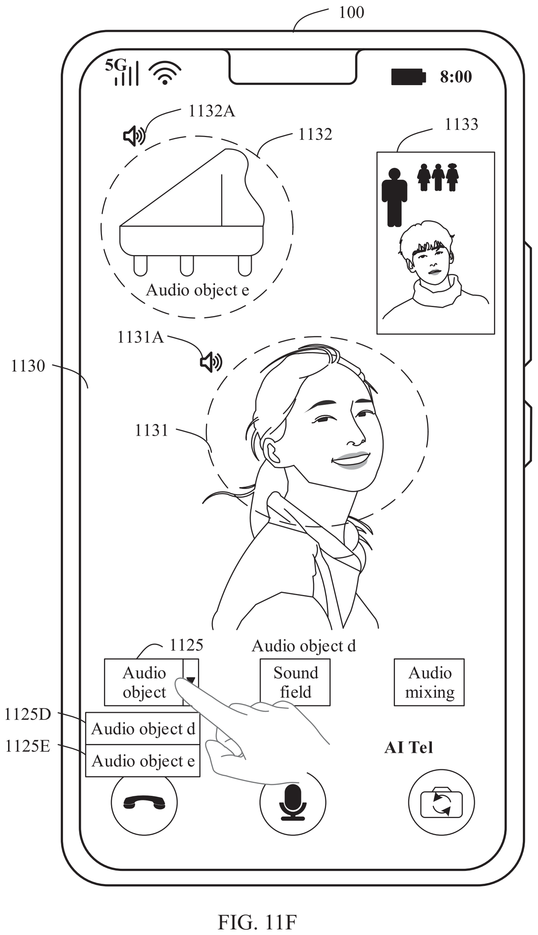

In response to an operation, for example, a tap operation, on the floating window 1124 shown in FIG. 11E, the electronic device 100 may exchange display positions of the video image captured by the electronic device 100 and the video image from the call peer end. Specifically, the electronic device 100 may display a user interface 1130 shown in FIG. 11F.

As shown in FIG. 11F, the video image captured by the electronic device 100 may be displayed in the user interface 1130. The video image captured by the electronic device 100 may be an image including an audio object d and an audio object e shown in FIG. 11F. The user interface 1130 may further include a mark box 1131 and a volume control 1131A that are associated with the audio object d, a mark box 1132 and a volume control 1132A that are associated with the audio object e, and a floating window 1133. For other controls in the user interface 1130, refer to the user interface 1120 shown in FIG. 11C.

The video image sent by the call peer end of the electronic device 100 may be displayed in the floating window 1133.

The user interface 1130 may include the audio object control 1125. Because the display positions of the video image captured by the electronic device 100 and the video image from the call peer end are exchanged, in response to an operation on the audio object control 1125, the electronic device 100 may display options corresponding to audio objects of the electronic device 100, namely, an audio object d option 1125D and an audio object e option 1125E, shown in FIG. 11F. In this way, the user of the electronic device 100 can select the audio object of the local end for editing.

In the user interface 1130 shown in FIG. 11F, the user of the electronic device 100 may edit an audio of the local end. The electronic device 100 may edit, based on an operation of performing audio editing at the local end by the user, the audio captured by the electronic device 100, to obtain an audio file including an audio signal and metadata. Then, the electronic device 100 may send the audio file to the call peer end, or send audio data obtained by rendering the audio file to the call peer end. In this way, the call peer end can listen to the audio edited by the user of the electronic device 100.

If the electronic device 100 sends the audio file to the call peer end, the electronic device 100 may first encode the audio file. For example, the encoding may include one or more of the following: channel encoding, audio object encoding, HOA encoding, metadata encoding, or the like. The electronic device 100 may send an encoded audio file to the call peer end. The encoding may reduce information redundancy in the audio file, to improve transmission efficiency of the audio file.

In some embodiments, the electronic device 100 may enlarge a floating window in a video call interface, so that the user selects an audio object in a video image in the floating window to edit the audio object.

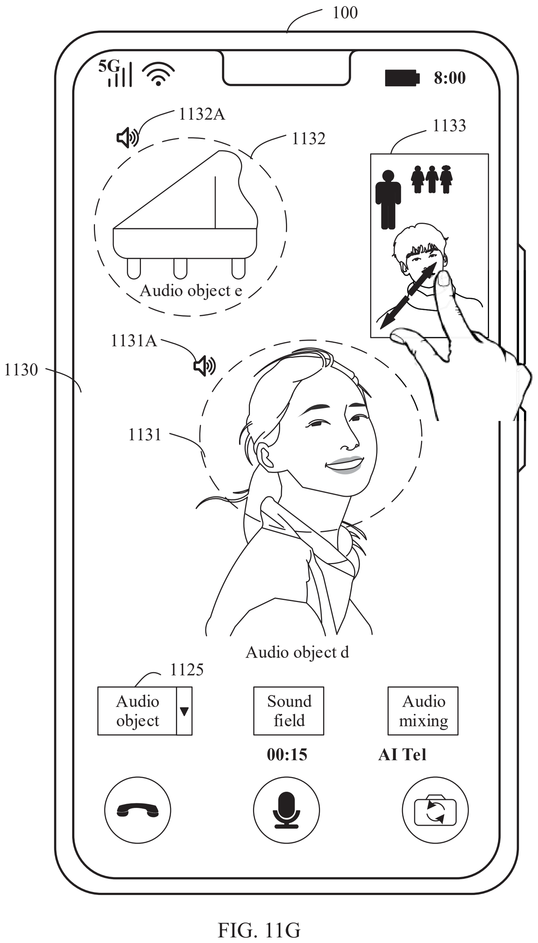

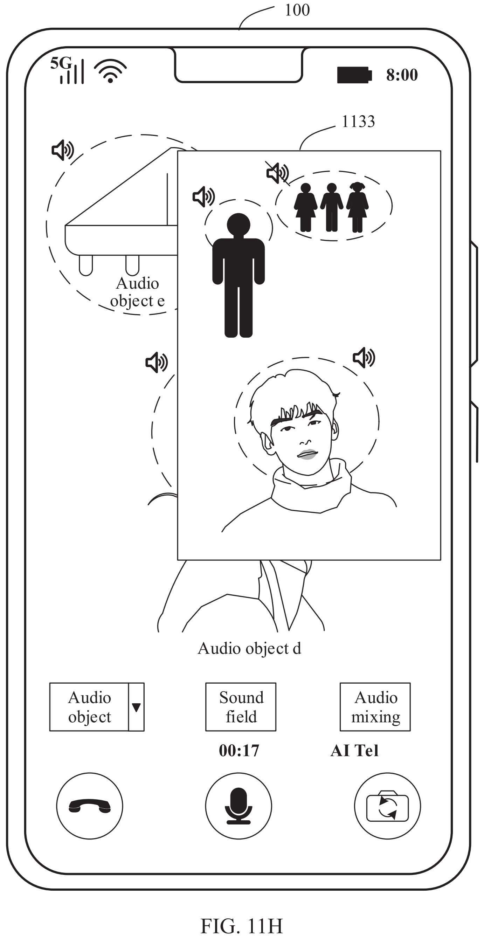

For example, as shown in FIG. 11G, in response to an operation of sliding in opposite directions of two fingers on the floating window 1133, the electronic device 100 may enlarge the floating window 1133, and display the floating window 1133 shown in FIG. 11H. It may be learned that the floating window 1133 shown in FIG. 11H is larger than the floating window shown in FIG. 11G.

As shown in FIG. 11H, when the floating window 1133 is enlarged, the video image displayed in the floating window 1133 is enlarged accordingly. The electronic device 100 may display an audio editing control associated with each audio object in the video image in the floating window, so that the user edits the audio object. It may be understood that, when the floating window 1133 is small, a size of the audio object displayed in the floating window is also small, or only a part of shot audio objects may be displayed. This is inconvenient for the user to select an audio object in the video image in the floating window for editing. Enlarging the floating window and the video image displayed in the floating window helps the user more conveniently and accurately select the audio object for editing.

Optionally, when the floating window is not enlarged, the electronic device 100 may alternatively provide the audio editing control associated with each audio object in the video image in the floating window, so that the user edits the audio object displayed in the floating window.

It should be noted that, when content displayed in the floating window 1133 is the video image of the electronic device 100 (refer to the floating window 1124 shown in FIG. 11C), the electronic device 100 may also support the user in enlarging the floating window, to edit the audio object of the electronic device 100.

For audio editing performed by the user of the electronic device 100, refer to the foregoing embodiments of audio editing in the video recording scenario. Details are not described herein again.

In some embodiments, the electronic device 100 may recognize a primary object in the video image, retain a sound of the primary object in an audio, and suppress all sounds other than the sound of the primary object in the audio. In this way, the user can quickly eliminate all the sounds other than the sound of the primary object in the audio during a video call, to clearly listen to the sound of the primary object.

**FIG. 12A to FIG. 12C** **illustrate diagrams of some other audio editing scenarios.**

As shown in FIG. 12A, the electronic device 100 may display the user interface 1130. For the user interface 1130, refer to the descriptions of FIG. 11F. The user interface 1130 may include a play mode control 1134. The play mode control 1134 may be used to select an audio play mode. The audio play mode may include a natural mode and a human voice mode.

In the natural mode, the electronic device 100 may retain sounds of all audio objects in the audio captured by the electronic device 100.

In the human voice mode, the electronic device 100 may recognize the primary object in the video image captured by the electronic device 100. For example, the primary object may be an object that occupies the largest display area in the video image. A method for determining the primary object in the image by the electronic device 100 is not limited in embodiments of this application. When the primary object is determined, the electronic device 100 may edit an audio track of an audio object other than the primary object, so that volume of the audio object other than the primary object is 0 (that is, remains muted).

Text content displayed on the play mode control 1134 is "Natural mode" shown in FIG. 12A, and may indicate that the audio play mode is currently the natural mode. It may be learned from FIG. 12A that display styles of the volume control 1131A associated with the audio object d and the volume control 1132A associated with the audio object e are both the display style of the unmute state. In other words, an audio that may be captured and retained by the electronic device 100 includes audio signals of the audio object d and the audio object e. The call peer end of the electronic device 100 may listen to sounds of the audio object d and the audio object e.

In response to an operation on the play mode control 1134 shown in FIG. 12A, the electronic device 100 may display a natural mode option 1134A and a human voice mode option 1134B shown in FIG. 12B. The natural mode option 1134A may be used to select the natural mode. The human voice mode option 1134B may be used to select the human voice mode.

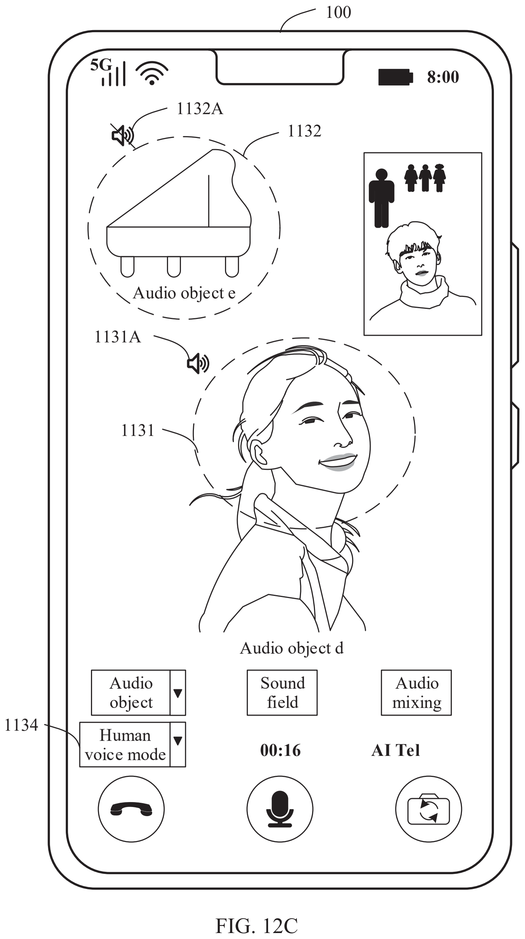

As shown in FIG. 12B, in response to an operation on the human voice mode option 1134B, the electronic device 100 may change text content displayed on the play mode control 1134 to "Human voice mode" shown in FIG. 12C. This may indicate that the audio play mode is currently the human voice mode.

As shown in FIG. 12C, when the natural mode is switched to the human voice mode, the electronic device 100 may recognize the primary object in the video image captured by the electronic device 100. For example, the primary object is the audio object d shown in FIG. 12C. The electronic device 100 may edit an audio track of an audio object other than the audio object d, for example, the audio object e, so that the audio object e remains muted. It may be learned that because the electronic device 100 edits the audio object e to mute the audio object e, the display style of the volume control 1132A associated with the audio object e may change from the display style of the unmute state shown in FIG. 12A to the display style of the mute state shown in FIG. 12C. In other words, the electronic device 100 may suppress the audio signal of the audio object e. The call peer end of the electronic device 100 may listen to only the sound of the primary object (namely, the audio object d), and cannot listen to the sound of the audio object other than the primary object of the electronic device 100.

In some embodiments, when switching to the human voice mode, the electronic device 100 may provide an option corresponding to one or more audio objects, so that the user selects one audio object as the primary object. In this way, the user can retain a sound of the one audio object based on a requirement, and mute other audio objects.

It may be understood that, in addition to muting the audio object other than the primary object by selecting the audio play mode, the user may manually edit one or more audio objects, to mute the one or more audio objects.

In some embodiments, in addition to the audio captured by the electronic device 100, the human voice mode may be used in the audio of the call peer end of the electronic device 100. The electronic device 100 may receive the video image and the audio file from the call peer end. After the audio file is rendered, the audio of the call peer end may be played. When detecting an operation of using the human voice mode in the audio of the call peer end, the electronic device 100 may recognize the primary object based on the video image of the call peer end, and edit the audio file of the call peer end based on the primary object. The electronic device 100 may retain an audio signal of the primary object in the audio file of the call peer end, and mute the audio object other than the primary object of the call peer end. Alternatively, when detecting an operation of using the human voice mode in the audio of the call peer end, the electronic device 100 may send an audio editing instruction. The audio editing instruction may be used to instruct to mute the audio object other than the primary object of the call peer end of the electronic device 100. A device that specifically edits the audio file of the call peer end may be a device of the call peer end or may be the server. The electronic device 100 may receive the audio data of the call peer end. The audio data may be audio data in which the audio object other than the primary object of the call peer end is muted. In this way, the user of the electronic device 100 can listen to only the sound of the primary object of the call peer end, and cannot listen to the sound of the audio object other than the primary object of the call peer end.

It may be learned from the foregoing embodiments that, in the video call scenario, the user of the electronic device 100 may implement one-tap suppression of the sound of the audio object other than the primary object of the local end. In this way, the user of the call peer end of the electronic device 100 can conveniently listen to only the sound of the primary object of the electronic device 100, without being interfered by another audio object of the electronic device 100. In addition, the user of the electronic device 100 may further implement one-tap suppression of the audio object of the audio object other than the primary object of the call peer end. In this way, it can be convenient for the user of the electronic device 100 to listen to only the sound of the primary object of the call peer end, without being interfered with by another audio object of the call peer end. According to the foregoing embodiments, video call experience of the user can be improved.

The embodiments shown in FIG. 12A to FIG. 12C may also be used in the foregoing video recording scenario. In this way, the user can implement one-tap suppression of the sound of the audio object other than the primary object in a shot video, so that an audio in a shot audio is clearer.

In some embodiments, the electronic device 100 may be in a video call with a plurality of call peer ends. The electronic device 100 may perform audio editing on an audio of one or more call peer ends. When the electronic device 100 performs audio editing on an audio of one call peer end, an audio that is of the call peer end and that is listened to by another call end may be an audio edited by the electronic device 100.

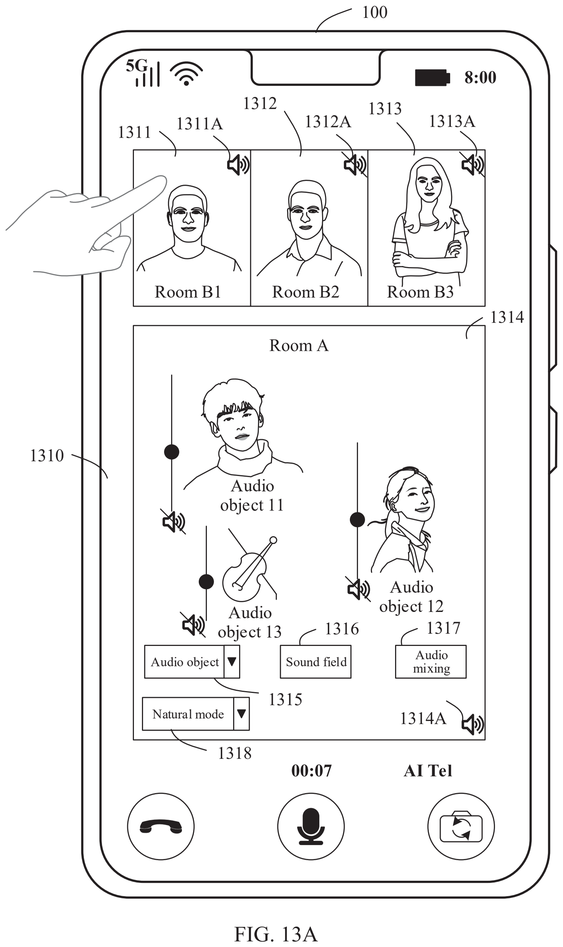

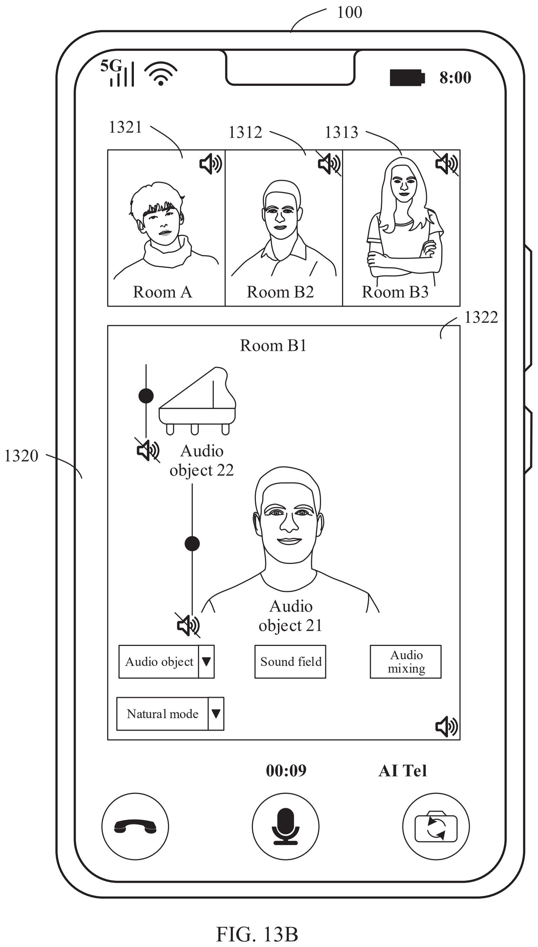

**FIG. 13A** **and** **FIG. 13B** **illustrate diagrams of some other audio editing scenarios.**

As shown in FIG. 13A, the electronic device 100 may display a user interface 1310. The user interface 1310 may be an interface in which the electronic device 100 is in a video call with a plurality of call peer ends. Herein, an example in which the electronic device 100 is in a video call with three call peer ends is used for description. A call end at which the electronic device 100 is located may be referred to as a room A. The three call peer ends of the electronic device 100 may be respectively referred to as a room B1, a room B2, and a room B3. A name of each call end is not limited in embodiments of this application.

The user interface 1310 may include a display area 1311, a display area 1312, a display area 1313, and a display area 1314.

The display area 1311 may be used to display a video image sent by a call end corresponding to the room B1. The display area 1311 may include a mute control 1311A. The mute control 1311A may be used to mute or unmute the entire room B1. That the entire room B1 is muted may mean that all call ends in the video call cannot hear any sound in the room B1.

The display area 1312 may be used to display a video image sent by a call end corresponding to the room B2. The display area 1312 may include a mute control 1312A. The mute control 1312A may be used to mute or unmute the entire room B2.

The display area 1313 may be used to display a video image sent by a call end corresponding to the room B3. The display area 1313 may include a mute control 1313A. The mute control 1313A may be used to mute or unmute the entire room B3.

The display area 1314 may be used to display a video image of the room A, namely, the video image captured by the electronic device 100. The display area 1314 may include a mute control 1314A. The mute control 1314A may be used to mute or unmute the entire room A.

For example, the video image captured by the electronic device 100 may include an audio object 11, an audio object 12, and an audio object 13. The electronic device 100 may display, in the display area 1314, one or more of the following controls used for audio editing: a volume bar and a mute control that are associated with each audio object, an audio object control 1315, a sound field control 1316, an audio mixing control 1317, and a play mode control 1318. For a function of the control used for audio editing, refer to the descriptions in the foregoing embodiments. The user of the electronic device 100 may perform audio editing such as audio object editing, sound field editing, and audio mixing editing on an audio of the room A by using the control in the display area 1314.

After the audio of the room A is edited, the three call peer ends of the electronic device 100, namely, users of the room B1, the room B2, and the room B3, may listen to an edited audio of the room A.

In response to an operation, for example, a tap operation, on the display area 1311 shown in FIG. 13A, the electronic device 100 may display a user interface 1320 shown in FIG. 13B. It may be learned by comparing FIG. 13A and FIG. 13B that the electronic device 100 may exchange display areas of the video image of the room A and the video image of the room B1.

As shown in FIG. 13B, the user interface 1320 may include a display area 1321, a display area 1312, a display area 1313, and a display area 1322.

The display area 1321 may be in a position of the display area 1311 shown in FIG. 13A. The display area 1321 may be used to display the video image of the room A.

The display area 1322 may be displayed in a position of the display area 1314 shown in FIG. 13A. The display area 1322 may be used to display the video image sent by the call end corresponding to the room B1. For example, the video image sent by the call end corresponding to the room B1 may include an audio object 21 and an audio object 22. The electronic device 100 may display, in the display area 1322, controls used for audio editing, for example, a volume bar and a mute control that are associated with each audio object. For the controls used for audio editing in the display area 1322, refer to the controls used for audio editing in the display area 1314 shown in FIG. 13A. The electronic device 100 may perform audio editing such as audio object editing, sound field editing, and audio mixing editing on an audio of the room B1 by using the controls used for audio editing in the display area 1322.

After the user of the electronic device 100 edits the audio of the room B1, the electronic device 100 and the other two call peer ends of the electronic device 100, namely, the users of the room A, the room B2, and the room B3, may all listen to an edited sound of the room B1.

For example, during a video call, the call end corresponding to the room B1 may determine a spatial position of each audio object in the room B1 relative to a preset position. The preset position may be a position of a device used for an audio and video call in the room B1. Herein, an example in which the preset position is a position 0 in the room B1 is used for description. The position 0 is not limited in embodiments of this application. For example, the call end corresponding to the room B1 may determine that the audio object 21 shown in FIG. 13B is in a position 1 relative to the position 0, and the audio object 22 is in a position 2 relative to the position 0. An audio file generated by the call end corresponding to the room B1 may include spatial positions of the audio object 21 and the audio object 22. When the electronic device 100 plays the audio of the call end corresponding to the room B1, the user of the electronic device 100 (namely, the user of the room A) may listen to sounds of the audio object 21 and the audio object 22 in the room B1, and experience spatial perception and orientation perception of the sound in auditory sensation. For example, the user of the room A may perceptually feel as if he or she was at the position 0 in the room B2, and feel orientation perception that the sound of the audio object 21 is made from the position 1 and the sound of the audio object 22 is made from the position 2. Similarly, when listening to the audio of the room B1, a user of another call end (for example, a call end corresponding to the room B2 or a call end corresponding to the room B3) may have the same listening experience as the user of the electronic device 100.

The user of the electronic device 100 may adjust a spatial position of an audio object of the room B1, for example, change a spatial position of the audio object 22 from the position 2 to the position 3. In this case, when the electronic device 100 plays the audio of the call end corresponding to the room B1, the user of the room A may perceptually feel as if he or she was at the position 0 in the room B2, and feel orientation perception that the sound of the audio object 21 is made from the position 1 and the sound of the audio object 22 is made from the position 3. Similarly, when listening to the audio of the room B1, a user of another call end (for example, a call end corresponding to the room B2 or a call end corresponding to the room B3) may also feel orientation perception that the audio object 22 moves from the position 2 to the position 3 to make a sound.

It may be learned from the foregoing audio editing scenario that, the user may edit an audio of a local end during a video call, so that a call peer end listens to an audio edited by the user. In addition, the user may edit an audio of the call peer end during the video call, so that the user and another call peer end can listen to an audio that is of the call peer end and that is edited by the user. In this way, the user can serve as a moderator to perform audio control on a plurality of call peer ends that access the video call, so that the video call can be better performed. In the foregoing embodiments, the user may conveniently and intuitively edit the call audio during the video call, to improve video call experience of the user.

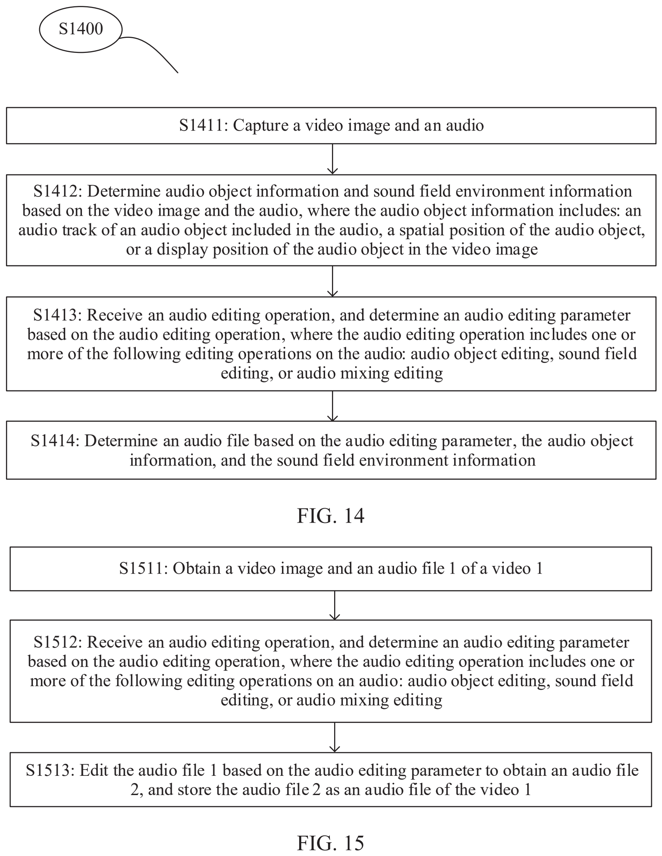

**FIG. 14** **illustrates a flowchart of an audio processing method according to an embodiment of this application.**

As shown in FIG. 14, the audio processing method may include steps S1411 to S1414. Steps S1411 to S1414 may be collectively referred to as step S1400. An execution device of steps S1411 to S1414 may be, for example, the electronic device 100.

S1411: Capture a video image and an audio.

For a process in which the electronic device 100 captures the video image and the audio, refer to the descriptions of the capturing unit 310 shown in FIG. 3.

S1412: Determine audio object information and sound field environment information based on the video image and the audio, where the audio object information includes: an audio track of an audio object included in the audio, a spatial position of the audio object, or a display position of the audio object in the video image.

The sound field environment information may include but is not limited to one or more of reverberation time, a room type, a room size, and/or a room reflection material.

For a process of determining the audio object information and the sound field environment information, refer to the descriptions of the information extraction unit 320 in FIG. 3.

S1413: Receive an audio editing operation, and determine an audio editing parameter based on the audio editing operation, where the audio editing operation includes one or more of the following editing operations on the audio: audio object editing, sound field editing, or audio mixing editing.

For details about the audio editing operation, refer to the audio editing operation described in the video recording scenario and the video call scenario. Details are not described herein.

S1414: Determine an audio file based on the audio editing parameter, the audio object information, and the sound field environment information.

The audio file may include audio signals of a sound field and each audio object, and metadata. The metadata may include data used to ensure that the audio signal can be correctly rendered, for example, the spatial position of the audio object and the sound field environment information.

In some embodiments, the electronic device 100 may generate audio files in a plurality of formats, for example, an audio file in a stereo format, an audio file in a surround sound format, or an audio file in a three-dimensional sound format. Rendering and playing are performed based on audio files in different formats, so that a user can experience different sound effects.

In some embodiments, the electronic device 100 may send the audio file to another device. The electronic device 100 may encode the audio file and then send an encoded audio file to the another device. The encoding may include but is not limited to channel encoding, audio object encoding, HOA encoding, or metadata encoding. The encoding may reduce information redundancy in the audio file, to improve transmission efficiency of the audio file.

**FIG. 15** **illustrates a flowchart of another audio processing method according to an embodiment of this application.**

As shown in FIG. 15, the audio processing method may include steps S1511 to S1513. An execution device of steps S1511 to S1513 and steps S1411 to S1414 may be, for example, the electronic device 100.

S1511: Obtain a video image and an audio file 1 of a video 1.

The electronic device 100 may store the video 1. Alternatively, the electronic device 100 may receive the video 1 sent by another device. The video 1 may include the video image and the audio file 1.

The audio file 1 may include audio signals of a sound field and each audio object, and metadata.

S1512: Receive an audio editing operation, and determine an audio editing parameter based on the audio editing operation, where the audio editing operation includes one or more of the following editing operations on an audio: audio object editing, sound field editing, or audio mixing editing.

S1513: Edit the audio file 1 based on the audio editing parameter to obtain an audio file 2, and store the audio file 2 as an audio file of the video 1.

Editing the audio file 1 based on the audio editing parameter may specifically include editing the audio signals (namely, audio tracks) of the sound field and each audio object based on the audio editing parameter, and editing the metadata.

The electronic device 100 may replace the audio file 1 in the video 1 with the audio file 2. In this way, when playing the video 1, the electronic device 100 may display the video image in the video 1, and play an audio based on the audio file 2.

It may be learned from the method shown in FIG. 15 that the user may edit an existing video in the electronic device 100, to change a playing effect of an audio in the video.

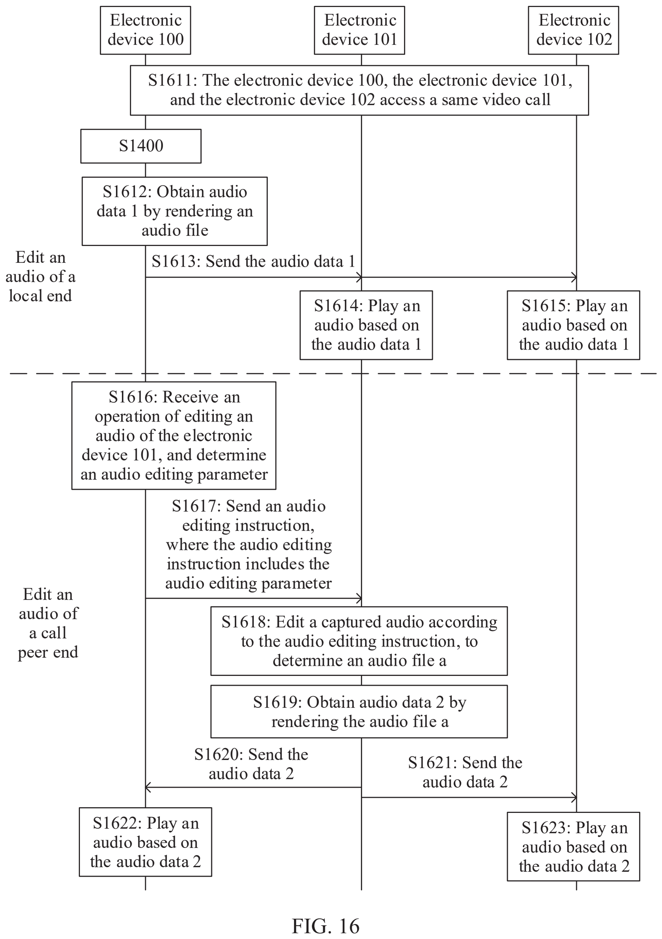

**FIG. 16** **illustrates a flowchart of another audio processing method according to an embodiment of this application.**

As shown in FIG. 16, the audio processing method may include steps S1611 to S1623. The audio processing method may be applied to a video call scenario.
1. (S1611 to S1615) Edit an audio of a local end.

S1611: The electronic device 100, the electronic device 101, and the electronic device 102 access a same video call.

The electronic device 100 performs step S1400 shown in FIG. 14, to obtain an audio file.

S1612: The electronic device 100 obtains audio data 1 by rendering the audio file.

S1613: The electronic device 100 sends the audio data 1 to the electronic device 101 and the electronic device 102.

S1614: The electronic device 101 plays an audio based on the audio data 1.

S1615: The electronic device 102 plays an audio based on the audio data 1.

It may be understood that, in addition to playing the audio based on the audio data 1, the electronic device 101 and the electronic device 102 may display a video image from the electronic device 100.

In some embodiments, the electronic device 100 may send the audio file to the electronic device 101 and the electronic device 102. Then, the electronic device 101 and the electronic device 102 render the audio file to obtain the audio data 1, and play the audio based on the audio data 1.

In some other embodiments, the electronic device 100 may send the audio file to a server (for example, the server 400 shown in FIG. 4C). The server may summarize audio files of all call ends. The server may render the audio file of the electronic device 100 to obtain the audio data 1. Then, the server may send the audio data 1 to the electronic device 101 and the electronic device 102, so that the electronic device 101 and the electronic device 102 play the audio.

2. (S1616 to S1623) Edit an audio of a call peer end.

S1616: The electronic device 100 receives an operation of editing an audio of the electronic device 101, and determines an audio editing parameter.

S1617: The electronic device 100 sends an audio editing instruction to the electronic device 101, where the audio editing instruction includes the audio editing parameter.

S1618: The electronic device 101 edits a captured audio according to the audio editing instruction, to determine an audio file a.

For a method for determining the audio file a by the electronic device 101, refer to the method flowchart shown in FIG. 14.

S1619: The electronic device 101 obtains audio data 2 by rendering the audio file a.

S1620: The electronic device 101 sends the audio data 2 to the electronic device 100.

S1621: The electronic device 101 sends the audio data 2 to the electronic device 102.

S1622: The electronic device 100 plays an audio based on the audio data 2.

S1623: The electronic device 102 plays an audio based on the audio data 2.

It may be understood that, in addition to playing the audio based on the audio data 2, the electronic device 100 and the electronic device 102 may display a video image from the electronic device 101.

In some embodiments, the electronic device 100 may send the audio editing instruction to the server. The server may further receive an audio file b of the electronic device 101. The audio file b may be an audio file that has not been edited according to the audio editing instruction of the electronic device 100. The server may edit the audio file b according to the audio editing instruction of the electronic device 100, to obtain the audio file a. For a method for determining, by the server, the audio file a based on the audio file b, refer to the method flowchart shown in FIG. 15. Then, the server may send the audio file a to the electronic device 100 and the electronic device 102. Alternatively, the server may obtain the audio data 2 by rendering the audio file a, and send the audio data 2 to the electronic device 100 and the electronic device 102, so that the electronic device 100 and the electronic device 102 play the audio.

It may be learned from the method shown in FIG. 16 that, a user may edit an audio of a local end during a video call, so that a call peer end listens to an audio edited by the user. In addition, the user may edit an audio of the call peer end during the video call, so that the user and another call peer end can listen to an audio that is of the call peer end and that is edited by the user. In this way, the user can serve as a moderator to perform audio control on a plurality of call peer ends that access the video call, so that the video call can be better performed. In the foregoing embodiments, the user may conveniently and intuitively edit the call audio during the video call, to improve video call experience of the user.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An audio processing method, wherein the method comprises:
displaying, by a first electronic device, a first video image in a first video, wherein the first video image comprises a first audio object, and the first video comprises a first audio;
displaying, by the first electronic device, a first audio object control on a screen, wherein the first audio object control is used to adjust a sound feature of the first audio object, and adjusting the sound feature of the first audio object comprises one or more of the following: adjusting volume of the first audio object, adjusting a timbre of the first audio object, and/or adjusting a spatial position of the first audio object; and
in response to a first operation on the first audio object control, adjusting, by the first electronic device, the sound feature of the first audio object in the first audio.

2. The method according to claim 1, wherein the first video image further comprises a second audio object, and the method further comprises:
displaying, by the first electronic device, a second audio object control on the screen, wherein the second audio object control is used to adjust a sound feature of the second audio object, and adjusting the sound feature of the second audio object comprises one or more of the following: adjusting volume of the second audio object, adjusting a timbre of the second audio object, and/or adjusting a spatial position of the second audio object; and
in response to a second operation on the second audio object control, adjusting, by the first electronic device, the sound feature of the second audio object in the second audio.

3. The method according to claim 1 or 2, wherein the method further comprises:
displaying, by the first electronic device, a first sound field control on the screen, wherein the first sound field control is used to adjust a first sound field in the first audio, and adjusting the first sound field comprises one or more of the following: adjusting a type of a room in which the first sound field is located, adjusting a size of the room in which the first sound field is located, and/or adjusting a reflection material of the room in which the first sound field is located; and
adjusting, by the first electronic device, the first sound field in response to a third operation on the first sound field control.

4. The method according to any one of claims 1 to 3, wherein the method further comprises:
displaying, by the first electronic device, a first audio mixing control on the screen, wherein the first audio mixing control is used to adjust an audio mixing parameter of the first audio, and the audio mixing parameter comprises one or more of the following: an audio mixing template, reverberation time, an equalizer parameter, a size of a room in which a sound field is located, and/or a reflection material of the room in which the sound field is located; and
determining, by the first electronic device, a first audio mixing parameter based on a fourth operation on the first audio mixing control, and performing audio mixing on an audio signal of the first sound field and an audio signal of one or more audio objects in the first audio based on the first audio mixing parameter.

5. The method according to any one of claims 2 to 4, wherein the method further comprises:
receiving, by the first electronic device, a fifth operation on the first audio object and the second audio object, wherein the fifth operation is used to combine the first audio object and the second audio object; and
displaying, by the first electronic device, a third audio object control on the screen in response to the fifth operation, wherein the third audio object control is used to adjust sound features of the first audio object and the second audio object.

6. The method according to any one of claims 1 to 5, wherein the first audio further comprises an audio signal corresponding to a third audio object, the third audio object is not in the first video image, and the method further comprises:
displaying, by the first electronic device, a fourth audio object control on the screen, wherein the fourth audio object control is used to adjust a sound feature of the third audio object.

7. The method according to claim 6, wherein a display position of the fourth audio object control on the screen is related to a spatial position of the third audio object.

8. The method according to any one of claims 2 to 7, wherein the sound feature of the first audio object is a first sound feature, a sound feature of the second sound is a second sound feature, and the method further comprises:
receiving, by the first electronic device, a sixth operation on the first audio object and the second audio object, wherein the sixth operation is used to exchange the sound features of the first audio object and the second audio object;
in response to the sixth operation, determining, by the first electronic device, the sound feature of the first audio object in the first audio as the second sound feature, and determining the sound feature of the second audio object in the first audio as the first sound feature;
adjusting, by the first electronic device, the second sound feature when receiving an operation on the first audio object control; and
adjusting, by the first electronic device, the first sound feature when receiving an operation on the second audio object control.

9. The method according to any one of claims 1 to 8, wherein the method further comprises:
receiving, by the first electronic device, a seventh operation;
recognizing, by the first electronic device, a primary object in the first video image in response to the seventh operation; and
when recognizing that the primary object in the first video image is the first audio object, removing, by the first electronic device, an audio signal of an audio object other than the first audio object from the first audio.

10. The method according to any one of claims 1 to 9, wherein a display position of the first audio object control on the screen is related to a display position of the first audio object in a video image in the first video.

11. The method according to any one of claims 1 to 10, wherein before displaying, by the first electronic device, the first video image in the first video, the method further comprises:
receiving, by the first electronic device, an operation of starting a camera application and/or starting video recording, capturing an image through an image capturing apparatus, and capturing an audio through an audio capturing apparatus, wherein the image captured by the image capturing apparatus comprises the video image in the first video, and the audio captured by the audio capturing apparatus comprises the first audio; and
displaying, by the first electronic device in real time, the image captured by the image capturing apparatus, wherein the first video image is an image displayed in real time during image shooting.

12. The method according to any one of claims 1 to 10, wherein before displaying, by the first electronic device, the first video image in the first video, the method further comprises:
obtaining, by the first electronic device, the first video from a memory of the first electronic device; and
receiving, by the first electronic device, an operation of playing the first video, wherein the first video image is an image displayed during video playing.

13. The method according to claim 11 or 12, wherein a communication connection is established between the first electronic device and a listening device, and the method further comprises:
sending, by the first electronic device, the second audio to the listening device for playing, wherein the second audio is an audio obtained through one or more of the following adjustments on the first audio: adjusting a sound feature of the one or more audio objects in the first audio, adjusting the first sound field in the first audio, and/or adjusting the audio mixing parameter of the first audio.

14. The method according to claim 11 or 12, wherein a communication connection is established between the first electronic device and a listening device, and after adjusting, by the first electronic device, the sound feature of the first audio object in the first audio, the method further comprises:
sending, by the first electronic device to the listening device for playing, an audio signal of the first audio object whose sound feature is adjusted.

15. The method according to any one of claims 1 to 10, wherein the first electronic device and a second electronic device access a first video call, and the method further comprises:
sending, by the first electronic device, the video image in the first video and the second audio to the second electronic device, wherein the second audio is an audio obtained through one or more of the following adjustments on the first audio: adjusting a sound feature of the one or more audio objects in the first audio, adjusting the first sound field in the first audio, and/or adjusting the audio mixing parameter of the first audio, wherein
the first video image is an image shot by the first electronic device during the first video call.

16. The method according to claim 15, wherein the method further comprises:
receiving, by the first electronic device, a second video from the second electronic device;
displaying, by the first electronic device, a second video image in the second video, wherein the second video image comprises a fourth audio object; and
displaying, by the first electronic device, a fifth audio object control on the screen, wherein the fifth audio object control is used to adjust a sound feature of the fourth audio object, and adjusting the sound feature of the fourth audio object comprises one or more of the following: adjusting volume of the fourth audio object, adjusting a timbre of the fourth audio object, and/or adjusting a spatial position of the fourth audio object.

17. The method according to claim 16, wherein the method further comprises:
determining, by the first electronic device, a first editing parameter based on an operation on the fifth audio object control;
sending, by the first electronic device, a first editing instruction to the second electronic device, wherein the first editing instruction comprises the first editing parameter; and
receiving, by the first electronic device, a third video from the second electronic device, wherein the third video comprises a third audio, and the sound feature of the fourth audio object in the third audio is adjusted based on the first editing parameter.

18. The method according to claim 17, wherein a third electronic device also accesses the first video call, and the third video is also sent to the third electronic device for playing.

19. The method according to any one of claims 15 to 18, wherein the method further comprises:
displaying, by the first electronic device, a second sound field control on the screen, wherein the second sound field control is used to adjust a second sound field in an audio comprised in a video sent by the second electronic device, and adjusting the second sound field comprises one or more of the following: adjusting a type of a room in which the second sound field is located, adjusting a size of the room in which the second sound field is located, and/or adjusting a reflection material of the room in which the second sound field is located.

20. The method according to any one of claims 15 to 19, wherein the method further comprises:
displaying, by the first electronic device, a second audio mixing control on the screen, wherein the second audio mixing control is used to adjust an audio mixing parameter of the audio comprised in the video sent by the second electronic device, and the audio mixing parameter comprises one or more of the following: an audio mixing template, reverberation time, an equalizer parameter, a size of a room in which a sound field is located, and/or a reflection material of the room in which the sound field is located.

21. The method according to any one of claims 1 to 10, wherein the first electronic device and a second electronic device access a first video call, and before displaying, by the first electronic device, the first video image in the first video, the method further comprises:
receiving, by the first electronic device, the first video from the second electronic device.

22. An electronic device, wherein the electronic device comprises a camera, a microphone array, a memory, and a processor; the camera is configured to shoot an image; the microphone array is configured to capture an audio; the memory is configured to store a computer program; and the processor is configured to invoke the computer program, so that the electronic device performs the method according to any one of claims 1 to 21.

23. A computer-readable storage medium, comprising instructions, wherein when the instructions are run on an electronic device, the electronic device is enabled to perform the method according to any one of claims 1 to 21.

24. A computer program product, wherein the computer program product comprises computer instructions, and when the computer instructions are run on an electronic device, the electronic device is enabled to perform the method according to any one of claims 1 to 21.
